# EUROPEAN PATENT SPECIFICATION

(11) **EP 2 799 784 B1**
(45) Date of publication and mention of the grant of the patent: **01.03.2017**
(21) Application number: 14164829.5
(22) Date of filing: 16.04.2014
(51) Int. Cl.: F24D 3/18, F24D 19/10, G05D 23/19, F24D 3/08

(54) **Heat pump system control device, heat pump system, and heat pump system control method**
Wärmepumpensystemsteuerung, Wärmepumpensystem und Verfahren zur Steuerung eines Wärmepumpensystems
Dispositif de commande de système de chauffage à pompes à chaleur, système de chauffage à pompes à chaleur et méthode de commande d'un système de chauffage à pompes à chaleur

(30) Priority: 25.04.2013 JP 2013092959
(43) Date of publication of application: 05.11.2014
(73) Proprietor: Panasonic Intellectual Property Management Co., Ltd., Osaka-shi, Osaka 540-6207 (JP)
(72) Inventor: Hayashida, Gaku, Chuo-ku, Osaka 540-6207 (JP)
(74) Representative: Grünecker Patent- und Rechtsanwälte PartG mbB

(56) References cited:
- WO-A1-2013/027312
- WO-A1-2013/046269
- JP-A- S63 189 739
- JP-A- 2006 125 722

## Description

### Technical Field

The present invention relates to a heat pump system control device that controls a heat pump system for selectively supplying heat from a heat pump device to a hot water supply device or a room heating device and a method therefor.

### Background Art

Patent Documents 1 to 4 disclose techniques relevant to a control device for controlling a heat pump system.

### Citation List

### Patent Document

Patent Document 1: WO 2013/027312 A1
Patent Document 2: WO 2013/046269 A1
Patent Document 3: JP 2006 125722 A
Patent Document 4: JP S63 189739 A

### SUMMARY

According to such a conventional technique, however, a heat pump system for selectively supplying heat from a heat pump device to a hot water supply device or a room heating device may fail to supply sufficient heat to both the hot water supply device and the room heating device.
This problem is overcome bv the features of the independent claims.

In view of the above problem, the present disclosure provides a heat pump system control device capable of controlling a heat pump system so that sufficient heat is supplied to both a hot water supply device and a room heating device.

According to an aspect of the present invention, a heat pump system control device controls a heat pump system that selectively supplies heat from a heat pump device to a hot water supply device or a room heating device. The heat pump system control device includes: a determiner for determining start time of a suppressing period for suppressing electric power consumption of the heat pump device; and a controller. In a preparatory period prior to the suppressing period, the controller causes the heat pump system to start supply of heat from the heat pump device to the hot water supply device at a temperature of hot water at which supply of heat from the heat pump device to the hot water supply device is not started in a normal operation mode for a normal period prior to the preparatory period. In the preparatory period, the controller also controls the heat pump system in such a manner that, when heat is supplied from the heat pump device to the room heating device, a quantity of the heat per unit time is larger than a quantity of heat per unit time in the normal operation mode.

The heat pump system control device in the present disclosure is capable of controlling the heat pump system so that sufficient heat is supplied to both the hot water supply device and the room heating device.

### BRIEF DESCRIPTION OF DRAWINGS

FIG. 1 is a diagram showing configurations of a heat pump system and a heat pump system control device according to a first embodiment;
FIG. 2 is a flowchart illustrating operation of the heat pump system control device according to the first embodiment;
FIG. 3 is a flowchart illustrating the outlined steps of a heat pump hot water supply/room heating system according to a second embodiment;
FIG. 4 is a diagram showing a configuration of the heat pump hot water supply/room heating system according to the second embodiment;
FIG. 5 is a diagram showing a detailed configuration of a heat pump hot water supply/room heating device according to the second embodiment;
FIG. 6 is a diagram showing a detailed configuration of a heat pump according to the second embodiment;
FIG. 7 is a graph exemplifying a room heating set value according to the second embodiment;
FIG. 8 is a graph exemplifying temperature variation when a DR controller according to the second embodiment issues no command;
FIG. 9 is a flowchart illustrating control of the heat pump hot water supply/room heating system according to the second embodiment;
FIG. 10A is a flowchart illustrating DR preliminary control according to the second embodiment;
FIG. 10B is a flowchart illustrating the DR preliminary control (continuous from FIG. 10A) according to the second embodiment;
FIG. 11A is a graph exemplifying temperature variation when a temperature of hot water stored in a hot water supply tank is not less than a threshold for switching to a hot water supply mode in a DR preliminary period;
FIG. 11B is a graph exemplifying temperature variation when the temperature of hot water stored in the hot water supply tank becomes lower than the threshold for switching to the hot water supply mode at or after the middle of the DR preliminary period, so that the hot water supply tank is heated;
FIG. 11C is a graph exemplifying temperature variation when the hot water supply tank is heated only by an element heater in the DR preliminary period;
FIG. 12 is a graph exemplifying temperature variation in accordance with the DR preliminary control;
FIG. 13 is a chart indicating relationship between a period in a hot water supply mode and a period in a room heating mode for recovery of a room temperature in a heat pump hot water supply/room heating system according to a third embodiment;
FIG. 14 is a flowchart illustrating DR preliminary control according to the third embodiment;
FIG. 15 is a flowchart illustrating DR preliminary control for an insufficient heat storage period in the third embodiment;
FIG. 16 is a graph exemplifying temperature variation according to the third embodiment;
FIG. 17 is a diagram showing configurations of a heat pump system and a heat pump system control device according to a modification example of the first embodiment;
FIG. 18 is a diagram showing configurations of a heat pump system and a heat pump system control device according to a fourth embodiment;
FIG. 19 is a chart indicating relationship information indicating relationship between temperature increase of hot water stored in the hot water supply tank and a period for heating with the element heater;
FIG. 20A is a flowchart illustrating DR preliminary control according to the fourth embodiment;
FIG. 20B is a flowchart illustrating the DR preliminary control (continuous from FIG. 20A) according to the fourth embodiment; and
FIG. 21 is a graph exemplifying temperature variation according to the fourth embodiment.

### DESCRIPTION OF EMBODIMENTS

### Finding as basis of the present invention

The present inventor has found that there are problems in the control device for controlling a heat pump system, which is mentioned in the section of the "background art". The problems are described in detail below.

A heat pump hot water supply device absorbs atmospheric heat using a refrigerant, compresses the refrigerant with electricity, and transfers heat thus generated to water using a heat exchanger so as to provide hot water. The heat pump hot water supply device operates with less energy in comparison to a conventional electric water heater of an element heater type. A heat pump hot water supply/room heating device utilizes heat generated with a heat pump for both hot water supply and room heating, and also operates with less energy.

A typical heat pump hot water supply/room heating device temporarily stores hot water in a hot water tank and utilizes the stored hot water for hot water supply and room heating. Another heat pump hot water supply/room heating device switches, using a three way valve, between a system for circulating hot water heated with a heat pump directly to a room heating circuit and a system for heating a hot water supply tank using hot water heated with the heat pump. The heat pump hot water supply/room heating device of the latter is described herein. Hereinafter, a hot water supply/room heating system as a heat pump system corresponds to this type.

In recent years, electric power has been increasing its share in the energy sources for demanded heat due to spreading heat pumps, and the peak of demanded electric power has kept rising. In such a situation, each user has been able to select a contract agreement for reducing an electric power fee to some extent by suppressing an electric power load during peak hours designated by an electric power supplier in addition to a conventional contract agreement for charging a higher electric power fee during peak hours.

For example, Patent Document 1 discloses a control method of reducing output of a heat pump while considering comfort in order to suppress electric power consumption during peak hours in accordance with this contract agreement. More specifically, this control method keeps a room temperature constant by sufficient room heating prior to peak hours. This control method thus suppresses electric power consumption during peak hours while considering comfort.

The hot water supply/room heating system consumes electric power for hot water supply as well as for room heating. It is accordingly preferred not to cause shortage of hot water in a hot water supply tank due to supply of hot water. It is also preferred not to cause reheating due to temperature decrease of hot water stored in the hot water supply tank during peak hours. Sufficient heat is thus preferably stored in the hot water supply tank prior to peak hours. In this case, electric power consumption is reduced in the hot water supply/room heating system.

However, this hot water supply/room heating system switches, using a valve, between supply destinations of heat generated with the heat pump, in order for hot water supply and room heating. The hot water supply/room heating system is thus incapable of simultaneously supplying heat to both of the supply destinations. If room heating is performed using the heat pump prior to peak hours as in Patent Document 1, sufficient heat may not be supplied to the hot water supply tank and reheating or shortage of hot water may occur during peak hours. In contrast, if the hot water supply tank is heated with use of the heat pump prior to peak hours, room heating is not performed sufficiently and the room temperature is not kept properly.

It is possible to simultaneously supply heat to both the room heating device and the hot water supply device with use of an auxiliary heater or the like. Energy conversion efficiency of such an auxiliary heater is less than that of the heat pump. Use of the auxiliary heater is thus uneconomical.

In view of the above, a heat pump system control device according to an aspect of the present invention controls a heat pump system that selectively supplies heat from a heat pump device to a hot water supply device or a room heating device depending on a situation. The heat pump system control device includes: a determiner for determining a preparatory period for suppressing electric power consumption of the heat pump device; and a controller for controlling the heat pump system in the preparatory period in a preparatory operation mode as (i) an operation mode different from a normal operation mode for a normal period prior to the preparatory period, (ii) an operation mode for causing timing of supplying heat from the heat pump device to the hot water supply device in a state where no heat is supplied from the heat pump device to the hot water supply device in the normal operation mode, and (iii) an operation mode in which, when heat is supplied from the heat pump device to the room heating device, a quantity of the heat per unit time is larger than a quantity of heat per unit time in the normal operation mode.

In this configuration, the heat pump system operates in the preparatory period in the preparatory operation mode that causes the timing of supplying heat to the hot water supply device in the state where no heat is supplied to the hot water supply device in the normal operation mode. Accordingly, more heat is supplied to the hot water supply device. The quantity of heat per unit time to be supplied to the room heating device is larger in the preparatory period. The heat pump system control device is thus capable of controlling the heat pump system so that sufficient heat is supplied to both the hot water supply device and the room heating device.

According to an example, in the preparatory period, the controller adjusts a ratio of a period for supplying heat from the heat pump device to the hot water supply device to a period for supplying heat from the heat pump device to the room heating device in such a manner that the ration is larger than a ratio in the normal operation mode.

The ratio of the period for supplying heat to the hot water supply device is thus increased. The heat pump system control device is thus capable of increasing heat supplied to the hot water supply device.

According to another example, in the preparatory period, the controller causes the heat pump system to supply heat from the heat pump device to the hot water supply device and then to supply heat from the heat pump device to the room heating device.

In this configuration, the room heating device is supplied with heat after the hot water supply device is supplied with heat. It is assumed that heat retaining efficiency of hot water in the hot water supply device is relatively high. The heat pump system control device is thus capable of suppressing heat loss by initially supplying heat to the hot water supply device.

According to another example, in the preparatory period, the controller causes the heat pump system to supply heat from the heat pump device to the hot water supply device until the temperature of hot water in the hot water supply device reaches a predetermined hot water supply temperature and then to supply heat from the heat pump device to the room heating device.

In this configuration, heat is supplied to the hot water supply device in the preparatory period until the temperature of hot water in the hot water supply device reaches the predetermined temperature. Accordingly, sufficient heat is supplied to the hot water supply device.

According to another example, the controller determines, at or before start of the preparatory period, a first period for supplying heat from the heat pump device to the hot water supply device in the preparatory period and a second period for supplying heat from the heat pump device to the room heating device in the preparatory period, and causes the heat pump system to supply heat from the heat pump device to the hot water supply device in the determined first period, and then causes the heat pump system to supply heat from the heat pump device to the room heating device in the determined second period.

In this configuration, the period for supplying heat to the room heating device and the period for supplying heat to the hot water supply device are kept in the preparatory period. Accordingly, sufficient heat is supplied to both the hot water supply device and the room heating device.

According to another example, in the preparatory period, the controller causes the heat pump system to alternately supply heat from the heat pump device to the hot water supply device and the room heating device.

The heat pump system control device is thus capable of suppressing decrease in temperature occurring when no heat is supplied to the hot water supply device or the room heating device for a long period.

According to another example, at timing when a temperature of hot water in the hot water supply device reaches a predetermined temperature in the preparatory period, the controller causes the heat pump system to stop supply of heat to one of the hot water supply device and the room heating device and to start supply of heat to the other one so that heat is alternately supplied from the heat pump device to the hot water supply device and the room heating device.

The heat pump system control device is thus capable of supplying heat to one of the hot water supply device and the room heating device in accordance with the state of hot water in the hot water supply device.

According to another example, at predetermined time intervals in the preparatory period, the controller causes the heat pump system to stop supply of heat to one of the hot water supply device and the room heating device and to start supply of heat to the other one so that heat is alternately supplied from the heat pump device to the hot water supply device and the room heating device.

The heat pump system control device is thus capable of periodically switching the heat supply destination to one of the hot water supply device and the room heating device at the time intervals.

According to another example, the heat pump system control device further includes: a storage for storing relationship information indicating relationship between a first estimation period for supplying no heat from the heat pump device to the room heating device and a second estimation period for recovering a temperature decreased in the first estimation period with heat supplied from the heat pump device to the room heating device; wherein the controller determines a first period for supplying heat from the heat pump device to the hot water supply device and a second period for supplying heat from the heat pump device to the room heating device in accordance with the relationship information stored in the storage so that the temperature decreased while no heat is supplied from the heat pump device to the room heating device is recovered in the preparatory period, with heat supplied from the heat pump device to the room heating device, and causes the heat pump system to supply heat from the heat pump device to the hot water supply device in the determined first period and causes the heat pump system to supply heat from the heat pump device to the room heating device in the determined second period.

The heat pump system control device is thus capable of appropriately supplying heat to both the hot water supply device and the room heating device before suppression of electric power consumption is started.

According to another example, the controller extends the first period as the temperature of hot water in the hot water supply device is lower.

The heat pump system control device is thus capable of adjusting the period for supplying heat to the hot water supply device and the period for supplying heat to the room heating device in accordance with the temperature of hot water in the hot water supply device.

According to another example, when a condition for stopping operation of the heat pump device is satisfied while heat is supplied from the heat pump device to the room heating device in the preparatory period, the controller causes the heat pump system to stop supply of heat from the heat pump device to the room heating device and to start supply of heat from the heat pump device to the hot water supply device.

The heat pump system control device is thus capable of improving the operation rate of the heat pump device so as to efficiently operate the heat pump device.

According to another example, when heat is supplied from the heat pump device to the room heating device in the preparatory period, the controller adjusts a temperature of fluid supplied from the heat pump device to the room heating device in such a manner that the temperature is higher than a temperature in the normal operation mode so that a quantity of the heat per unit time is larger than a quantity of heat per unit time in the normal operation mode.

The heat pump system control device is thus capable of making the quantity of heat per unit time to be supplied to the room heating device larger than the quantity of heat per unit time in the normal operation mode. Accordingly, sufficient heat is supplied to the room heating device in a short period.

For example, when heat is supplied from the heat pump device to the room heating device in the preparatory period, the controller can increase the temperature of the fluid to predetermined upper limit temperature.

The heat pump system control device is thus capable of supplying sufficient heat to the room heating device.

For example, the controller can detect, in the preparatory period, recovery of the temperature decreased while no heat is supplied from the heat pump device to the room heating device, and can adjust, after the recovery, the quantity of heat per unit time supplied from the heat pump device to the room heating device in such a manner that the quantity is equal to a quantity of heat per unit time in the normal operation mode.

The heat pump system control device is thus capable of supplying appropriate heat to the room heating device after the recovery of the temperature.

For example, the controller can detect the recovery in accordance with stop of operation of the heat pump device or a temperature obtained by a temperature sensor.

The heat pump system control device is thus capable of appropriately detecting recovery of the temperature.

According to another example, the heat pump system control device further includes: a storage for storing relationship information indicating relationship between a first estimation period for supplying no heat from the heat pump device to the room heating device and a second estimation period for recovering a temperature decreased in the first estimation period with heat supplied from the heat pump device to the room heating device; wherein the controller determines a first period for supplying heat from the heat pump device to the hot water supply device, a second period for supplying heat from the heat pump device to the room heating device, and a temperature of the fluid for supplying heat from the heat pump device to the room heating device in accordance with the relationship information stored in the storage so that the temperature decreased while no heat is supplied from the heat pump device to the room heating device is recovered in the preparatory period, with heat supplied from the heat pump device to the room heating device, and the controller causes the heat pump system to supply heat from the heat pump device to the hot water supply device in the determined first period and causes the heat pump system to supply heat from the heat pump device to the room heating device in the determined second period by supplying the fluid having the determined temperature from the heat pump device to the room heating device.

The heat pump system control device is thus capable of adjusting the temperature of the fluid and supplying heat to the room heating device in accordance with the adjusted temperature.

For example, as the temperature of hot water in the hot water supply device is lower, the controller can increase the temperature of the fluid for supplying heat from the heat pump device to the room heating device.

The heat pump system control device is thus capable of shortening the period for supplying heat to the room heating device when the temperature of hot water in the hot water supply device is low. The heat pump system control device is thus capable of extending the period for supplying heat to the hot water supply device.

For example, when heat is supplied from the heat pump device to the room heating device in the preparatory period, the controller can adjust a flow rate of the fluid supplied from the heat pump device to the room heating device in such a manner that the flow rate is larger than a flow rate in the normal operation mode so that the quantity of the heat per unit time is larger than a quantity of heat per unit time in the normal operation mode.

The heat pump system control device is thus capable of making the quantity of heat per unit time to be supplied to the room heating device larger than the quantity of heat per unit time in the normal operation mode. Accordingly, sufficient heat is supplied to the room heating device in a short period.

Such a comprehensive or specific aspect can be embodied with a system, a method, an integrated circuit, a computer program, or a computer readable non-temporary recording medium such as a CD-ROM, or can be embodied with appropriate combination among a system, a device, a method, an integrated circuit, a computer program, and a recording medium.

Embodiments are specifically described below with reference to the drawings. All the embodiments to be described below provide comprehensive or specific examples. Numerical values, shapes, materials, constituent elements, disposition and connection of the constituent elements, steps, orders of the steps, and the like are to be exemplarily described in the following embodiments with no intention of limiting the present invention. Among the constituent elements to be mentioned in the following embodiments, those constituent elements not recited in the independent claims, which provide the most superordinate concepts, are to be described as arbitrary constituent elements.

### FIRST EXEMPLARY EMBODIMENT

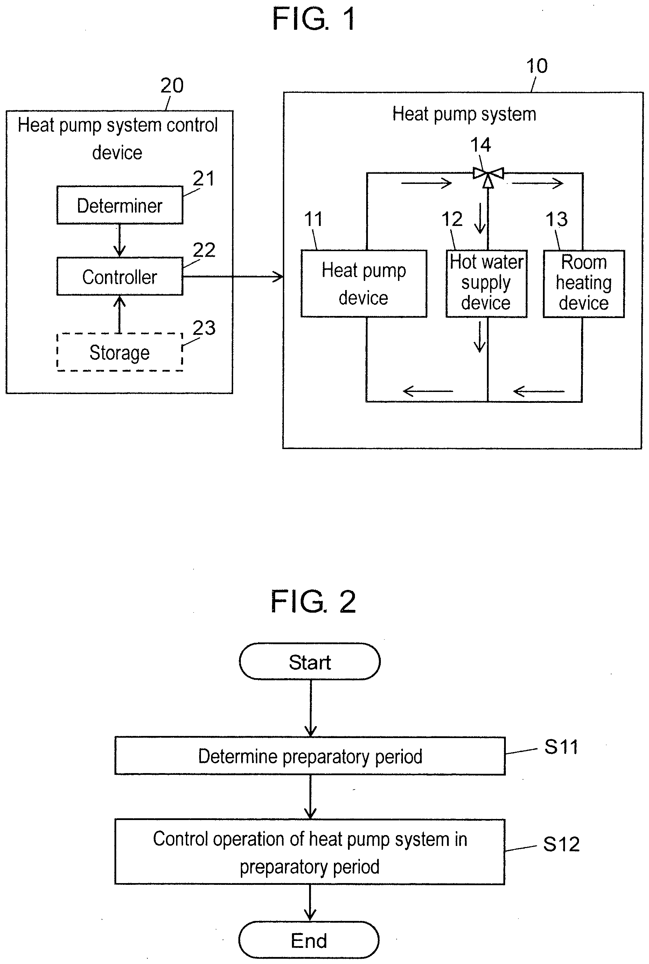

FIG. 1 is a diagram showing configurations of a heat pump system and a heat pump system control device according to the first embodiment.

Heat pump system 10 according to the first embodiment includes heat pump device 11, hot water supply device 12, room heating device 13, and three way valve 14. Heat pump system 10 selectively supplies heat from heat pump device 11 to hot water supply device 12 or room heating device 13 depending on the situation. More specifically, heat pump system 10 selects one of hot water supply device 12 and room heating device 13 depending on the situation and supplies heat from heat pump device 11 to the selected device. The selected one of hot water supply device 12 and room heating device 13 is thus supplied with heat.

Heat pump device 11 generates heat. Hot water supply device 12 heats hot water in hot water supply device 12 with heat supplied from heat pump device 11. Room heating device 13 warms a heating target area around room heating device 13 in a room with heat supplied from heat pump device 11. Three way valve 14 is used for selectively supplying heat from heat pump device 11 to hot water supply device 12 or room heating device 13.

Heat pump system control device 20 includes determiner 21 and controller 22. Heat pump system control device 20 controls operation of heat pump system 10. Heat pump system control device 20 can further include storage 23.

FIG. 2 is a flowchart illustrating operation of heat pump system control device 20 shown in FIG. 1.

Determiner 21 initially determines a preparatory period for suppressing electric power consumption of heat pump device 11 (S11). In other words, determiner 21 determines start time of a suppressing period for suppressing electric power consumption of heat pump device 11. The preparatory period is spent for preparing for suppression of electric power consumption, and precedes the period for suppressing electric power consumption.

Controller 22 subsequently controls operation of heat pump system 10 in the preparatory period determined by determiner 21 (S12). More specifically, controller 22 causes heat pump system 10 to operate in a predetermined preparatory operation mode in the preparatory period determined by determiner 21.

The preparatory operation mode is different from a normal operation mode for a normal period preceding the preparatory period. More specifically, the preparatory operation mode causes the timing of supplying heat from heat pump device 11 to hot water supply device 12 in a state where no heat is supplied from heat pump device 11 to hot water supply device 12 in the normal operation mode. Furthermore, a quantity of heat per unit time to be supplied from heat pump device 11 to room heating device 13 in the preparatory operation mode is larger than a quantity of heat per unit time to be supplied to room heating device 13 in the normal operation mode.

Under such control, heat pump system 10 operates in the predetermined preparatory operation mode in the determined preparatory period.

As described above, the preparatory operation mode causes the timing of supplying heat to hot water supply device 12 in the state where no heat is supplied to hot water supply device 12 in the normal operation mode. More heat is accordingly supplied to hot water supply device 12 in the preparatory period. Furthermore, as described above, the quantity of heat per unit time to be supplied to room heating device 13 in the preparatory operation mode is larger than the quantity of heat per unit time to be supplied to room heating device 13 in the normal operation mode. More heat is thus supplied to room heating device 13 in the preparatory period.

In summary, heat pump system control device 20 performs the operation described above so as to control heat pump system 10 so that sufficient heat is supplied to both hot water supply device 12 and room heating device 13 in the preparatory period.

Controller 22 can adjust the ratio of a period for supplying heat to hot water supply device 12 to a period for supplying heat to room heating device 13 in the preparatory period in such a manner that the ratio is larger than that in the normal operation mode. Controller 22 can cause heat pump system 10 to supply heat to hot water supply device 12 and then to supply heat to room heating device 13 in the preparatory period. Controller 22 can cause heat pump system 10 to supply heat to hot water supply device 12 until a temperature of hot water (or water) in hot water supply device 12 reaches a predetermined hot water supply temperature and then to supply heat to room heating device 13 in the preparatory period.

Controller 22 can determine, at or before start of the preparatory period, a first period for supplying heat to hot water supply device 12 in the preparatory period and a second period for supplying heat to room heating device 13 in the preparatory period. Controller 22 can cause heat pump system 10 to supply heat to hot water supply device 12 in the determined first period and then can cause heat pump system 10 to supply heat to room heating device 13 in the determined second period.

Controller 22 can cause heat pump system 10 to supply heat from heat pump device 11 to hot water supply device 12 and room heating device 13 alternately in the preparatory period.

For example, controller 22 can cause heat pump system 10 to stop supply of heat to one of hot water supply device 12 and room heating device 13 and to start supply of heat to the other one at the timing when hot water in hot water supply device 12 reaches a predetermined temperature in the preparatory period. Controller 22 can cause heat pump system 10 to stop supply of heat to one of hot water supply device 12 and room heating device 13 and start supply of heat to the other one at predetermined time intervals in the preparatory period.

Heat pump system control device 20 can further include storage 23 for storing relationship information. The relationship information indicates relationship between a first estimation period in which no heat is supplied to room heating device 13 and a second estimation period in which temperature decreased in the first estimation period is recovered with heat supplied to room heating device 13.

Controller 22 can determine the first period for supplying heat to hot water supply device 12 and the second period for supplying heat to room heating device 13 in accordance with the relationship information stored in storage 23. For example, controller 22 can determine the first period and the second period so that temperature decreased while no heat is supplied to room heating device 13 is recovered in the preparatory period. Controller 22 can cause heat pump system 10 to supply heat to hot water supply device 12 in the first period and to supply heat to room heating device 13 in the second period.

Controller 22 can extend the first period for supplying heat to hot water supply device 12 as the temperature of the hot water in hot water supply device 12 is lower. Controller 22 can decrease the quantity of heat per unit time to be supplied to room heating device 13 in the preparatory period as the temperature of the hot water in hot water supply device 12 is higher.

Controller 22 can cause heat pump system 10 to stop supply of heat to room heating device 13 and to start supply of heat to hot water supply device 12 if a condition for stopping operation (i.e. heat generation) of heat pump device 11 is satisfied while heat is supplied to room heating device 13. For example, this condition is same as a condition for stopping operation of heat pump device 11 when heat is supplied to room heating device 13. Controller 22 can thus cause heat pump system 10 to continue operation of heat pump device 11 so as to supply heat to hot water supply device 12.

Controller 22 can adjust a temperature of fluid (e.g. water) supplied from heat pump device 11 to room heating device 13 in such a manner that the temperature is more than that in the normal operation mode when heat is supplied to room heating device 13 in the preparatory period. In this case, controller 22 can increase the temperature of the fluid to a predetermined upper limit temperature. Or controller 22 can increase the temperature of the fluid to a degree higher than that in the normal operation mode by a predetermined degree.

Controller 22 can detect recovery of temperature decreased while no heat is supplied to room heating device 13 in the preparatory period. After recovery, controller 22 can change the quantity of heat per unit time to be supplied to room heating device 13 in such a manner that the quantity becomes equal to that in the normal operation mode. Controller 22 can detect recovery of temperature depending on stop of operation (i.e. heat generation) of heat pump device 11. Controller 22 can alternatively detect recovery of temperature depending on temperature sensed by a temperature sensor.

Controller 22 can determine the first period for supplying heat to hot water supply device 12, the second period for supplying heat to room heating device 13, and the temperature of the fluid for supplying heat to room heating device 13 in accordance with the relationship information stored in storage 23. Controller 22 can cause heat pump system 10 to supply the fluid having the determined temperature from heat pump device 11 to room heating device 13 in the second period. Controller 22 can increase the temperature of the fluid as the temperature of hot water in hot water supply device 12 is lower.

Controller 22 can adjust a flow rate of the fluid for supplying heat in such a manner that the flow rate is larger than that in the normal operation mode when heat is supplied from heat pump device 11 to room heating device 13 in the preparatory period.

One or both of hot water supply device 12 and room heating device 13 may not be included in heat pump system 10. Heat pump system control device 20 may be included in heat pump system 10. For example, heat pump system 10 may not include room heating device 13 but may include heat pump device 11, hot water supply device 12, three way valve 14, and heat pump system control device 20.

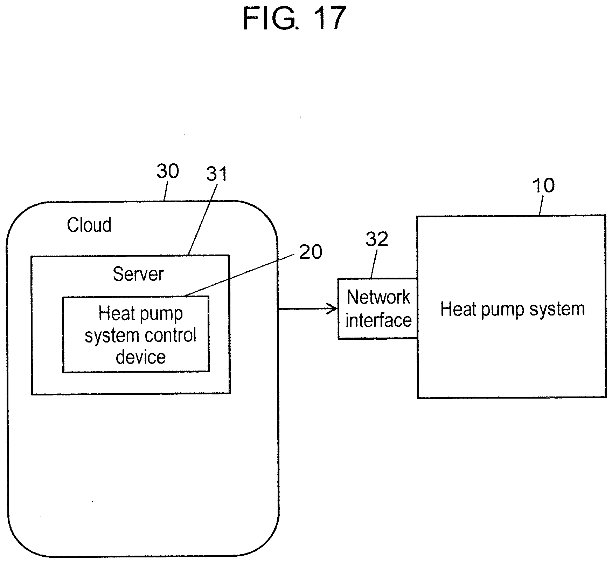

Heat pump system control device 20 can be partially or entirely located in a cloud. As exemplified in FIG. 17, heat pump system control device 20 is embodied by one or a plurality of servers 31 in cloud 30, and heat pump system 10 is provided with network interface 32 connected to cloud 30. Network interface 32 can be provided integrally with or separately from heat pump system 10. Heat pump system 10 receives a control signal from heat pump system control device 20 in cloud 30 by way of network interface 32 and operates in accordance with the received control signal.

For example, heat pump system control device 20 in cloud 30 causes heat pump system 10 to set a period for suppressing electric power consumption of heat pump device 11 and to supply, at start time of a preliminary period prior to start time of the period for suppressing electric power consumption, a heat storage material from heat pump device 11 to hot water supply device 12 before supplying the heat storage material from heat pump device 11 to room heating device 13, regardless of whether or not the temperature of hot water in the hot water supply device is less than a threshold for switch from room heating device 13 to hot water supply device 12 as a supply destination of the heat storage material from heat pump device 11 during normal operation prior to the preliminary period. Heat pump system control device 20 in cloud 30 further causes heat pump system 10 to switch from hot water supply device 12 to room heating device 13 as the supply destination of the heat storage material from heat pump device 11 when the temperature of hot water in hot water supply device 12 reaches a predetermined temperature higher than the threshold in the preliminary period, for example.

Each of the second, third, and fourth embodiments to be described below exemplifies the first embodiment more specifically.

### SECOND EXEMPLARY EMBODIMENT

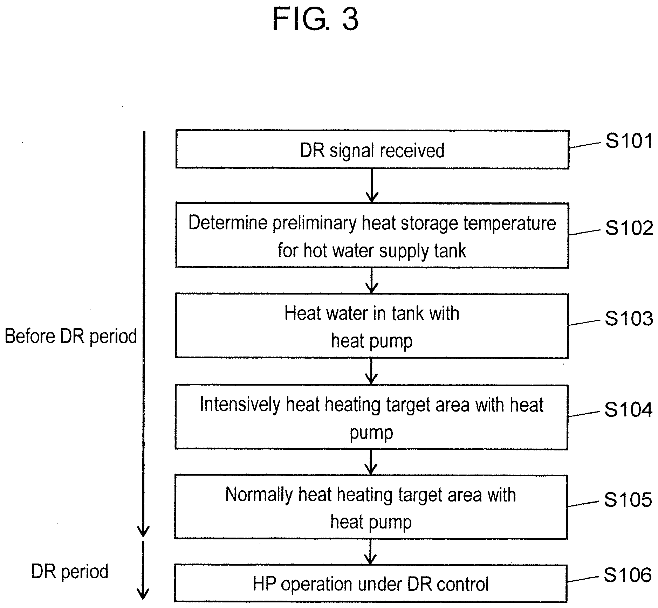

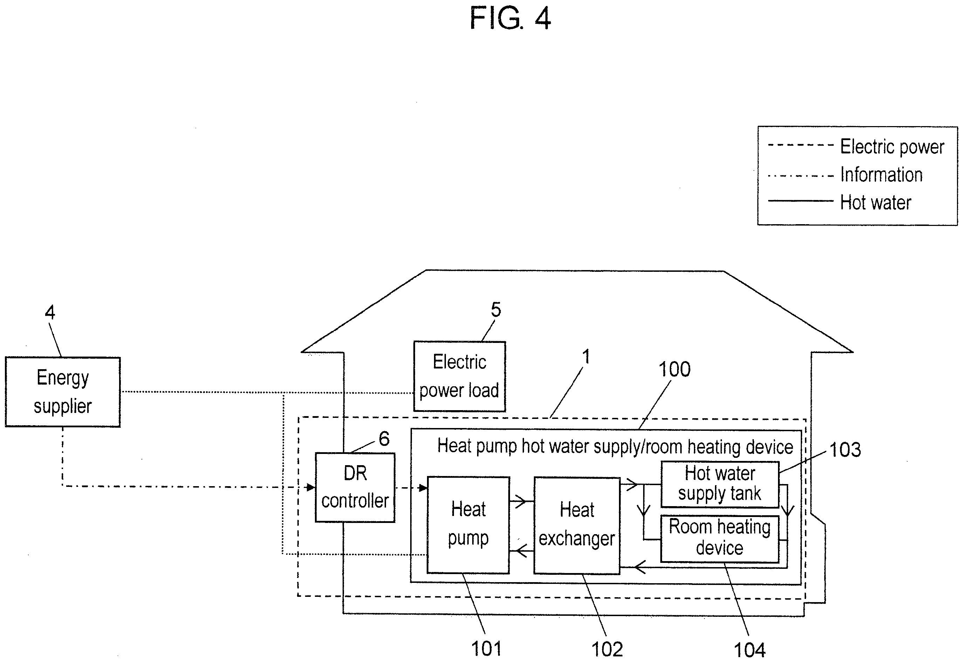

Described with reference to FIG. 3 is an outlined method of controlling a heat pump hot water supply/room heating system according to the second embodiment. FIG. 3 is a flowchart illustrating the outlined method of controlling the heat pump hot water supply/room heating system according to the second embodiment. FIG. 4 is a diagram showing the heat pump hot water supply/room heating system used for the method illustrated in FIG. 3. Heat pump hot water supply/room heating system 1 shown in FIG. 4 includes heat pump hot water supply/room heating device 100 and DR controller 6.

Heat pump hot water supply/room heating device 100 corresponds to heat pump system 10 according to the first embodiment. DR controller 6 corresponds to heat pump system control device 20 according to the first embodiment. Described below is the operation illustrated in FIG. 3 with application of the configuration shown in FIG. 4.

Heat pump hot water supply/room heating system 1 according to the second embodiment initially receives, from energy supplier 4, an output suppression signal (hereinafter, also referred to as a "DR (Demand Response) signal") indicating a period of expensive electric power fees (S101). The DR signal includes information to specify an output suppression period (hereinafter, also referred to as a "DR period") during which electric power consumption of heat pump 101 should be suppressed.

The output suppression period can be arbitrarily designated by energy supplier 4. For example, electric power supplied from energy supplier 4 reaches a peak in the output suppression period. More specifically, the output suppression period is set as "two hours from 18:00 to 20:00", for example. Heat pump hot water supply/room heating system 1 receives a DR signal before start time of the DR period (DR start time) (e.g., 16:00).

Heat pump hot water supply/room heating system 1 subsequently determines preliminary heat storage temperature before the DR start time (S102). Temperature determined as the preliminary heat storage temperature is a smaller one of a heat storage set temperature that is preset by the user as a target temperature of hot water in hot water supply tank 103 and an upper limit temperature to which hot water in hot water supply tank 103 can be heated with heat of heat pump 101.

Heat pump hot water supply/room heating system 1 then switches the three way valve to hot water supply tank 103 and heats hot water in hot water supply tank 103 with heat of heat pump 101 until the temperature of the hot water reaches the preliminary heat storage temperature (S103).

After the heating of hot water supply tank 103, heat pump hot water supply/room heating system 1 switches the three way valve to room heating device 104 and intensively heats, with heat of heat pump 101, a room as a heating target area by means of room heating device 104 until the room temperature is recovered (S104). After the room temperature is recovered, heat pump hot water supply/room heating system 1 heats the heating target area with heat of heat pump 101 in a normal manner (S105).

At and after the DR start time, heat pump hot water supply/room heating system 1 operates in accordance with preset DR control (S106). The DR control suppresses output of heat pump 101 to suppress electric power consumption as described in Patent Document 1, or stops operation of heat pump 101 to stop electric power consumption.

In this manner, after receipt of the DR signal, heat pump hot water supply/room heating system 1 initially heats hot water supply tank 103 using heat pump 101 so that the temperature of hot water reaches a predetermined temperature and thus stores heat in hot water supply tank 103. Heat pump hot water supply/room heating system 1 then supplies heat to room heating device 104. In other words, heat pump hot water supply/room heating system 1 initially stores heat in hot water supply tank 103 in which heat is easily to be stored and from which heat is difficult to be dissipated. Heat pump hot water supply/room heating system 1 then stores, until the DR start time, heat in the room serving as the heating target area in which heat is difficult to be stored and from which heat is easily to be dissipated.

This control keeps both the room temperature and the temperature of hot water in hot water supply tank 103 by the DR start time. Electric power consumption is thus suppressed in the DR period and comfort is also kept.

### Configuration according to second embodiment

FIG. 4 is a diagram showing heat pump hot water supply/room heating system 1 according to the second embodiment. As shown in FIG. 4, heat pump hot water supply/room heating system 1 includes heat pump hot water supply/room heating device 100 and DR controller 6.

FIG. 4 exemplifies a case where energy supplier 4 as an electric power supplier supplies electric power to a house or a building. More specifically, electric power is supplied from energy supplier 4 to heat pump 101, electric power loading device 5, and the like in the house.

Electric power loading device 5, DR controller 6, and heat pump hot water supply/room heating device 100 are located in the house shown in FIG. 4. Heat pump hot water supply/room heating device 100 includes heat pump 101 serving as a heat generator, heat exchanger 102, hot water supply tank 103, and room heating device 104 serving as a heat radiator.

When the three way valve is directed to room heating device 104, head generated by heat pump 101 goes through heat exchanger 102 so that heat pump hot water supply/room heating device 100 radiates the heat from room heating device 104. Heat pump hot water supply/room heating device 100 thus keeps the room temperature of a room in which room heating device 104 is located within a predetermined temperature range including a preset temperature.

When the three way valve is directed to hot water supply tank 103, heat generated by heat pump 101 goes through heat exchanger 102 so that heat pump hot water supply/room heating device 100 radiates the heat into water in hot water supply tank 103. Heat pump hot water supply/room heating device 100 thus keeps the temperature of water in hot water supply tank 103 within a predetermined temperature range including a preset temperature.

Energy supplier 4 is a company for supplying electric power, gas, or the like to each user. When energy supplier 4 intends to suppress electric power consumption by each user, energy supplier 4 transmits a DR signal to suppress consumption of electric power supplied through an electric power system to each user.

Electric power loading device 5 consumes electric power while heat pump hot water supply/room heating device 100 consumes electric power as well. Examples of electric power loading device 5 include a light, a television, a washing machine, and a refrigerator.

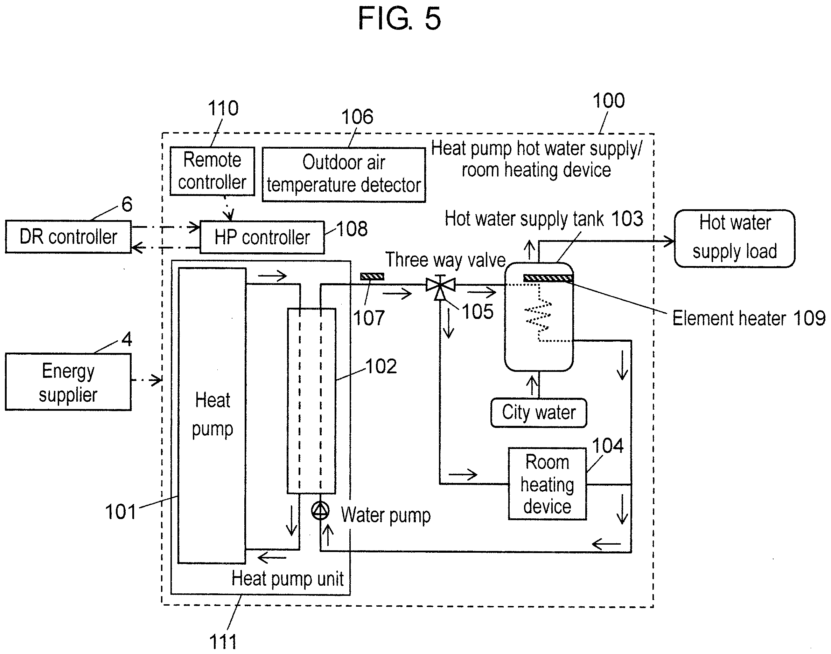

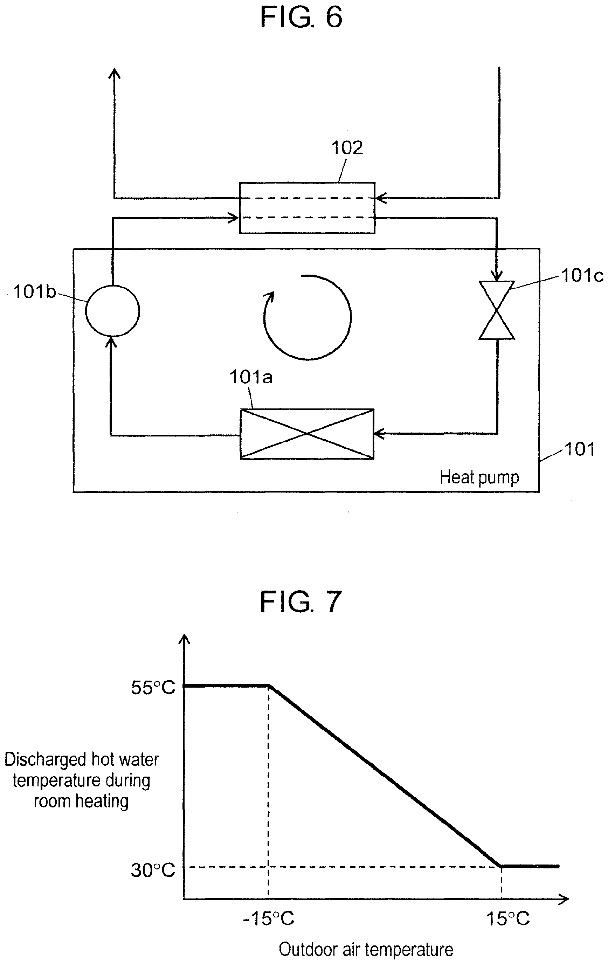

FIG. 5 is a diagram detailing the configuration of heat pump hot water supply/room heating device 100 shown in FIG. 4. FIG. 6 is a diagram detailing the configuration of heat pump 101 shown in FIGS. 4 and 5, and FIG. 6 shows flow of a refrigerant in heat pump 101.

Heat pump hot water supply/room heating device 100 shown in FIG. 5 includes heat pump 101, heat exchanger 102, hot water supply tank 103, room heating device 104, three way valve 105, outdoor air temperature detector 106, discharged hot water temperature detector 107, HP controller (Heat Pump controller) 108, element heater 109, and remote controller 110. Heat pump 101 and heat exchanger 102 are comprised heat pump unit 111. Heat pump unit 111 corresponds to heat pump device 11 according to the first embodiment.

Heat pump 101 utilizes air as a heat source, and compresses the refrigerant into a high temperature and high pressure state. More specifically, as shown in FIG. 6, heat pump 101 includes heat exchanger 101a serving as an air heat exchanger, compressor 101b, and expansion valve 101c.

Heat exchanger 101a exchanges heat between outdoor air and a liquid refrigerant of low temperature and low pressure to generate a vapor refrigerant of low temperature and low pressure. Compressor 101b is driven by a motor and compresses the vapor refrigerant of low temperature and low pressure into the vapor refrigerant of high temperature and high pressure. Expansion valve 101c decreases the pressure of the vapor refrigerant of low temperature and high pressure to generate a liquid refrigerant of low temperature and low pressure. Heat pump 101 further includes a fan or the like for promoting exchange of heat between the refrigerant in a vaporizer of heat exchanger 101a and outdoor air.

Heat exchanger 102 exchanges heat between the vapor refrigerant of high temperature and high pressure discharged from compressor 101b and water serving as a heat storage material. Thus a liquid refrigerant of low temperature and high pressure flows into expansion valve 101c. In other words, the refrigerant in heat pump 101 circulates clockwise in a heat pump cycle shown in FIG. 6.

The type of the refrigerant in heat pump 101 is R410A, for example. The maximum temperature at the water cycle side exit of heat exchanger 102 is dependent on the properties of the refrigerant and is 55°C in the present embodiment. The upper limit value of a room heating set temperature corresponding to a temperature of water discharged from heat exchanger 102 to room heating device 104 is 55°C in the present embodiment. Room heating device 104 is used for heating the room. The lower limit value of the room heating set temperature is thus 30°C in the present embodiment.

Heat exchanger 102 serving as a water heat exchanger exchanges heat between the refrigerant of high temperature and high pressure discharged from heat pump 101 and a secondary water cycle filled with water (more specifically, water that circulates between heat exchanger 102 and room heating device 104 or hot water supply tank 103).

As shown in FIG. 5, a water pump is located on a flow path in which water circulates and reaches heat exchanger 102 again. The water pump adjusts the amount of water (i.e., the flow rate of water) entering heat exchanger 102. This flow rate is controlled to a preset amount. In other words, the water pump adjusts the flow rate of water entering heat exchanger 102 to the preset amount.

Hot water supply tank 103 stores, in water, heat used for dealing with a hot water supply load. Hot water supply tank 103 corresponds to hot water supply device 12 according to the first embodiment.

More specifically, hot water supply tank 103 is provided therein with a heat exchange coil. In FIG. 5, the portion drawn by the dotted line in hot water supply tank 103 indicates the heat exchange coil. When three way valve 105 is directed to hot water supply tank 103, water heated by heat exchanger 102 flows through the heat exchange coil and water in hot water supply tank 103 is thus heated. The maximum temperature at the water cycle side exit of heat exchanger 102 is 55°C. When the temperature of hot water supply tank 103 is not less than 45°C, the heat exchange coil hardly exchanges heat.

When heating water in hot water supply tank 103 so that the temperature of the water reaches or exceeds 50°C, heat pump hot water supply/room heating device 100 energizes element heater 109 to heat water in hot water supply tank 103. In the present embodiment, the storage capacity of hot water supply tank 103 is 200 L and the heating capacity of element heater 109 is 3 kW, for example. Operation of element heater 109 is controlled by HP controller 108, which will be described later.

Heat pump unit 111 is capable of increasing the temperature of water in hot water supply tank 103 so that the temperature reaches about 45°C. Element heater 109 is capable of increasing the temperature of water in hot water supply tank 103 so that the temperature exceeds 45°C. In the present embodiment, water is exemplified as the heat storage material held in hot water supply tank 103. However, the heat storage material is not particularly limited to water. It is possible to use any heat storage material that changes its temperature in correspondence with the quantity of stored heat.

If a hot water supply load is generated in the environment of the user, hot water in hot water supply tank 103 is supplied to the user. In this case, city water of an equal amount is supplied into hot water supply tank 103.

Room heating device 104 is used for heating the room. Room heating device 104 corresponds to room heating device 13 according to the first embodiment. Specific examples of room heating device 104 include a radiator or a floor heater for radiating thermal energy into a room by way of a heat radiation panel, and an air conditioner for discharging warm air heated with heat supplied from heat exchanger 102. Room heating device 104 is provided with a valve for adjusting a room temperature to a room temperature set value at which the user would like to keep the room temperature. As the room temperature approaches the room temperature set value, the valve is closed gradually.

The quantity of heat supplied to the heat radiation panel or the air conditioner or the like is thus decreased. Thus, water of a temperature approximate to the temperature of water at the exit returns to the entrance of heat exchanger 102. In the present embodiment, the user sets the room temperature set value to 20°C, for example. Specific examples of room heating device 104 are not limited to those described above, but include any device that is provided with a heat radiator for radiating heat generated by heat pump 101 into a heating target area.

Three way valve 105 is a unit for switching the direction of the flow path, and causes water heated by heat exchanger 102 to flow into one of hot water supply tank 103 and room heating device 104. Three way valve 105 corresponds to three way valve 14 according to the first embodiment. The direction of three way valve 105 is controlled by HP controller 108, which will be described later.

Outdoor air temperature detector 106 detects an outdoor air temperature. More specifically, outdoor air temperature detector 106 detects the outdoor air temperature of an area around heat pump hot water supply/room heating device 100. Discharged hot water temperature detector 107 detects a temperature of hot water discharged from heat exchanger 102. Outdoor air temperature detector 106 and discharged hot water temperature detector 107 are not particularly limited in terms of their specific configurations. For example, typical configurations for measurement of temperature, such as a thermocouple, a resistance temperature detector, a thermistor, and a bimetallic thermometer, can be adopted appropriately depending on measurement targets.

A user or an installation personnel uses remote controller 110 to set information for operating entire heat pump hot water supply/room heating device 100. Set with remote controller 110 are a system set value for stop or operation of the entire system, a room heating set value that indicates a temperature of discharged hot water during room heating, and a supplied hot water set value that indicates a temperature of water that stores heat in hot water supply tank 103. The information thus set (set information) is appropriately transmitted to HP controller 108.

FIG. 7 is a graph exemplifying the room heating set value. The room heating set value indicates a temperature of discharged hot water during room heating. More specifically, the room heating set value is set as a coefficient in a relational expression between an outdoor air temperature and a temperature of discharged hot water. Typically, the temperature of discharged hot water is set higher as the outdoor air temperature is lower, whereas the temperature of discharged hot water is set lower as the outdoor air temperature is higher. The quantity of heat radiated from room heating device 104 is thus increased as the outdoor air temperature is lower, so that the room temperature is kept constant.

The room temperature is kept constant with a smaller quantity of radiated heat as the outdoor air temperature is higher. Heat pump 101 has a typical property in which heating efficiency is higher as the temperature of discharged hot water is lower. Heat pump hot water supply/room heating device 100 is thus capable of improving heating efficiency and keeping the room temperature by decreasing temperature of discharged hot water as outdoor air temperature is higher.

In FIG. 7, if the outdoor air temperature is not more than -15°C, the temperature of discharged hot water is controlled to 55°C during room heating. If the outdoor air temperature is not less than 15°C, the temperature of discharged hot water is controlled to 30°C during room heating. If the outdoor air temperature is between -15°C and 15°C, the temperature of discharged hot water during room heating is controlled to a value linearly complemented between 55°C and 30°C.

HP controller 108 controls compressor 101b and expansion valve 101c in heat pump 101 in accordance with a command from DR controller 6 and the information set with remote controller 110. HP controller 108 controls the quantity of heat generated by heat pump 101. HP controller 108 also controls the direction of the flow path of three way valve 105 and ON/OFF of element heater 109. HP controller 108 prioritizes a command from DR controller 6 over the information set with remote controller 110.

Described below is operation of HP controller 108 when DR controller 6 issues no command. HP controller 108 switches between a room heating mode for supplying heat from heat pump 101 to room heating device 104 and a hot water supply mode for supplying heat from heat pump 101 to hot water supply tank 103, and HP controller 108 operates heat pump hot water supply/room heating device 100.

For example, the room heating mode is ended and the hot water supply mode is started when the temperature of hot water stored in hot water supply tank 103 becomes less than the supplied hot water set value by at least a predetermined degree during operation in the room heating mode. In this case, HP controller 108 switches three way valve 105 to be directed to hot water supply tank 103. Thereafter, the hot water supply mode is ended and the room heating mode is started when the temperature of hot water stored in hot water supply tank 103 reaches or exceeds 45°C as the upper limit temperature at which hot water supply tank 103 can be heated by heat pump 101. In this case, HP controller 108 switches three way valve 105 to be directed to room heating device 104.

In the present embodiment, the hot water supply mode is started when the temperature of hot water stored in hot water supply tank 103 becomes less than the supplied hot water set value by at least 5 K.

HP controller 108 stops heat pump 101 in the room heating mode when the temperature of discharged hot water detected by discharged hot water temperature detector 107 becomes more than the room heating set value corresponding to the outdoor air temperature detected by outdoor air temperature detector 106 by at least a predetermined degree. Thereafter, HP controller 108 restarts operation of heat pump 101 when the temperature of discharged hot water detected by discharged hot water temperature detector 107 becomes less than the room heating set value by at least a predetermined degree. In this period, the water pump operates constantly.

In the present embodiment, HP controller 108 stops heat pump 101 when the temperature of discharged hot water detected by discharged hot water temperature detector 107 reaches or exceeds the room heating set value. HP controller 108 restarts operation of heat pump 101 when the temperature of discharged hot water detected by discharged hot water temperature detector 107 becomes less than the room heating set value by at least 5 K.

As described above, as the room temperature approaches the room temperature set value, the valve of room heating device 104 is closed gradually, so that the amount of water bypassing room heating device 104 is increased. Thus, the temperature at the entrance of water and the temperature at the exit of water in heat exchanger 102 become close to each other. Heat generated by heat pump 101 then becomes more than heat radiated from room heating device 104, and the temperature of circulating water is increased, so that heat pump 101 is stopped.

After heat pump 101 is stopped, room heating device 104 radiates less heat and the room temperature is decreased. The valve is opened in this case, the temperature of circulating water is decreased gradually, and operation of heat pump 101 is restarted. Operation in the room heating mode is controlled as described above. The water pump operates continuously even while heat pump 101 is stopped. Insufficiency of heat supplied to room heating device 104 is thus monitored, and operation of heat pump 101 is controlled so that the room temperature is kept around the room temperature set value.

HP controller 108 controls heat pump hot water supply/room heating device 100 so that the heat exchange coil in hot water supply tank 103 exchanges heat in the hot water supply mode. In this case, HP controller 108 controls operation of heat pump 101 so that the temperature of hot water discharged from heat exchanger 102 reaches the upper limit value of 55°C. HP controller 108 thus increases the temperature of hot water in hot water supply tank 103 as much as possible and stores heat in hot water supply tank 103.

HP controller 108 turns ON element heater 109 if the temperature of hot water in hot water supply tank 103 is not more than the supplied hot water set value upon end of the hot water supply mode. HP controller 108 then turns OFF element heater 109 when the temperature of hot water in hot water supply tank 103 reaches or exceeds the supplied hot water set value.

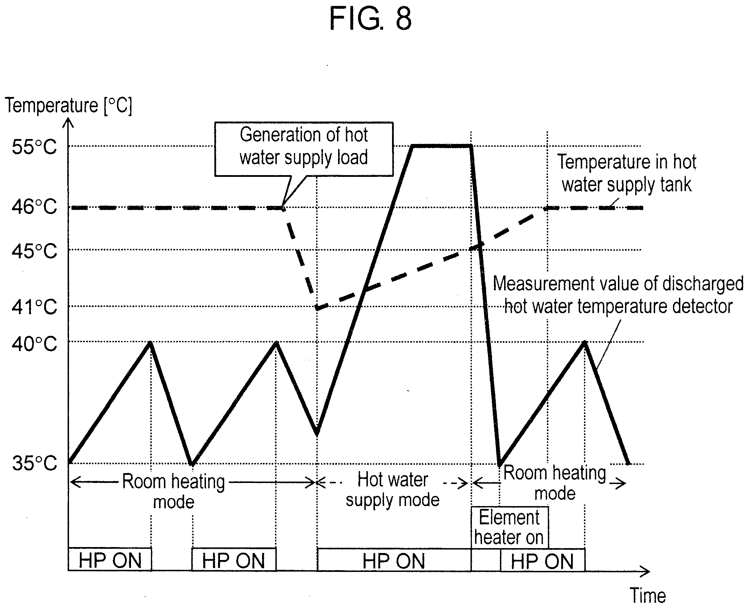

FIG. 8 is a graph exemplifying temperature variation when DR controller 6 issues no command. In this example, the room heating set value corresponding to outdoor air temperature is 40°C and the supplied hot water set value is 46°C.

The example of FIG. 8 is described in chronological order. In FIG. 8, heat pump hot water supply/room heating device 100 initially operates in the room heating mode. In this case, heat pump 101 starts operation because the temperature of discharged hot water detected by discharged hot water temperature detector 107 is not more than 35°C that is less than 40°C, which is the room heating set value corresponding to the outdoor air temperature, by at least 5 K.

Heat pump 101 is then stopped when the temperature of discharged hot water reaches or exceeds 40°C. Heat pump 101 thereafter restarts operation when room heating device 104 radiates heat and the temperature of discharged hot water becomes not more than 35°C. Heat pump 101 is stopped again when the temperature of discharged hot water reaches or exceeds 40°C.

Subsequently, a hot water supply load is generated while heat pump 101 is stopped. The operation is thus switched to the hot water supply mode when the temperature of hot water in hot water supply tank 103 becomes not more than 41°C that is less than the supplied hot water set value of 46°C by at least 5 K, which is a switching condition to the hot water supply mode. More specifically, three way valve 105 is directed to hot water supply tank 103. The temperature of discharged hot water is controlled to the upper limit value of 55°C in the hot water supply mode. The heat exchange coil heats hot water in hot water supply tank 103.

Thereafter, the operation is switched again to the room heating mode when the temperature of hot water in hot water supply tank 103 reaches or exceeds 45°C to which degree hot water is unlikely to be heated by heat pump 101. More specifically, three way valve 105 is directed to room heating device 104. Element heater 109 is then turned ON until the temperature of hot water in hot water supply tank 103 reaches or exceeds the supplied hot water set value of 46°C.

The temperature of discharged hot water is not less than the room heating set value of 40°C when the operation is switched again to the room heating mode. Heat pump 101 is thus stopped. Heat pump 101 then starts operation when room heating device 104 radiates heat and the temperature of discharged hot water becomes not more than 35°C. Heat pump 101 thereafter repeats starting and stopping operation in the room heating mode. The series of operation indicated in FIG. 8 is performed as described above.

Described next is operation controlled by HP controller 108 when DR controller 6 issues a command. Commands from DR controller 6 includes, for example, an instruction of the room heating mode or the hot water supply mode, an instruction of turning ON or OFF element heater 109, a system set value, a room heating set value, and a supplied hot water set value. The commands are prioritized over the information set with remote controller 110. For example, the system is operated in the hot water supply mode if DR controller 6 issues a command of the hot water supply mode even in a state where the system should be operated in the room heating mode in accordance with the information set with remote controller 110.

Even when DR controller 6 issues a command, HP controller 108 operates in a manner similar to a case where DR controller 6 issues no command as to conditions other than the command from DR controller 6. For example, if DR controller 6 issues an instruction of turning ON element heater 109 and no instruction of the room heating mode or the hot water supply mode is issued, HP controller 108 turns ON element heater 109 in accordance with the instruction from DR controller 6 and determines the operation mode in accordance with the information set with remote controller 110.

DR controller 6 has a function of communicating with energy supplier 4 and receiving a DR signal. DR controller 6 issues HP controller 108 in heat pump hot water supply/room heating device 100 with a command or a control command. DR controller 6 obtains, from HP controller 108, information on a state of operation or stop of heat pump 101, a temperature of hot water stored in hot water supply tank 103, and the like.

Energy supplier 4 transmits a DR signal before (e.g., 0.5 to 12 hours before) start time of the DR period for suppressing electric power consumption by each user. In this case, the DR signal includes information specifying start time and finish time of the DR period. In the present embodiment, a DR signal indicating "DR start time: 18:00 and DR finish time: 20:00" is received at 16:00.

The "information specifying start time and finish time of the DR period" is not particularly limited. This information can directly indicate DR start time and DR finish time as in "DR start time: 18:00 and DR finish time: 20:00", or can indicate the DR start time and length of the DR period as in "DR start time: 18:00 and DR period: two hours".

DR controller 6 stores heat from heat pump 101 into hot water supply tank 103 in a DR preliminary period, and then issues HP controller 108 with a command of supplying heat to room heating device 104. A DR preliminary period is a constant period from receipt of a DR signal to DR start time. DR controller 6 issues HP controller 108 with a command of suppressing electric power consumption by the entire system in the DR period. A DR period lasts from DR start time (start time of a DR period) to DR finish time (finish time of the DR period).

The DR preliminary period according to the present embodiment lasts from receipt of the DR signal to the DR start time. The DR preliminary period can be freely set within a period from receipt of the DR signal to the DR start time, e.g., a period from one hour before the DR start time to the DR start time, or a period from two hours before the DR start time to one hour before the DR start time.

A DR period and a DR preliminary period can be set freely so as to be independent from a DR signal. For example, if a period of expensive electric power fees is preset, the DR period can be set as the period of expensive electric power fees and the DR preliminary period can be set as a certain period prior to the DR period. Alternatively, information on future change in electric power fee can be obtained from energy supplier 4 at certain time intervals, and the DR period can be set as the period of expensive electric power fees whereas the DR preliminary period can be set as a certain period prior to the DR period in accordance with the information thus obtained.

Described below is operation of DR controller 6 in the DR preliminary period. DR controller 6 performs DR preliminary control in the DR preliminary period. DR controller 6 initially calculates a preliminary heat storage temperature for storing heat in hot water supply tank 103 prior to the DR start time. In the present embodiment, a value identical with the supplied hot water set value set with remote controller 110 is used as the preliminary heat storage temperature.

The preliminary heat storage temperature is not particularly limited to the above. For example, if the DR period is long, more heat is stored. In this case, a preliminary heat storage temperature higher than the supplied hot water set value can be used. Alternatively, the minimum temperature at which shortage of hot water does not occur can be set as a preliminary heat storage temperature in accordance with estimation of a hot water supply load in the DR period.

DR controller 6 subsequently issues HP controller 108 with a command of the hot water supply mode. DR controller 6 keeps the command of the hot water supply mode until the temperature of hot water stored in hot water supply tank 103 reaches or exceeds the preliminary HP heat storage temperature. The preliminary HP heat storage temperature is set as a lower value of the preliminary heat storage temperature and 45°C as the upper limit temperature of hot water in hot water supply tank 103 to be heated by heat pump 101. Accordingly, hot water supply tank 103 is not heated so that the temperature of hot water exceeds the supplied hot water set value set by the user even when the supplied hot water set value set by the user is less than the upper limit temperature of hot water in hot water supply tank 103 to be heated by heat pump 101. This configuration suppresses unnecessary heat storage.

DR controller 6 then issues HP controller 108 with a command including an instruction of the room heating mode and the room heating set value when the temperature of hot water in hot water supply tank 103 reaches or exceeds the preliminary HP heat storage temperature. The room heating set value included in this command is 55°C as the upper limit of the room heating set value regardless of the outdoor air temperature.

DR controller 6 keeps this command until the temperature of discharged hot water reaches or exceeds 55°C and heat pump 101 is stopped. Stop of heat pump 101 means that heat discharged from heat pump 101 is larger than heat radiated from room heating device 104. The quantity of heat radiated from room heating device 104 is decreased by increase in room temperature or the valve partially closed.

DR controller 6 increases the quantity of heat radiated from room heating device 104 by setting the upper limit as the room heating set value until the room temperature, which is decreased while hot water supply tank 103 is heated, is recovered. DR controller 6 quickly recovers the room temperature in this manner.

The room heating set value is set to the upper limit of 55°C in the present embodiment. The room heating set value is not particularly limited to the above. A value obtained by adding 5 K to a normal room heating set value can be set as the room heating set value. Alternatively, a value obtained by increasing by 20% the normal room heating set value can be set as the room heating set value. The room heating set value has only to be not less than the normal room heating set value set with remote controller 110.

DR controller 6 stops the command to HP controller 108 when heat pump 101 is stopped.

Described next is operation of DR controller 6 in the DR period. DR controller 6 performs the DR control in the DR period. In order to perform the DR control according to the present embodiment, DR controller 6 issues HP controller 108 with a command of stopping the entire system as system setting. When stop of the entire system is commanded as system setting, HP controller 108 stops all the units including the water pump and element heater 109, in addition to heat pump 101.

The DR control can suppress output of heat pump 101 to suppress electric power consumption as in Patent Document 1, or can stop heat pump 101 to stop electric power consumption as described above.

### Operation according to second embodiment

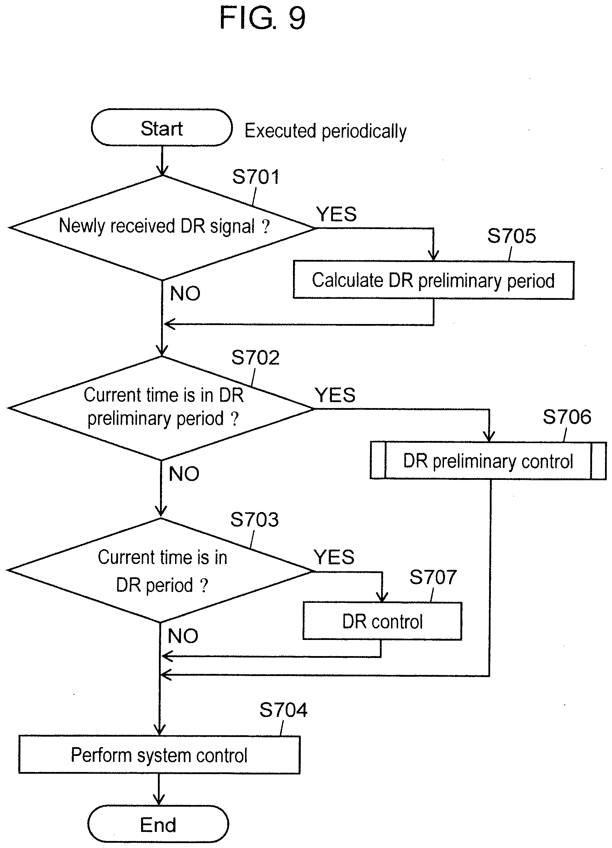

Described next with reference to FIGS. 9 to 12 is a method of controlling heat pump hot water supply/room heating system 1 according to the second embodiment.

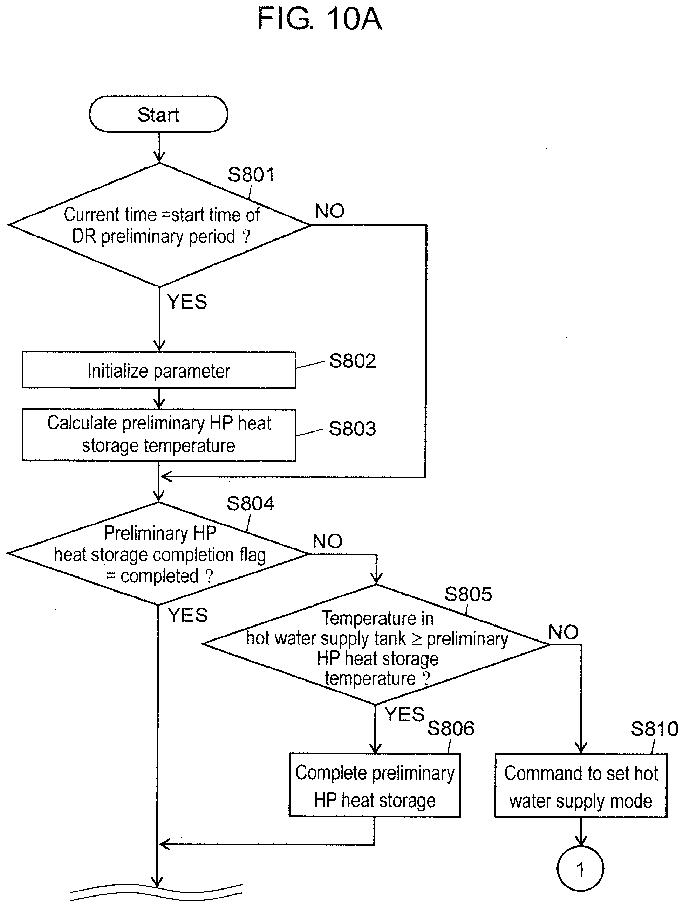

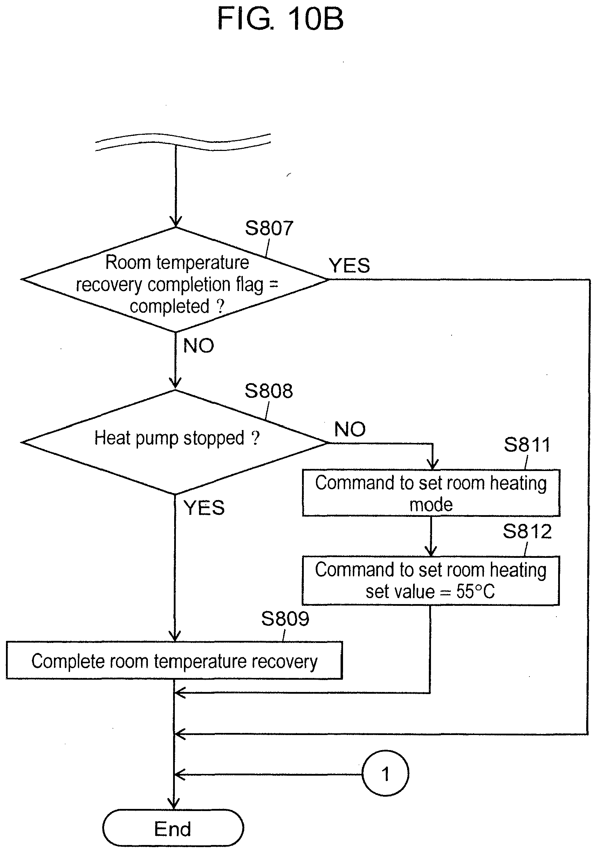

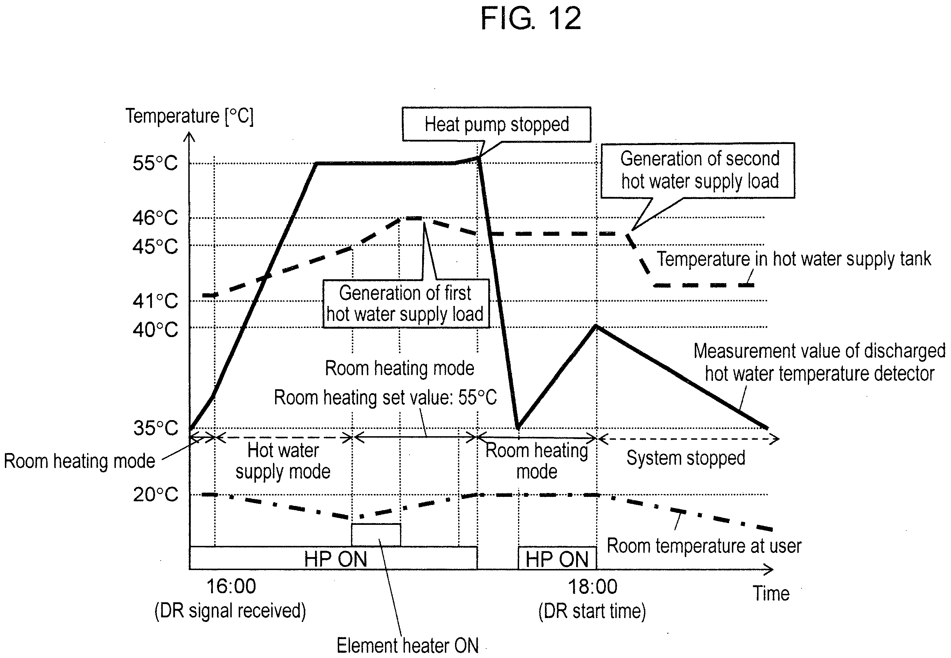

FIG. 9 is a flowchart illustrating control of heat pump hot water supply/room heating system 1 according to the second embodiment. FIGS. 10A and 10B are flowcharts illustrating the DR preliminary control (S706 in FIG. 9) illustrated in FIG. 9. FIG. 12 is a graph exemplifying temperature variation due to the DR preliminary control.

Description is made first with reference to FIG. 9. Heat pump hot water supply/room heating system 1 periodically (e.g., every one minute) executes the steps in FIG. 9. DR controller 6 initially determines whether or not a DR signal has been received newly (S701). If newly receiving a DR signal (YES in S701), DR controller 6 calculates a DR preliminary period (S705).

In the present embodiment, DR controller 6 newly obtains a DR signal indicating "DR start time: 18:00 and DR finish time: 20:00" at 16:00. The DR preliminary period according to the present embodiment lasts from receipt of the DR signal to the DR start time. The DR preliminary period is then calculated as lasting from 16:00 to 18:00. The subsequent step (S702) is then executed.

If no DR signal has been received newly (NO in S701) or after the DR preliminary period is calculated (S705), DR controller 6 determines whether or not the current time is included in the DR preliminary period (S702). If the current time is included in the DR preliminary period (YES in S702), DR controller 6 performs the DR preliminary control (S706). In the present embodiment, the DR preliminary control is performed every one minute in the period from 16:00 to 18:00 including.

Described next is the detailed DR preliminary control (S706) with reference to FIGS. 10A and 10B. In the DR preliminary control, DR controller 6 initially determines whether or not the current time coincides with start time of the DR preliminary period (S801).

If the current time coincides with start time of the DR preliminary period (YES in S801), DR controller 6 initializes parameters (S802). DR controller 6 has a preliminary HP heat storage completion flag and a preliminary HP heat storage completion flag as the parameters for the DR preliminary control. The preliminary HP heat storage completion flag indicates whether or not preliminary heat storage into hot water supply tank 103 has been completed. The room temperature recovery completion flag indicates whether or not room temperature, which is decreased while hot water supply tank 103 is heated, is recovered.

The preliminary HP heat storage completion flag has two values of "not completed" and "completed". The initialization sets "not completed" to the preliminary HP heat storage completion flag. The room temperature recovery completion flag also has two values of "not completed" and "completed". The initialization sets "not completed" to the room temperature recovery completion flag.

DR controller 6 then calculates preliminary HP heat storage temperature (S803). In the present embodiment, a value identical with the supplied hot water set value set with remote controller 110 is used as the preliminary heat storage temperature. In the present embodiment, the supplied hot water set value is 46°C and the preliminary heat storage temperature is calculated to be 46°C. DR controller 6 obtains 45°C as the preliminary HP heat storage temperature, which is a lower value of the preliminary heat storage temperature and 45°C as the upper limit temperature of hot water supply tank 103 to be heated by heat pump 101. The subsequent step (S804) is then executed.

If the current time does not coincide with start time of the DR preliminary period (NO in S801) or after the parameters are initialized (S802) and the preliminary HP heat storage temperature is calculated (S803), DR controller 6 determines whether or not the preliminary HP heat storage completion flag has the value of "completed" (S804). If the preliminary HP heat storage completion flag does not have the value of "completed" (NO in S804), DR controller 6 determines whether or not the temperature of hot water in hot water supply tank 103 is not less than the preliminary HP heat storage temperature (S805).

If the temperature of hot water in hot water supply tank 103 is less than the preliminary HP heat storage temperature (NO in S805), DR controller 6 issues HP controller 108 with a command of the hot water supply mode as the operation mode (S810). More specifically, the temperature of hot water stored in hot water supply tank 103 is detected by a temperature sensor or the like, and supply of heat from heat pump 101 to hot water supply tank 103 is started at the temperature of hot water at which supply of heat from heat pump 101 to hot water supply tank 103 is not started in the normal operation mode. DR controller 6 then finishes the DR preliminary control.

If the temperature of hot water in hot water supply tank 103 is not less than the preliminary HP heat storage temperature (YES in S805), DR controller 6 completes the preliminary HP heat storage (S806). In the present embodiment, when the temperature of hot water stored in hot water supply tank 103 is not less than 45°C that is not less than the preliminary HP heat storage temperature, DR controller 6 changes the preliminary HP heat storage completion flag from "not completed" to "completed". The subsequent step (S807) is then executed.

After completion of the preliminary HP heat storage (S806), the preliminary HP heat storage completion flag is determined as "completed" (YES in S804) in the DR preliminary control. More specifically, from start of the DR preliminary control and until the temperature of hot water in hot water supply tank 103 reaches or exceeds the preliminary HP heat storage temperature, DR controller 6 issues a command of the hot water supply mode as the operation mode and causes heat pump 101 to heat hot water supply tank 103. After the temperature of hot water in hot water supply tank 103 reaches or exceeds the preliminary HP heat storage temperature, DR controller 6 does not heat hot water in hot water supply tank 103 with heat pump 101.

If the preliminary HP heat storage completion flag has the value of "completed" (YES in S804) or after the preliminary HP heat storage is completed (S806), DR controller 6 determines whether or not a room temperature recovery completion flag has the value of "completed" (S807). If the room temperature recovery completion flag does not have the value of "completed" (NO in S807), DR controller 6 determines whether or not heat pump 101 is stopped (S808).

If heat pump 101 is not stopped (NO in S808), DR controller 6 issues HP controller 108 with a command of the room heating mode as the operation mode (S811). DR controller 6 then issues HP controller 108 with a command of 55°C as the room heating set value regardless of outdoor air temperature (S812). DR controller 6 then finishes the DR preliminary control.

If heat pump 101 is stopped (YES in S808), DR controller 6 completes recovery of the room temperature (S809). In this case, DR controller 6 changes the room temperature recovery completion flag from "not completed" to "completed". DR controller 6 then finishes the DR preliminary control.

After completion of the room temperature recovery (S809), the room temperature recovery completion flag is determined as "completed" (YES in S807) in the DR preliminary control. More specifically, DR controller 6 issues a command of 55°C as the room heating set value from start of the DR preliminary control until recovery of the room temperature decreased while heat pump 101 heats hot water in hot water supply tank 103 is detected as stop of heat pump 101. During this period, room heating is performed so that the quantity of heat radiated from room heating device 104 is larger than the normal quantity.

After recovery of the room temperature is detected as stop of heat pump 101, room heating having the quantity of radiated heat larger than the normal quantity is not performed.

If the room temperature recovery completion flag has the value of "completed" (YES in S807), DR controller 6 finishes the DR preliminary control. The DR preliminary control indicated in FIGS. 10A and 10B is thus finished.

As illustrated in FIG. 9, after performing the DR preliminary control (S706), DR controller 6 executes the subsequent step (S704).

If determined that the current time is not included in the DR preliminary period (NO in S702), DR controller 6 determines whether or not the current time is included in the DR period (S703). In the present embodiment, the DR period lasts from the DR start time of 18:00 to the DR finish time of 20:00. DR controller 6 determines whether or not the current time is included in this period.

If determined that the current time is included in the DR period (YES in S703), DR controller 6 performs the DR control (S707). In the present embodiment, DR controller 6 issues HP controller 108 with a command of stopping the entire system as system setting. DR controller 6 then executes the subsequent step (S704).

If determined that the current time is not included in the DR period (NO in S703) or after the DR preliminary control (S706) or the DR control (S707) is performed, HP controller 108 performs system control (S704). Heat pump hot water supply/room heating system 1 then finishes the control.

HP controller 108 controls heat pump 101, three way valve 105, and element heater 109 in accordance with the information set with remote controller 110 and the information commanded by DR controller 6 during the DR preliminary control or the DR control. When DR controller 6 issues no command, HP controller 108 controls these units in accordance with the information set with remote controller 110. When DR controller 6 issues a command, HP controller 108 controls these units in accordance with the command from DR controller 6 rather than the information set with remote controller 110.

For example, when the hot water supply mode is commanded in the DR preliminary control in the present embodiment (S810), HP controller 108 switches three way valve 105 so that three way valve 105 is directed to hot water supply tank 103 regardless of the information set with remote controller 110. HP controller 108 then turns ON element heater 109 after the temperature of hot water stored in hot water supply tank 103 reaches or exceeds the preliminary HP heat storage temperature (i.e. 45°C) and until the temperature reaches or exceeds the supplied hot water set value (i.e. 46°C).

If the room heating mode is commanded as the operation mode and the upper limit value of 55°C is commanded as the room heating set value in the DR preliminary control, HP controller 108 switches three way valve 105 so that three way valve 105 is directed to room heating device 104. HP controller 108 also controls heat pump 101 so that the temperature of discharged hot water is adjusted to 55°C regardless of the information set with remote controller 110.

Heat pump hot water supply/room heating system 1 according to the second embodiment then finishes the control.

### Advantages of second embodiment

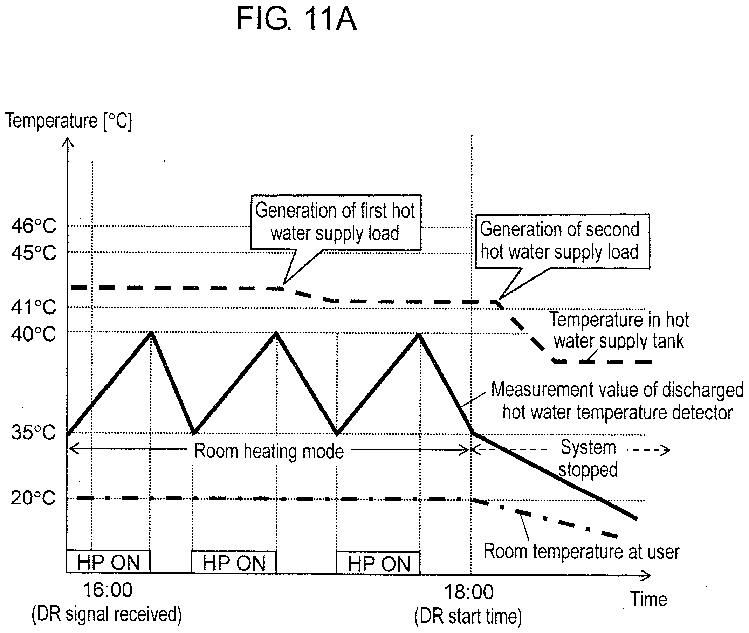

Advantages of the second embodiment are described with reference to FIGS. 11A to 12. Initially described with reference to FIGS. 11A to 11C is exemplary operation in the case where DR controller 6 does not perform the DR preliminary control but performs only the DR control.

FIG. 11A is a graph exemplifying temperature variation when the temperature of hot water in hot water supply tank 103 is not lower than the threshold for switching to the hot water supply mode in the DR preliminary period. In this example, the DR signal is received at 16:00 and the DR start time is 18:00. In the DR preliminary period from 16:00 to 18:00, the temperature of hot water in hot water supply tank 103 is not less than 41°C as the threshold for switching to the hot water supply mode.

More specifically, the temperature of hot water.stored in hot water supply tank 103 is low at 16:00. Even when a first hot water supply load is generated, the temperature of hot water in hot water supply tank 103 is not less than 41°C. The DR period starts at 18:00 in the state where the temperature of hot water in hot water supply tank 103 remains low. Due to a second hot water supply load generated in the DR period, the temperature is less than 41°C at which heating of hot water supply tank 103 would be started if the present time were not in the DR period. Shortage of hot water occurs substantially and the user cannot use hot water at a sufficient temperature in this case.

In the example of FIG. 11A, operation is performed constantly in the room heating mode in the DR preliminary period so that heat is supplied from heat pump 101 to room heating device 104. The temperature is thus kept at 20°C as the room temperature set value set by the user. In this case, the room temperature is kept constant while supply of hot water is sacrificed.

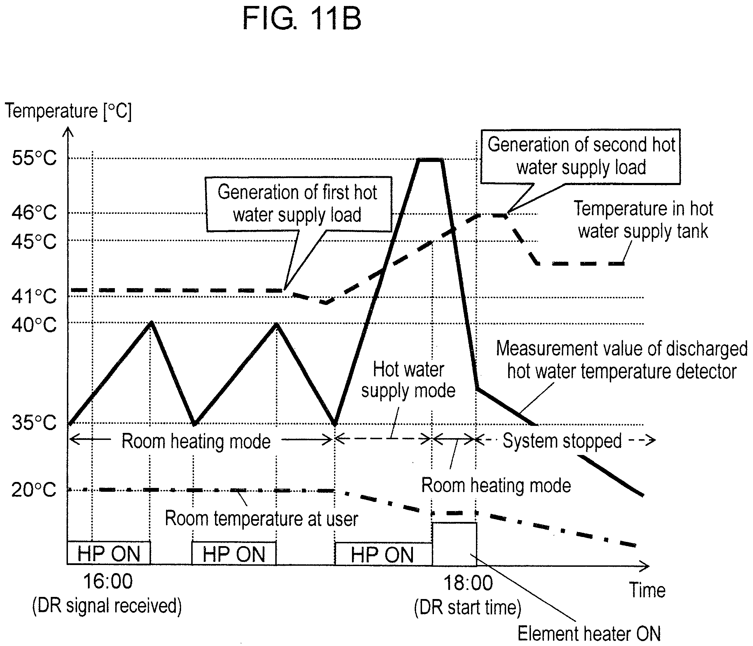

FIG. 11B is a graph exemplifying temperature variation when the temperature of hot water in hot water supply tank 103 is less than 41°C and hot water in hot water supply tank 103 is heated at or after the middle of the DR preliminary period. In this example, when a first hot water supply load is generated, the temperature of hot water in hot water supply tank 103 becomes less than 41°C and operation of the hot water supply mode is started. The temperature of hot water in hot water supply tank 103 is thus kept at 46°C as the supplied hot water set value at the DR start time of 18:00. Even when a second hot water supply load is generated in the DR period, the user can use hot water at a sufficient temperature corresponding to the supplied hot water set value.

In the example of FIG. 11B, heat of heat pump 101 is used for heating hot water supply tank 103 before the DR start time of 18:00, so that the room temperature is decreased. The room heating mode is started after the hot water supply mode is finished. Room heating device 104 is thus supplied with heat of a certain quantity. There is, however, no sufficient period for the room temperature to be recovered by operation in the normal room heating mode. The room temperature thus remains low at 18:00 and comfort is affected because the room temperature is decreased remarkably in the DR period. In this case, the temperature of hot water is kept constant while the room temperature is sacrificed.

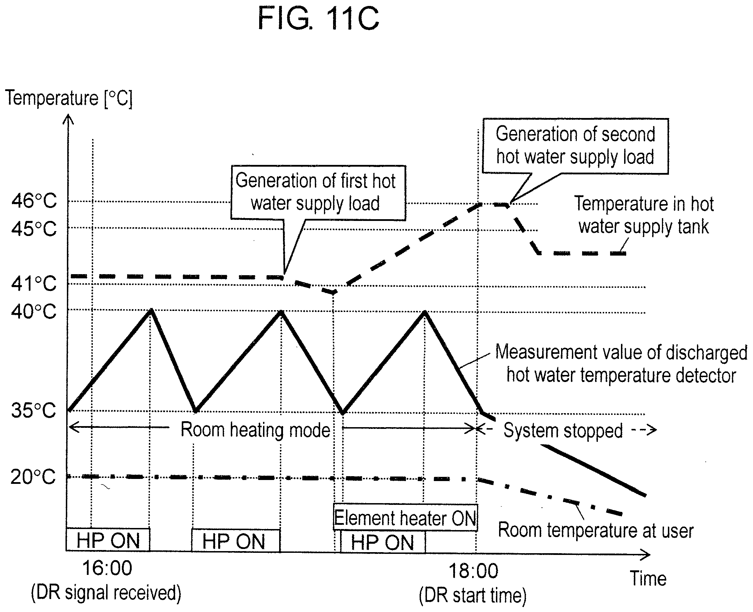

FIG. 11C is a graph exemplifying temperature variation when hot water supply tank 103 is heated only by element heater 109 in the DR preliminary period. In the example of FIG. 11C, hot water supply tank 103 is heated only by element heater 109 in the DR preliminary period not in accordance with the DR preliminary control indicated in FIGS. 10A and 10B.

More specifically, in the example of FIG. 11C, a first hot water supply load is generated at or after the middle of the DR preliminary period similarly to the example of FIG. 11B. The temperature of hot water stored in hot water supply tank 103 becomes thus less than 41°C. Hot water in hot water supply tank 103 is heated only by element heater 109 in this case. The temperature of hot water in hot water supply tank 103 is thus kept at 46°C as the supplied hot water set value at the DR start time of 18:00. Even when a second hot water supply load is generated in the DR period, the user can use hot water at sufficient temperature corresponding to the supplied hot water set value.

In the example of FIG. 11C, operation is performed constantly in the room heating mode in the DR preliminary period so that heat is supplied from heat pump 101 to room heating device 104. The temperature is thus kept at 20°C as the room temperature set value set by the user. In other words, the temperature of hot water and the room temperature are kept constant in this case.

In comparison to the examples of FIGS. 11A and 11B, however, element heater 109 of low efficiency is used for heating hot water supply tank 103 in the example of FIG. 11C and more electric power is consumed. Accordingly, this method is not economical.

As in the examples of FIGS. 11A to 11C, when the DR preliminary control of FIGS. 10A and 10B is not performed, it is difficult to properly keep both the room temperature and the hot water supply temperature at the DR start time. When element heater 109 is used for keeping both the room temperature and the hot water supply temperature, more electric power is consumed.

Described next with reference to FIG. 12 is exemplary operation of the DR preliminary control of FIGS. 10A and 10B. In the example of FIG. 12, operation is initially performed in the hot water supply mode after start of the DR preliminary period. More specifically, hot water supply tank 103 is heated with heat of heat pump 101. Thereafter, in accordance with the supplied hot water set value, hot water supply tank 103 is appropriately heated by element heater 109 to reach the supplied hot water set value. Hot water supply tank 103 is thus heated once to reach the supplied hot water set value.

After completion of heating hot water supply tank 103, the room heating mode is commanded as the operation mode and 55°C is commanded as the room heating set value. Room heating device 104 thus radiates heat. In this case, room heating device 104 radiates heat of temperature higher than the normal temperature of 40°C. The room temperature is accordingly recovered quickly. Thereafter, when the room temperature is recovered to approach the room temperature set value, room heating device 104 radiates less heat and the temperature of discharged hot water is increased. Heat pump 101 is thus stopped. Room heating device 104 then operates room heating in accordance with the room heating set value set with remote controller 110.

As described above, in the example of FIG. 12, heat pump 101 heats hot water supply tank 103 so that the temperature of hot water supply tank 103 reaches the supplied hot water set value after start of the DR preliminary period. Use of element heater 109 is thus minimized and heat can be stored in hot water supply tank 103 before start of the DR period.

Room heating device 104 is not supplied with heat while hot water supply tank 103 is heated. The room temperature is accordingly decreased in this period. If room heating is performed in accordance with the normal room heating set value after hot water supply tank 103 is heated, the room temperature is recovered moderately, so that the room temperature may not reach the room heating set value at the DR start time. In contrast, in the example of FIG. 12, room heating is performed using discharged hot water of temperature higher than the normal room heating set value set with remote controller 110. The room temperature is thus recovered more quickly than the normal case, and the room temperature is highly possibly recovered at the DR start time.

Heat pump 101 has a typical property that heating efficiency deteriorates as a temperature of discharged hot water is higher. If recovery of the room temperature is not detected and room heating is performed continuously with the high room heating set value, more electric power is consumed. DR controller 6, however, detects that the room temperature has recovered to the room temperature set value on the basis of the fact that heat pump 101 is stopped due to increase in temperature of discharged hot water. Room heating is then performed in the normal operation mode to keep the room temperature. In this case, deterioration in efficiency of heat pump 101 is suppressed after recovery of the room temperature.

Hot water supply tank 103 is thermally insulated by a heat insulating material in many cases, so that heat is difficult to be dissipated from hot water supply tank 103. When a hot water supply load is generated after storage of heat, the temperature is decreased to be less than the supplied hot water set value. The temperature is, however, decreased only slightly by radiation of heat. In contrast, a relatively large quantity of heat is released from air in the room heated by room heating device 104 due to radiation of heat through windows, ventilations, and the like. Initially heated in the present embodiment is hot water supply tank 103 that radiates less heat. The room is then heated by room heating device 104 until the DR start time. Sufficient heat is kept in both the room and hot water supply tank 103 at the DR start time.

As described above, it is possible to keep sufficient heat in a room and hot water supply tank 103 by the DR start time with small electric power consumption in accordance with the method of controlling heat pump hot water supply/room heating device 100 according to the second embodiment.

### Supplementary description of second embodiment

The DR preliminary period according to the second embodiment corresponds to the preparatory period according to the first embodiment. Specifically, the operation mode indicated in FIG. 12 exemplifies the preparatory operation mode. The DR preliminary control is not performed before the DR preliminary period. More specifically, the operation mode indicated in FIGS. 8, 10A, and 10B exemplifies the normal operation mode.

Room heating device 104 according to the present embodiment is provided with the valve for adjusting a room temperature to a room temperature set value. However, the configuration for adjusting the room temperature is not particularly limited to the above. For example, room heating device 104 may be provided with no valve. Room heating device 104 can have a function of detecting that the temperature reaches the room temperature set value with a thermostat provided in room heating device 104 and of directly stopping heat pump 101.

DR controller 6 according to the present embodiment determines whether or not heat pump 101 is stopped in order to detect whether or not the room temperature has recovered. However, the method of detecting recovery of the room temperature is not particularly limited to the above. DR controller 6 can obtain a value of a room thermometer in order to determine recovery of the room temperature.

DR controller 6 according to the present embodiment increases the room heating set value and increases the quantity of heat radiated from room heating device 104 in order to recover the room temperature. However, the method of recovering the room temperature is not particularly limited to the above. For example, DR controller 6 can keep the room heating set value unchanged and increase the flow rate of the water pump so as to increase the quantity of heat radiated from room heating device 104.

DR controller 6 according to the present embodiment stores heat until the temperature of hot water in hot water supply tank 103 reaches or exceeds the preliminary HP heat storage temperature at start of the DR preliminary period. The heat storage method is not particularly limited to the above. For example, operation can be performed constantly in the room heating mode from one hour before the DR start time and operation can be performed in the hot water supply mode prior to the operation in the room heating mode so that hot water supply tank 103 stores heat as much as possible. In other words, DR controller 6 can determine durations of operation periods in the respective modes, instead of the temperature of hot water in hot water supply tank 103.

In the present embodiment, heat is stored continuously until the temperature of hot water in hot water supply tank 103 reaches or exceeds the preliminary HP heat storage temperature for the first time after start of the DR preliminary period. However, the heat storage method is not particularly limited to the above.

For example, heat pump hot water supply/room heating system 1 can operate in the room heating mode for 15 minutes at the timing when the temperature of hot water stored in hot water supply tank 103 is increased by 1°C in the hot water supply mode, and can be switched again to the hot water supply mode. Heat pump hot water supply/room heating system 1 can then similarly operate in the room heating mode for 15 minutes at the timing when the temperature of hot water stored in hot water supply tank 103 is increased by 1°C. In this manner, heat pump hot water supply/room heating system 1 can be alternately switched between the hot water supply mode and the room heating mode.

This method shortens each continuous period in which no heat is supplied to room heating device 104, so that the minimum room temperature is increased in the DR preliminary period and comfort is improved.

Heat pump hot water supply/room heating system 1 according to the present embodiment operates in the room heating mode until the DR start time after completion of storage of heat into hot water supply tank 103. However, the operation method is not particularly limited to the above. For example, heat pump hot water supply/room heating system 1 can be switched again to the hot water supply mode when the temperature of hot water in hot water supply tank 103 is less than the supplied hot water set value by 2°C.

The system can be operated in the hot water supply mode under the DR preliminary control even in a state where the system is operated in the room heating mode by normal control. This operation keeps duration of the period in the hot water supply mode more reliably. This operation can be performed by changing the threshold temperature for switching between the hot water supply mode and the room heating mode. This operation can be alternatively performed by changing time intervals for switching between the hot water supply mode and the room heating mode. This operation can be still alternatively performed by switching the operation mode from the room heating mode to the hot water supply mode at start of the DR preliminary period.

### THIRD EXEMPLARY EMBODIMENT

Described below is an outlined method of controlling a heat pump hot water supply/room heating system according to the third embodiment. The third embodiment is a modified example of the second embodiment.

Heat pump hot water supply/room heating system 1 according to the second embodiment initially heats hot water supply tank 103 and then supplies room heating device 104 with heat at a high temperature. Heat pump hot water supply/room heating system 1 quickly recovers the room temperature that is decreased while hot water supply tank 103 is heated. Heat pump hot water supply/room heating system 1 is thus capable of keeping sufficient heat in both of the room and hot water supply tank 103 before the DR start time with small electric power consumption.

In the second embodiment, heat pump hot water supply/room heating system 1 is capable of keeping sufficient heat if the DR preliminary period is sufficiently long. However, heat pump hot water supply/room heating system 1 can have difficulties to keep sufficient heat if the DR preliminary period is short.

For example, when heat pump hot water supply/room heating system 1 receives the DR signal 30 minutes before the DR start time, the DR preliminary period lasts for 30 minutes. Assume that 20 minutes is required for heating hot water supply tank 103. In this case, there is only 10 minutes left until the DR start time, for supplying heat to room heating device 104. Accordingly, at the DR start time, the room temperature is low though sufficient heat is kept in hot water supply tank 103.

Heat pump hot water supply/room heating system 1 according to the third embodiment estimates a period for recovery of the room temperature in accordance with a period for heating hot water supply tank 103. Heat pump hot water supply/room heating system 1 heats hot water supply tank 103 using heat pump 101 in such a manner that enough time remains for recovery of the room temperature in the DR preliminary period. Heat pump hot water supply/room heating system 1 then heats hot water supply tank 103 using element heater 109 while warming the room with heat of heat pump 101. The flow of the method of controlling heat pump hot water supply/room heating system 1 is similar to the flow of FIG. 9. Such similarities to the features of the second embodiment are not detailed repeatedly but differences are described mainly.

### Configuration according to third embodiment

The third embodiment uses heat pump hot water supply/room heating device 100 shown in FIG. 4 and the like, while the third embodiment is different from the second embodiment in the DR preliminary control by DR controller 6. Such differences are described below.

Described below is the DR preliminary control performed by DR controller 6. DR controller 6 performs the DR preliminary control in the DR preliminary period.

Similarly to the second embodiment, DR controller 6 initially calculates a preliminary heat storage temperature and a preliminary HP heat storage temperature. Each of the preliminary heat storage temperature and the preliminary HP heat storage temperature is target temperature of hot water in hot water supply tank 103. The preliminary HP heat storage temperature is the target temperature that is reached by using. The preliminary heat storage temperature is the target temperature that is reached without using heat pump 101.

DR controller 6 then calculates a period required until the temperature of hot water in hot water supply tank 103 reaches the preliminary HP heat storage temperature by using heat of heat pump 101 (i.e. the period in the hot water supply mode). Heat of heat pump 101 is not supplied to room heating device 104 in the period in the hot water supply mode. The room temperature is accordingly decreased in the period in the hot water supply mode.

DR controller 6 then calculates a period in the room heating mode required for recovering, by using the room heating set value of 55°C, the room temperature that is decreased in the period in the hot water supply mode.

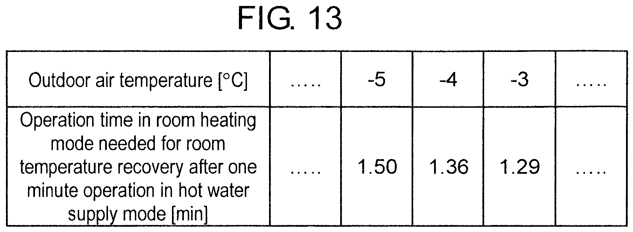

DR controller 6 holds relationship information indicating relationship between an estimation period in the hot water supply mode and an estimation period in the room heating mode. The estimation period in the room heating mode is a period required for recovery of the room temperature that is decreased in the estimation period in the hot water supply mode. The relationship information is, for example, information detailed in FIG. 13. The relationship information indicate a period (e.g. in minute) in the room heating mode required for room temperature recovery (with the room heating set value of 55°C) after oneminute operation in the hot water supply mode for each outdoor air temperature. The relationship information according to the present embodiment is preliminarily set in accordance with the values measured for ordinary users.

DR controller 6 calculates a period required for recovery of the room temperature in accordance with the relationship information indicated in FIG. 13. If the DR preliminary period is more than a sum of a period required for preliminary storage of heat in hot water supply tank 103 and a period required for recovery of the room temperature, DR controller 6 issues HP controller 108 with a command similarly to the second exemplary embodiment.

If the DR preliminary period is less than the sum of the period required for preliminary storage of heat in hot water supply tank 103 and the period required for recovery of the room temperature, DR controller 6 calculates a hot water heating period for heating hot water supply tank 103 with heat pump 101 in such a manner that enough time remains for recovery of the room temperature in the DR preliminary period. DR controller 6 issues HP controller 108 with a command of the hot water supply mode as the operation mode in the hot water heating period. After the hot water heating period is finished, DR controller 6 issues HP controller 108 with a command of the room heating mode as the operation mode and 55°C, which is the upper limit, as the room heating set value.

### Operation according to third embodiment

Described next is a method of controlling heat pump hot water supply/room heating system 1 according to the third embodiment. Similarly to the operation of FIG. 9 according to the second embodiment, DR controller 6 periodically determines whether or not a DR signal have been received. After receipt of the DR signal, if the current time is included in the DR preliminary period, DR controller 6 performs DR preliminary control of the present embodiment. If the current time is included in the DR period, DR controller 6 performs the DR control.

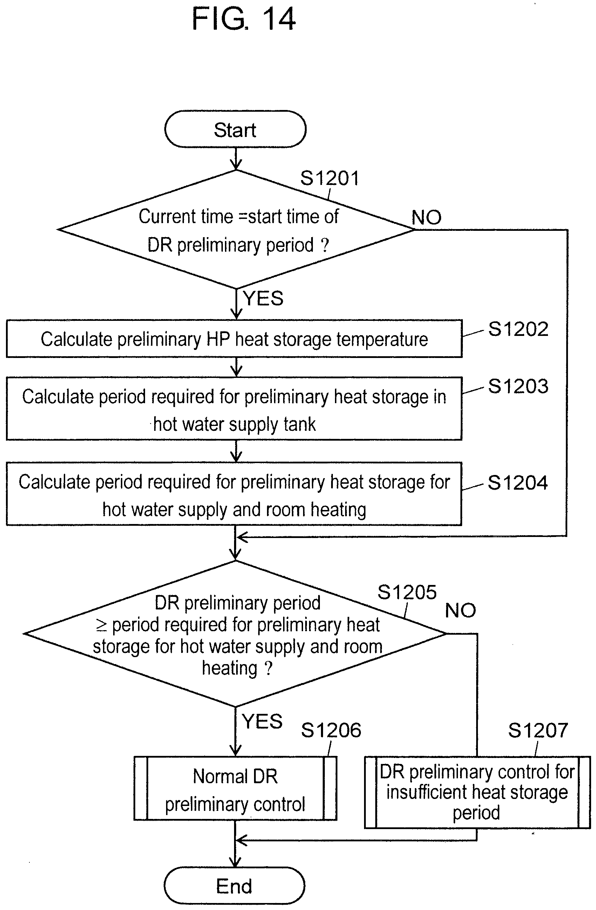

The third embodiment is different from the second embodiment in the DR preliminary control, and only differences therebetween are described below. FIG. 14 is a flowchart illustrating the DR preliminary control (S706) according to the third embodiment.

After start of the DR preliminary control (S706), DR controller 6 initially determines whether or not the current time coincides with start time of the DR preliminary period (S1201).

If the current time coincides with start time of the DR preliminary period (YES in S1201), DR controller 6 calculates preliminary HP heat storage temperature (S1202). This step is similar to calculation of preliminary HP heat storage temperature in the second embodiment (S803 in FIG. 10A).

DR controller 6 then calculates a period required for preliminary storage of heat in hot water supply tank 103 (S1203). For example, DR controller 6 calculates a difference between the preliminary HP heat storage temperature and a current temperature of hot water in hot water supply tank 103. DR controller 6 holds, as preset information, information indicating a temperature increase degree per minute of hot water in hot water supply tank 103 heated by heat pump 101.

DR controller 6 calculates division of the difference between the preliminary HP heat storage temperature and the current temperature of hot water in hot water supply tank 103 by the temperature increase degree. DR controller 6 thus calculates a period in the hot water supply mode required for heating hot water in hot water supply tank 103 until the temperature of hot water reaches the preliminary HP heat storage temperature. For example, when the preliminary HP heat storage temperature is 45°C, the current temperature of hot water in hot water supply tank 103 is 42°C, and the temperature increase degree is 0.1°C, the period in the hot water supply mode required for heating hot water until the temperature of hot water reaches the preliminary HP heat storage temperature is calculated to be 30 minutes.

DR controller 6 then calculates a period required for preliminary heat storage for hot water supply and room heating (S1204). DR controller 6 holds the relationship information as indicated in FIG. 13. DR controller 6 refers to this relationship information and calculates a period required for recovery of room temperature after operation in the hot water supply mode for one minute in accordance with current outdoor air temperature detected by outdoor air temperature detector 106.

DR controller 6 multiplies the (entire) period in the hot water supply mode until the temperature of hot water reaches the preliminary HP heat storage temperature and the period required for recovery of room temperature after one-minute operation in the hot water supply mode. Thereby, DR controller 6 calculates the (entire) period required for recovery of room temperature after the (entire) period in the hot water supply mode. DR controller 6 calculates a sum of the (entire) period in the hot water supply mode until the temperature of hot water reaches the preliminary HP heat storage temperature and the (entire) period required for recovery of room temperature. The sum of periods is calculated as the period required for preliminary heat storage for hot water supply and room heating. The subsequent step (S1205) is then executed.

For example, if outdoor air temperature is -5°C and the period in the hot water supply mode until the temperature of hot water reaches the preliminary HP heat storage temperature is 30 minutes, DR controller 6 calculates a period required for preliminary heat storage for hot water supply and room heating. More specifically, DR controller 6 specifies 1.50 minutes as the period required for recovery of room temperature after operation in the hot water supply mode for one minute in accordance with the relationship information indicated in FIG. 13. DR controller 6 thus obtains 45 minutes by calculating the period required for recovery of room temperature after operation in the hot water supply mode for 30 minutes. DR controller 6 then obtains 75 minutes by calculating the period required for preliminary heat storage for hot water supply and room heating.

If the current time does not coincide with start time of the DR preliminary period (NO in S1201) or after the period required for preliminary heat storage for hot water supply and room heating is calculated (S1204), DR controller 6 determines whether or not the DR preliminary period is not less than the period required for preliminary heat storage for hot water supply and room heating (S1205). If the DR preliminary period is not less than the period required for preliminary heat storage for hot water supply and room heating (YES in S1205), DR controller 6 performs the normal DR preliminary control (S1206).

The normal DR preliminary control is similar to the DR preliminary control according to the second embodiment. DR controller 6 performs control in accordance with the flowcharts indicated in FIGS. 10A and 10B. DR controller 6 then finishes the normal DR preliminary control. Assume that the DR preliminary period is 120 minutes and the period required for preliminary heat storage for hot water supply and room heating is 75 minutes. Even when the DR preliminary control is performed similarly to the DR preliminary control according to the second embodiment, there is a sufficient period for recovery of the room temperature after heating hot water supply tank 103. DR controller 6 thus performs the DR preliminary control similar to the DR preliminary control according to the second embodiment.

If the DR preliminary period is less than the period required for preliminary heat storage for hot water supply and room heating (NO in S1205), DR controller 6 performs the DR preliminary control for an insufficient heat storage period (S1207).

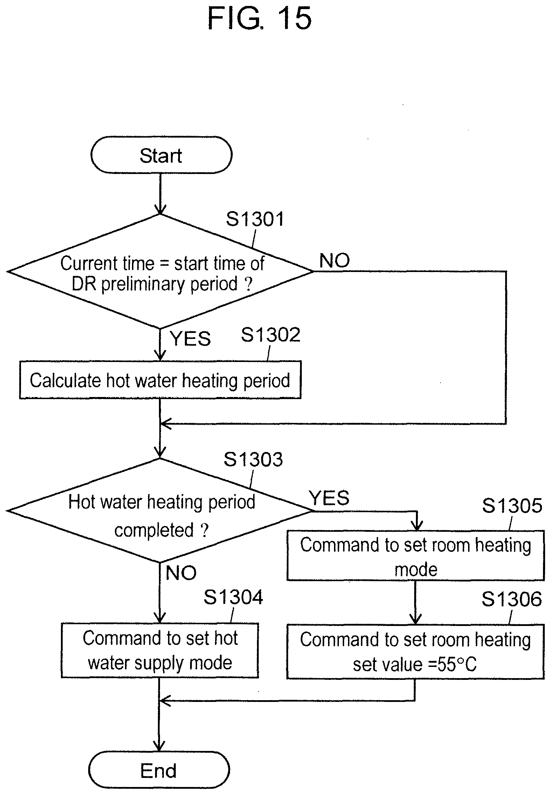

Described next is the detailed DR preliminary control for an insufficient heat storage period (S1207) with reference to FIG. 15. DR controller 6 initially determines whether or not the current time coincides with start time of the DR preliminary period in the DR preliminary control for an insufficient heat storage period (S1301).

If the current time coincides with start time of the DR preliminary period (YES in S1301), DR controller 6 calculates a hot water heating period (S1302). In this case, DR controller 6 refers to the relationship information in FIG. 13 and determines a period required for recovery of the room temperature that is decreased after one-minute operation in the hot water supply mode in accordance with a current outdoor air temperature detected by outdoor air temperature detector 106. DR controller 6 then calculates a hot water heating period in accordance with the determined period.

For example, DR controller 6 calculates division of the DR preliminary period by a value obtained by adding one (which represents the period in the hot water supply mode) to the period required for recovery of room temperature that is decreased after operation in the hot water supply mode for one minute. DR controller 6 calculates a value obtained by the division as the hot water heating period. The subsequent step (S1303) is then executed.

The hot water heating period is an upper limit period with which operation is performed in the hot water supply mode in the DR preliminary period and with which the room temperature can be recovered in the remaining period. For example, if outdoor air temperature is -5°C and the DR preliminary period is 60 minutes, the period required for recovery of the room temperature after operation in the hot water supply mode for one minute is 1.50 minutes. DR controller 6 thus adds 1 to 1.50 and divides 60 by the addition product of 2.5 to obtain 24 (minutes).

This calculation result means that the room temperature is recovered by operation in the room heating mode for 36 minutes after operation in the hot water supply mode for 24 minutes. This calculation result also means that the room temperature is not recovered in the DR preliminary period of 60 minutes if operation is performed in the hot water supply mode for more than 24 minutes.

If the current time does not coincide with start time of the DR preliminary period (NO in S1301) or after the hot water heating period is calculated (S1302), DR controller 6 determines whether or not the hot water heating period is completed (S1303).

If the hot water heating period is not completed (NO in S1303), DR controller 6 issues HP controller 108 with a command of the hot water supply mode as the operation mode (S1304). DR controller 6 also measures operation time in the hot water supply mode and calculate a sum of the time to use the measured and calculated time for determination of whether or not the hot water heating period is completed (S1303). For example, if the hot water heating period is 24 minutes, a command of operation in the hot water supply mode for 24 minutes from start of the DR preliminary period (S1304) is issued. DR controller 6 then finishes the DR preliminary control for an insufficient heat storage period.

When the hot water heating period is completed (YES in S1303), DR controller 6 issues HP controller 108 with a command of the room heating mode as the operation mode (S1305). DR controller 6 subsequently issues HP controller 108 with a command of 55°C as the room heating set value regardless of outdoor air temperature (S1306). DR controller 6 then finishes the DR preliminary control for an insufficient heat storage period.

HP controller 108 turns ON element heater 109 after finish of the hot water supply mode and until the temperature of hot water in hot water supply tank 103 reaches the preliminary heat storage temperature. When a command of the room heating mode (S1305) is issued initially, HP controller 108 turns ON element heater 109 in accordance with the temperature of hot water in hot water supply tank 103 and the preliminary heat storage temperature. DR controller 6 can transmit, to HP controller 108, a command of turning ON element heater 109.

The DR preliminary control for an insufficient heat storage period (S1207) is performed through the above steps. The room temperature is thus recovered.

### Advanteges of third embodiment

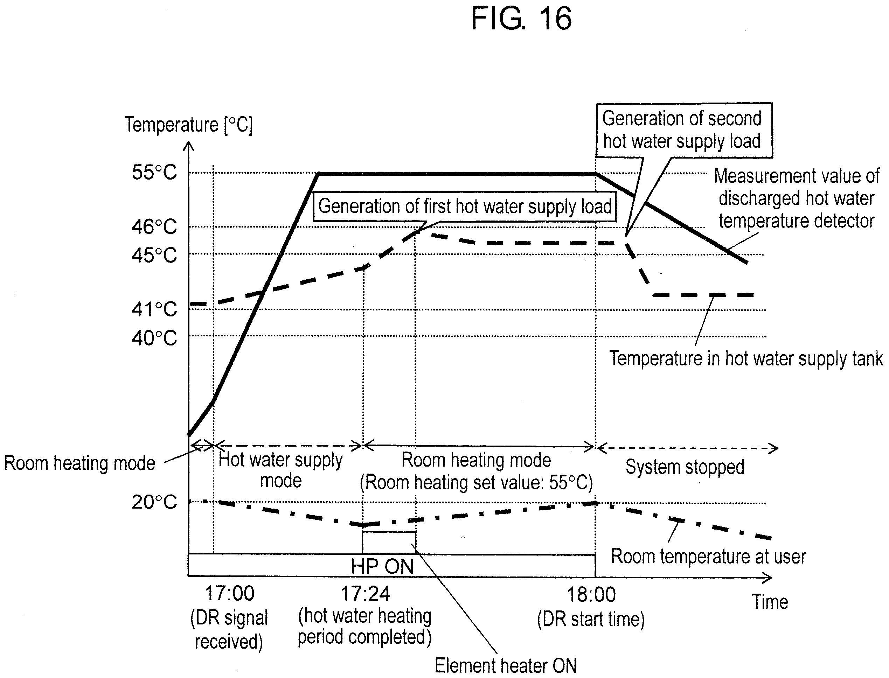

Advanteges of the third embodiment are described with reference to FIG. 16. FIG. 16 is a graph exemplifying temperature variation according to the third embodiment. In this example, a DR signal is received at 17:00 and a DR preliminary period lasts from 17:00 to 18:00.

At start of the DR preliminary period, DR controller 6 initially calculates a period required for preliminary heat storage for hot water supply and room heating. If outdoor air temperature is -5°C and it takes 30 minutes in the hot water supply mode to heat until the temperature of hot water reaches the preliminary HP heat storage temperature, it takes 75 minutes for preliminary heat storage for hot water supply and room heating. The DR preliminary control for an insufficient heat storage period is thus performed.

In this case, the hot water heating period calculated by DR controller 6 is 24 minutes. Hot water supply tank 103 is thus heated in the hot water supply mode until 17:24 when the hot water heating period is completed. At completion of the hot water heating period, the temperature of hot water stored in hot water supply tank 103 is less than 45°C. It is possible to store more heat with use of heat pump 101 in this case, but the operation mode is switched to the room heating mode. Element heater 109 is turned ON and hot water supply tank 103 is heated so that the temperature of hot water reaches the preliminary heat storage temperature.

After completion of the hot water heating period, heat pump 101 supplies heat to room heating device 104 in accordance with the room heating set value of 55°C and the room heating mode as the operation mode. Thus, the room temperature decreased in the hot water heating period is recovered by the DR start time.

DR controller 6 according to the present embodiment determines, at start of the DR preliminary period, whether or not the decreased room temperature can be recovered by the DR start time, whereas heat pump 101 heats hot water supply tank 103 so that the temperature of hot water reaches the preliminary HP heat storage temperature. If it is determined that the room temperature can be recovered, similarly to the second embodiment, DR controller 6 can store heat in hot water supply tank 103 while minimizing use of element heater 109 and recover the room temperature by the DR start time.

If it is determined that the room temperature decreased while the temperature of hot water increases to reach the preliminary HP heat storage temperature cannot be recovered, DR controller 6 calculates a hot water heating period, as the upper limit period in the hot water supply mode, with which the room temperature can be recovered by the DR start time. DR controller 6 is capable of calculating a hot water heating period in accordance with the relationship between the period in the hot water supply mode and the period required for recovery of the room temperature that is decreased in the period in the hot water supply mode.

DR controller 6 causes heat pump 101 to heat hot water supply tank 103 in the hot water heating period and then causes element heater 109 to heat hot water supply tank 103 so that the temperature of hot water reaches the preliminary heat storage temperature. Element heater 109 is thus used for a longer period in comparison to the case in the second embodiment, but DR controller 6 is capable of recovering the room temperature by the DR start time.

As described above, it is possible to keep sufficient heat in the room and in hot water supply tank 103 by the DR start time while electric power consumption is suppressed depending on the length of the DR preliminary period in the control method according to the third embodiment.

### Supplementary description of third embodiment

In the present embodiment, DR controller 6 holds the relationship information indicating relationship between the period in the hot water supply mode and the period required for recovery, with the room heating set value of 55°C, of the room temperature that is decreased in the period in the hot water supply mode. However, the held relationship information is not particularly limited to the above. For example, DR controller 6 can hold relationship information, for each of a plurality of room heating set values from 40°C by every 5°C, indicating relationship between the period in the hot water supply mode and the period in the room heating mode required for recovery of the room temperature that is decreased in the period in the hot water supply mode.

If it is possible to heat hot water supply tank 103 so that the temperature of hot water reaches the preliminary HP heat storage temperature and recover the room temperature in the DR preliminary period, DR controller 6 can select the minimum room heating set value that enables recovery of the room temperature.

For example, as the temperature of hot water in hot water supply tank 103 is higher at start of the DR preliminary period, the period required for heating hot water supply tank 103 can be shorter. As the temperature of hot water in hot water supply tank 103 is higher, DR controller 6 thus shortens the period in the hot water supply mode, extends the period in the room heating mode, and decreases the room heating set value. Efficiency is thus improved by the typical properties of heat pump 101 and preliminary heat storage can be performed with less electric power consumption.

In the above control, as the temperature of hot water in hot water supply tank 103 is lower at start of the DR preliminary period, the period in the hot water supply mode is longer and the period in the room heating mode is shorter. DR controller 6 can accordingly increase the room heating set value as the temperature of hot water in hot water supply tank 103 is lower. DR controller 6 is thus capable of recovering the room temperature in the DR preliminary period.

In the present embodiment, heat pump 101 initially heats hot water supply tank 103 after start of the DR preliminary period. Room heating device 104 is then supplied with heat after finish of the hot water heating period. However, the control method is not particularly limited to the above. The total hot water heating period can be divided into a plurality of periods so that operation in the hot water supply mode and operation in the room heating mode are performed repeatedly.

For example, when the DR preliminary period is 60 minutes and the hot water heating period is 24 minutes, operation in the hot water supply mode for 12 minutes and subsequent operation in the room heating mode for 18 minutes can be repeated for two times after start of the DR preliminary period. In this manner, operation in the hot water supply mode and operation in the room heating mode are performed alternately. This method shortens a continuous period during which room heating device 104 is not supplied with heat. In this case, the minimum room temperature in the DR preliminary period is increased, which improves comfort.

In the method of performing alternately operation in the hot water supply mode and operation in the room heating mode as described above, DR controller 6 can adopt a condition for stopping heat pump 101 in the room heating mode in order to determine switching from the room heating mode to the hot water supply mode. In this method, operation is switched to the hot water supply mode only when the room temperature is not less than a certain value. The minimum room temperature in the DR preliminary period is thus increased further, so that comfort is further improved.

In the present embodiment, DR controller 6 preliminarily holds the relationship information as in FIG. 13 indicating relationship between the period in the hot water supply mode and the period required for recovery of the room temperature that is decreased in the period in the hot water supply mode. The method referring to the relationship between the period in the hot water supply mode and the period required for recovery of the room temperature that is decreased in the period in the hot water supply mode is not particularly limited to the above.

For example, this relationship varies for each user. DR controller 6 can learn a period of actual operation in the hot water supply mode and a subsequent period required for recovery of the room temperature in the room heating mode for each user. In accordance with these periods, DR controller 6 can calculate relationship between the period in the hot water supply mode and the period required for recovery of the room temperature that is decreased in the period in the hot water supply mode.

### FOURTH EXEMPLARY EMBODIMENT

Described below is an outlined method of controlling a heat pump hot water supply/room heating system according to the fourth embodiment. The fourth embodiment is a modification of the second embodiment.

Heat pump hot water supply/room heating system 1 according to the third embodiment estimates the period during which room heating device 104 is heated for recovery of the room temperature, relatively to the period for heating hot water supply tank 103 for an ordinary user. The operation periods in the respective modes are determined in accordance with this estimation. It is thus possible to keep sufficient heat in the room and in hot water supply tank 103 by the DR start time while electric power consumption is suppressed in accordance with the length of the DR preliminary period.

It may be difficult in some cases to operate such that sufficient heat is kept in both the room and in hot water supply tank 103.

For example, if room heating device 104 has room heating capacity smaller than capacity of a room heating device of an ordinary user, the period for heating the room may be insufficient relatively to the period for heating hot water supply tank 103 and heat cannot be kept in both the room and in hot water supply tank 103 at the DR start time.

In order to avoid such inconvenience, it may be possible to learn a period for heating room heating device 104 in order to recover the room temperature relative to the period for heating hot water supply tank 103 in the third embodiment on the basis of past operation records of heat pump 101 and to operate in accordance with this estimation. However, if the user changes setting of the valve for adjusting room temperature in room heating device 104, the past operation records do not correspond to future operation and estimation based on the past operation records does not fit the actual situation in the future. In this case, even when only one of the room and hot water supply tank 103 is capable of keeping sufficient heat at the DR start time, heat may not properly be kept in both the room and in hot water supply tank 103.

The heat pump hot water supply/room heating system according to the fourth embodiment is provided with a room temperature sensor for measuring a room temperature to obtain a room temperature set value. The heat pump hot water supply/room heating system according to the present embodiment performs switching so that hot water supply tank 103 is heated by heat pump 101 if the room temperature measured by the room temperature sensor is sufficient relatively to the room temperature set value and the room is heated by heat pump 101 with water hotter than normal hot water if the room temperature is decreased by at least a certain degree. The flow of the method of controlling the heat pump hot water supply/room heating system according to the present embodiment is similar to the flow according to the second embodiment in FIG. 9 except for the DR preliminary control. Such similarities to the features of the second embodiment are not detailed repeatedly but differences are described mainly.

### Configuration according to fourth embodiment

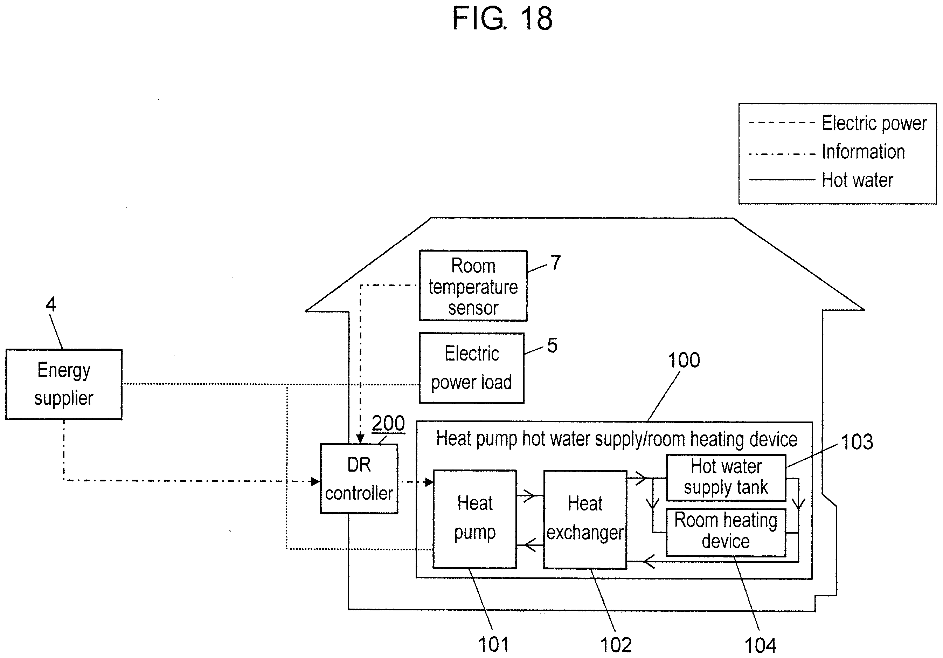

FIG. 18 is a diagram showing configurations of a heat pump system and a heat pump system control device according to the fourth embodiment. Those constituent elements same as the constituent elements according to the second embodiment are denoted by the reference signs same as the reference signs in FIG. 4 and are not described in detail, and different constituent elements are described below. The heat pump hot water supply/room heating system according to the fourth embodiment includes, in place of DR controller 6 according to the second embodiment, DR controller 200 for performing DR preliminary control different from the DR preliminary control according to the second embodiment. The heat pump hot water supply/room heating system according to the fourth embodiment further includes room temperature sensor 7.

Room temperature sensor 7 measures a room temperature and transmits the current room temperature to DR controller 200. Room temperature sensor 7 has a function of setting a value of a room temperature desired by the user as a room temperature set value, and transmits the current room temperature set value to DR controller 200. In the present embodiment, assume that the user sets the room temperature set value to 20°C.

Described below is the DR preliminary control performed by DR controller 200. DR controller 200 performs the DR preliminary control in the DR preliminary period.

Similarly to the second embodiment, DR controller 200 initially calculates preliminary heat storage temperature and preliminary HP heat storage temperature. Each of the preliminary heat storage temperature and the preliminary HP heat storage temperature is a target temperature of hot water stored in hot water supply tank 103. The preliminary HP heat storage temperature is a target temperature that is reached by using heat of heat pump 101. The preliminary heat storage temperature is a target temperature that is reached without using heat of heat pump 101.

DR controller 200 subsequently determines whether or not the temperature of hot water stored in hot water supply tank 103 is not less than the preliminary HP heat storage temperature. When the temperature of hot water stored in hot water supply tank 103 is less than the preliminary HP heat storage temperature, hot water supply tank 103 is heated by heat pump 101 if the room temperature obtained by room temperature sensor 7 is sufficient relatively to the room temperature set value. If the room temperature is decreased by a certain value while hot water supply tank 103 is heated by heat pump 101, DR controller 200 issues HP controller 108 with a command of the operation mode and the room heating set value so that the room is heated by heat pump 101 with hot water at the maximum temperature of 55°C. Thus, heat pump 101 alternately heats hot water supply tank 103 and the room while the room temperature is varied within a certain range. In the present embodiment, the room temperature is determined as sufficient if the room temperature is not less than a room temperature set value, whereas the room temperature is determined as "being decreased by a certain value" if the room temperature is decreased to be less than the room temperature set value by at least one degree.

DR controller 200 determines that the room temperature is sufficient if the temperature of hot water stored in hot water supply tank 103 is not less than the preliminary HP heat storage temperature.

When the room temperature is insufficient, DR controller 200 issues HP controller 108 with a command of the operation mode and the room heating set value so that the room is heated by heat pump 101 with hot water at the maximum temperature of 55°C.

DR controller 200 subsequently calculates element heater start time when it is necessary to start heating with element heater 109 so that the temperature of hot water stored in hot water supply tank 103 is increased to reach the preliminary heat storage temperature at the DR start time.

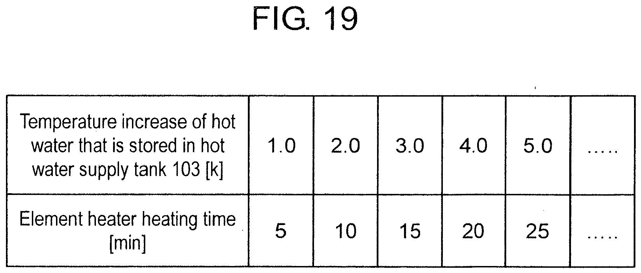

DR controller 200 holds relationship information indicating relationship between temperature increase of hot water stored in hot water supply tank 103 and the period for heating with element heater 109. For example, this relationship information includes information indicated in FIG. 19. The relationship information according to the present embodiment is preliminary set in accordance with values measured in tests.

DR controller 200 refers to the relationship information indicating relationship between temperature increase of hot water stored in hot water supply tank 103 and the period for heating with element heater 109 and calculates the element heater start time in accordance with a difference between the preliminary heat storage temperature and the current temperature of hot water stored in hot water supply tank 103.

DR controller 200 then determines whether or not the current time is at or after the element heater start time. If the current time is at or after the element heater start time, DR controller 200 determines that heat cannot be stored such that the temperature of hot water stored in hot water supply tank 103 reaches the preliminary heat storage temperature at the DR start time without heating with element heater 109, and issues HP controller 108 with a command of turning ON the element heater. If the current time is not at or after the element heater start time, DR controller 200 determines that heat can be stored such that the temperature of hot water stored in hot water supply tank 103 reaches the preliminary heat storage temperature without using the element heater, and issues HP controller 108 with a command of turning OFF the element heater.

### Operation according to fourth embodiment

Described next is a method of controlling heat pump hot water supply/room heating system 1 according to the fourth embodiment. Similarly to the operation in FIG. 9 according to the second embodiment, DR controller 200 periodically determines whether or not a DR signal have been received. If the current time is included in the DR preliminary period after receipt of the DR signal, DR controller 200 performs DR preliminary control of the present embodiment. If the current time is included in the DR period, DR controller 200 performs the DR control.

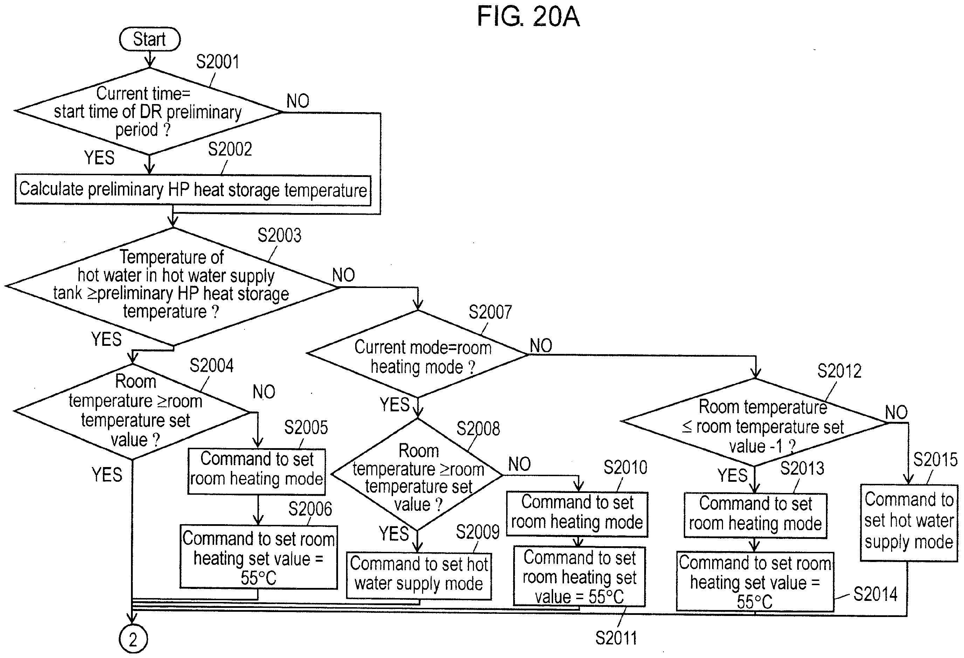

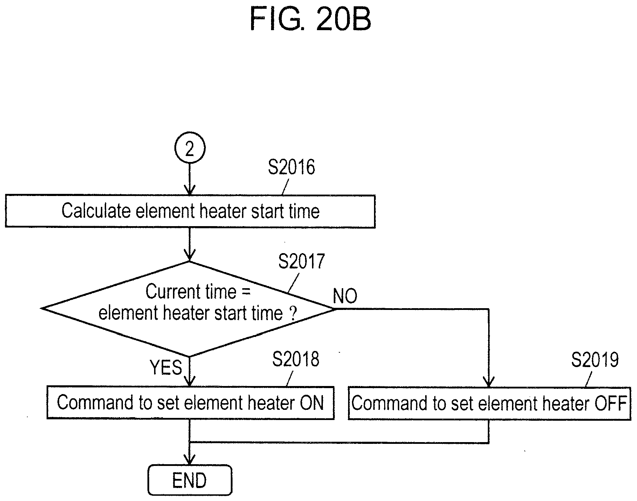

DR controller 200 according to the fourth embodiment performs, after step S702, the DR preliminary control indicated in FIGS. 20A and 20B instead of the DR preliminary control (S706) according to the second embodiment.

After start of the DR preliminary control, DR controller 200 initially determines whether or not the current time coincides with start time of the DR preliminary period (S2001).

If the current time coincides with start time of the DR preliminary period (YES in S2001), DR controller 200 calculates preliminary HP heat storage temperature (S2002). This step is similar to calculation of preliminary HP heat storage temperature in the second embodiment (S803 in FIG. 10A).

If the current time does not coincide with start time of the DR preliminary period (NO in S2001) or after the preliminary HP heat storage temperature is calculated (S2002), DR controller 200 determines whether or not the temperature of hot water in hot water supply tank 103 is not less than the preliminary HP heat storage temperature (S2003).

If the temperature of hot water in hot water supply tank 103 is not less than the preliminary HP heat storage temperature (YES in S2003), DR controller 200 determines whether or not the room temperature is not less than the room temperature set value (S2004). If the room temperature is not less than the room temperature set value (YES in S2004), DR controller 200 does not issue a command of the operation mode and the room heating set value. If the room temperature is less than the room temperature set value (NO in S2004), DR controller 200 issues a command of the room heating mode as the operation mode and the room heating set value of 55°C (S2005 and S2006).

If the temperature of hot water in hot water supply tank 103 is less than the preliminary HP heat storage temperature (NO in S2003), DR controller 200 determines whether or not the current operation mode is the room heating mode (S2007).

If the current operation mode is the room heating mode (YES in S2007), DR controller 200 determines whether or not the room temperature is not less than the room temperature set value (S2008). If the room temperature is not less than the room temperature set value (YES in S2008), DR controller 200 issues a command of the hot water supply mode as the operation mode (S2009). If the room temperature is less than the room temperature set value (NO in S2008), DR controller 200 issues a command of the room heating mode as the operation mode and the room heating set value of 55°C (S2010 and S2011).

If the current operation mode is the hot water supply mode (NO in S2007), DR controller 200 determines whether or not the room temperature is not more than (the room temperature set value - 1) (S2012). If the room temperature is not more than (the room temperature set value - 1) (YES in S2012), DR controller 200 issues a command of the room heating mode as the operation mode and the room heating set value of 55°C (S2013 and S2014). If the room temperature is more than (the room temperature set value - 1) (NO in S2012), DR controller 200 issues a command of the hot water supply mode as the operation mode (S2015).

If the temperature of hot water in hot water supply tank 103 is not less than the preliminary HP heat storage temperature and the room temperature is not less than the room temperature set value (YES in S2004), after DR controller 200 issues a command of the room heating mode and the room heating set value (S2006, S2011, or S2014) or after DR controller 200 issues a command of the hot water supply mode (S2009 or S2015), DR controller 200 calculates element heater start time (S2016).

DR controller 200 initially subtracts the current temperature of hot water stored in hot water supply tank 103 from the preliminary heat storage temperature. DR controller 200 subsequently refers to the relationship information (FIG. 19) indicating relationship between temperature increase of hot water in hot water supply tank 103 and the period for heating with element heater 109 and calculates an element heater heating period corresponding to the temperature increase most approximate to the subtraction result.

DR controller 200 then calculates time obtained by subtracting the element heater heating period from the DR start time as element heater start time. Assume that the preliminary heat storage temperature is 46°C and the temperature in the hot water supply tank is 42°C. There is a difference of four degrees in this case, and the element heater heating period is 20 minutes in accordance with FIG. 19. The DR start time is 18:00, so that the element heater start time is 17:40.

DR controller 200 subsequently determines whether or not the current time is at or after the element heater start time (S2017). If the current time is at or after the element heater start time (YES in S2017), DR controller 200 issues a command of turning ON the element heater (S2018). If the current time is not at or after the element heater start time (NO in S2017), DR controller 200 issues a command of turning OFF the element heater (S2019). DR controller 200 then finishes the DR preliminary control and executes the subsequent step (S704). The DR preliminary control according to the present embodiment is performed through the above steps.

### Advantages of fourth embodiment

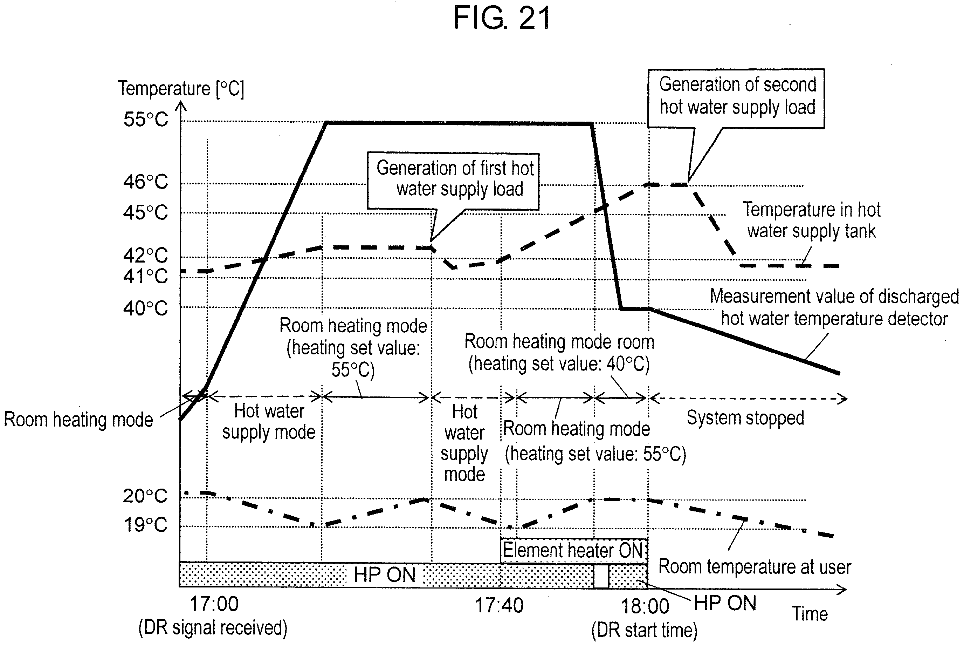

Advantages of the fourth embodiment are described with reference to FIG. 21. FIG. 21 is a graph exemplifying temperature variation according to the fourth embodiment. In this example, a DR signal is received at 17:00 and a DR preliminary period lasts from 17:00 to 18:00. Other conditions are assumed to be the same as the conditions exemplified in the advantages according to the third embodiment.

At 17:00 when the DR preliminary period starts, DR controller 200 initially calculates the preliminary HP heat storage temperature as 45°C, similarly to the second embodiment. DR controller 200 subsequently refers to the temperature of hot water stored in hot water supply tank 103 and the room temperature. In this case, the temperature of hot water stored in hot water supply tank 103 is less than the preliminary HP heat storage temperature and the room temperature is not less than the room temperature set value of 20°C. DR controller 200 accordingly issues a command of the hot water supply mode. During operation in the hot water supply mode, the temperature of hot water stored in hot water supply tank 103 is increased and the temperature in the room not being heated is decreased gradually. When the room temperature is decreased to be not more than 19°C as the product of (the room temperature set value - 1), DR controller 200 issues a command of the room heating mode and the room heating set value of 55°C. After this, when the room temperature is increased to be not less than the room temperature set value, DR controller 200 issues again a command of the hot water supply mode.

In accordance with these commands, hot water supply tank 103 is heated while the room temperature is varied constantly between 19°C and 20°C. In this case, hot water supply tank 103 can be also heated without affecting comfort. Furthermore, the room heating set value is set to be higher than the normal case. The room temperature is thus recovered more quickly and hot water supply tank 103 can be heated by heat pump 101 for a longer period. DR controller 200 performs the control in accordance with the room temperature measured with room temperature sensor 7. The above advantages are independent from user's room heating equipment, change in valve setting by the user, and the like.

At 17:00, the element heater start time is assumed to be 17: 35 because the temperature of the hot water supply tank is about 41°C. DR controller 200 accordingly issues a command of turning OFF the element heater. When the temperature in hot water supply tank 103 reaches 42°C at 17:40 after elapse of time, the element heater start time is also changed to 17:40 and DR controller 200 accordingly issues a command of turning ON the element heater. DR controller 200 then keeps issuing a command of turning ON the element heater, so that the temperature in the hot water supply tank reaches the preliminary heat storage temperature of 46°C by the DR start time of 18:00. Hot water supply tank 103 is heated by heat pump 101 having efficiency as high as possible, and element heater 109 heats the hot water supply tank to increase the temperature by only a difference from the preliminary heat storage temperature. Thus, less electric power is consumed.

When both hot water supply tank 103 and the room are heated as described above and the temperature in hot water supply tank 103 exceeds the preliminary HP heat storage temperature, hot water supply tank 103 cannot be heated further by heat pump 101. In this case, there is no need to switch to the hot water supply mode. If the room temperature is not less than the room temperature set value, there is no need to quickly recover the room temperature. In this case, DR controller 200 does not issue a command of the operation mode and the room heating set value, and normal room heating is performed. In accordance with these commands, operation is performed without unnecessary increase in temperature of hot water discharged from the heat pump and without deterioration in efficiency.

As described above, in the control method according to the fourth embodiment, the operation mode and the room heating set value are changed in accordance with the measurement result of room temperature sensor 7. It is thus possible to keep the room temperature within a certain range, to maximumly heat hot water supply tank 103 with heat pump 101, and to minimize electric power consumption, regardless of each user. At the same time, operation is performed so that heat is properly kept in both hot water supply tank 103 and the room at the DR start time. Furthermore, the element heater start time is calculated in accordance with the properties of element heater 109. It is thus possible to minimize use of the element heater.

### Supplementary description of fourth embodiment

Room temperature sensor 7 according to the present embodiment has a function of measuring room temperature and a function of setting a room temperature set value by the user. These functions can be provided by separate devices or can be provided in other equipment. For example, the room temperature set value can be set by means of the valve setting in room heating device 104.

Furthermore, the system according to the present embodiment is controlled so that the operation mode is switched in the range from the room temperature set value to (the room temperature set value - 1). This range can be varied within an arbitrary extent. For example, the range can be set from the room temperature set value to (the room temperature set value - 0.5) so as to shorten the intervals of switching between the room heating mode and the hot water supply mode, so that the room temperature is varied within a smaller range.

### OTHER EXEMPLARY EMBODIMENTS

A heat pump system control device according to a first aspect of the present disclosure is used for a heat pump system including a heat pump device for heating a heat storage material, a hot water supply device for receiving the heat storage material from the heat pump device, and a room heating device for receiving the heat storage material from the heat pump device.

The heat pump system control device includes:
setting means for causing the heat pump system to set a period for suppressing electric power consumption of the heat pump device; and
control means for, after start time of a preliminary period prior to start time of the period, supplying the heat storage material from the heat pump device to the hot water supply device before supply of the heat storage material from the heat pump device to the room heating device regardless of whether or not a temperature of hot water in the hot water supply device is less than a threshold, the threshold being used for switching from the room heating device to the hot water supply device as a supply destination of the heat storage material from the heat pump device during normal operation prior to the preliminary period, and
for switching from the hot water supply device to the room heating device as the supply destination of the heat storage material from the heat pump device, during the preliminary period and when the temperature of hot water in the hot water supply device reaches a predetermined heat storage temperature higher than the threshold.

According to this aspect, after start of the preliminary period, the heat storage material is initially supplied from the heat pump device to the hot water supply device regardless of whether or not the temperature of hot water in the hot water supply device is lower than the threshold. The threshold is used for switching from the room heating device to the hot water supply device as the supply destination of the heat storage material from the heat pump device. For example, even when the temperature of hot water in the hot water supply device is not lower than the threshold before start of the period for suppressing electric power consumption of the heat pump device, if a hot water supply load is generated thereafter, the temperature of hot water in the hot water supply device can be decreased to be not more than the threshold. According to this aspect, even in such a case, the temperature of hot water in the hot water supply device can be kept at a sufficient degree at start of the period for suppressing electric power consumption of the heat pump device. It is thus possible to suppress shortage of hot water in the period for suppressing electric power consumption of the heat pump device. After the preliminary period, it is possible to reduce supply of the heat storage material from the heat pump device to the hot water supply device, so that the room temperature can be kept at a sufficient degree.

According to this aspect, after the heat storage material is supplied from the heat pump device to the hot water supply device, the heat storage material is supplied from the heat pump device to the room heating device. For example, if there is a sufficient remaining period in the preliminary period after the temperature of hot water in the hot water supply device reaches the predetermined heat storage temperature higher than the threshold in the preliminary period, it is possible to recover the room temperature by operation of the room heating device in the preliminary period.

The hot water supply device is thermally insulated by a heat insulating material in many cases. This configuration leads to relatively small decrease in temperature of hot water in the hot water supply device. In contrast, a relatively large quantity of heat is released from air in the room due to radiation of heat through a window, ventilation, and the like. The air in the room is heated by the room heating device. According to this aspect, initially heated is hot water in the hot water supply device from which less heat is radiated, and subsequently heated by the room heating device is the room from which more heat is radiated. Decrease in temperature of hot water in the hot water supply device will be thus smaller when the room heating device is heated in the preliminary period. In contrast, if the room from which more heat is radiated is initially heated by the room heating device, decrease in room temperature will be larger when hot water in the hot water supply device is heated in the preliminary period. According to this aspect, in comparison to the case where the room is initially heated by the room heating device, it is possible to increase, as a whole, both the temperature of hot water in the hot water supply device and the room temperature at the end of the preliminary period.

If the room temperature is excessively increased by the room heating device, comfort in a residential area may be deteriorated. In contrast, even if the temperature of hot water in the hot water supply device is set to be higher than the temperature during the normal operation, such setting does not affect comfort in the residential area. In short, the room heating device and the hot water supply device are different from each other in the relationship with comfort in the residential area. According to this aspect, the heat storage material is initially supplied from the heat pump device to the hot water supply device. When the temperature of hot water in the hot water supply device reaches a predetermined heat storage temperature higher than the threshold, the supply destination of the heat storage material from the heat pump device is switched from the hot water supply device to the room heating device. In this configuration, the room temperature is recovered, whereas the temperature of hot water in the hot water supply device can be kept at a sufficient degree. According to this aspect, it is thus possible to effectively increase as a whole, both the temperature of hot water in the hot water supply device and the room temperature at the end of the preliminary period.

According to a second aspect of the present disclosure, in the heat pump system control device according to the first aspect, the control means controls, in the preliminary period, the temperature of the heat storage material heated by the heat pump to reach a second room heating set value that is not less than a first room heating set value of the room heating device during the normal operation prior to the preliminary period.

The room temperature is more quickly recovered by the room heating device in the preliminary period. After start of the preparatory period, the hot water supply device is initially selected as the supply destination of the heat storage material from the heat pump device. In this case, the room temperature is decreased while the heat storage material is supplied to the hot water supply device. In the preliminary period and after the heat storage material is supplied to the hot water supply device, the period for supplying the heat storage material from the heat pump device to the room heating device is shortened. In this case, if the heat pump system uses a heat storage material having the temperature that is used during the normal operation, the room temperature decreased once may not be recovered sufficiently to deteriorate comfort in the period for suppressing electric power consumption of the heat pump device. However, according to this aspect, the room temperature is increased more quickly in the preliminary period in comparison to the case of the normal operation. The room temperature can be thus kept at a sufficient degree at start of the period for suppressing electric power consumption of the heat pump device.

According to a third aspect of the present disclosure, in the heat pump system control device according to the second aspect, the control means stops the operation of the heat pump device when the temperature of the heat storage material heated by the heat pump reaches the second room heating set value.

According to this aspect, the heat pump is not continuously operated when the temperature exceeds the second room heating set value. It is thus possible to suppress electric power consumption of the heat pump system.

According to a fourth aspect of the present disclosure, in the heat pump system control device according to the third aspect, the control means controls, after the operation is stopped at the heat pump device, the temperature of the heat storage material heated by the heat pump to reach the first room heating set value that is set at the room heating device during normal operation prior to the preliminary period.

The first room heating set value indicates a temperature of the heat storage material (e.g. temperature of discharged hot water) discharged from the heat pump device during room heating. Efficiency of the heat pump device is typically lower as the temperature of the heat storage material is higher.

According to this aspect, once the temperature of the heat storage material heated by the heat pump reaches the second room heating set value, the room heating device is switched to the normal operation for room heating. Deterioration in efficiency of the heat pump device is thus suppressed after recovery of the room temperature.

According to a fifth aspect of the present disclosure, in the heat pump system control device according to any one of the second to fourth aspects, the second room heating set value comprises an upper limit value of the room heating set value of the room heating device.

According to this aspect, the heat pump is not continuously operated when the temperature exceeds the upper limit value of the room heating set value. It is thus possible to suppress electric power consumption of the heat pump system.

According to a sixth aspect of the present disclosure, in the heat pump system control device according to any one of the first to fifth aspects, the predetermined heat storage temperature higher than the threshold comprises a lower value of i) a hot water supply temperature of the hot water supply device set by a user and ii) an upper limit temperature of hot water in the hot water supply device heated by the heat pump device.

In this case, the hot water supply device is not heated when the temperature exceeds the hot water supply temperature set by the user. It is thus possible to suppress storage of heat.

When the temperature of hot water in the hot water supply device is increased not by use of the element heater but by operation of the heat pump device until the temperature reaches the predetermined heat storage temperature, it is possible to keep sufficient heat in both hot water in the hot water supply device and in the room before start of the period for suppressing electric power consumption of the heat pump device with small electric power consumption.

According to a seventh aspect of the present disclosure, in the heat pump system control device according to the first aspect, the control means firstly switches, in the preliminary period, from the hot water supply device to the room heating device as the supply destination of the heat storage material from the heat pump device, and then alternately switches between the hot water supply device and the room heating device as the supply destination of the heat storage material from the heat pump device.

In this case, it is possible to shorten a period in which no heat is continuously supplied to the room heating device, so that decrease in room temperature is reduced in the preliminary period.

According to an eighth aspect of the present disclosure, in the heat pump system control device according to the first aspect, the control means firstly switches, in the preliminary period, from the hot water supply device to the room heating device as the supply destination of the heat storage material from the heat pump device, and then switches again from the room heating device to the hot water supply device as the supply destination of the heat storage material from the heat pump device.

According to a ninth aspect of the present disclosure, in the heat pump system control device according to the first aspect, during the normal operation prior to the preliminary period, the heat storage material is supplied from the heat pump device to the hot water supply device when the temperature of hot water in the hot water supply device is lower than the threshold.

According to this aspect, in the normal period, when the temperature of hot water in the hot water supply device is lower than the threshold, in other words, when the temperature of hot water in the hot water supply device is low, the heat storage material is supplied from the heat pump device to the hot water supply device. In this configuration, the temperature of hot water in the hot water supply device is not further increased when the temperature of hot water in the hot water supply device is at a sufficient degree. The heat storage material supplied from the heat pump device can be thus efficiently divided to the hot water supply device and the room heating device so as to suppress electric power consumption of the heat pump system.

A heat pump system control device according to a tenth aspect of the present disclosure is used for a heat pump system including a heat pump device for heating a heat storage material, a hot water supply device for receiving the heat storage material from the heat pump device, and a room heating device for receiving the heat storage material from the heat pump device.

The heat pump system control device includes:
setting means for causing the heat pump system to set a period for suppressing electric power consumption of the heat pump device; and control means i) for, at start time of a preliminary period prior to start time of the period for suppressing electric power consumption, supplying the heat storage material from the heat pump device to the hot water supply device in a first period in the preliminary period before supply of the heat storage material from the heat pump device to the room heating device, ii) for switching, at the end of the first period in the preliminary period, from the hot water supply device to the room heating device as a supply destination of the heat storage material from the heat pump device and iii) for supplying the heat storage material from the heat pump device to the room heating device during a second period subsequent to the first period in the preliminary period.

The hot water supply device is thermally insulated by a heat insulating material in many cases. This configuration leads to relatively small decrease in temperature of hot water in the hot water supply device. In contrast, a relatively large quantity of heat is released from air in the room heated by the room heating device due to radiation of heat through a window, ventilation, and the like. According to this aspect, initially heated is hot water in the hot water supply device from which less heat is radiated, and subsequently heated is the room heating device from which more heat is radiated. Decrease in temperature of hot water in the hot water supply device is thus small while the room heating device is heated in the preliminary period. In contrast, if the room from which more heat is radiated is initially heated by the room heating device, decrease in room temperature is large while hot water in the hot water supply device is heated in the preliminary period. According to this aspect, in comparison to the case where a room is initially heated by the room heating device, it is possible to increase, as a whole, both the temperature of hot water in the hot water supply device and the room temperature at the end of the preliminary period. In other words, it is possible to properly keep both the room temperature and the hot water supply temperature at start time of the period for suppressing electric power consumption of the heat pump device.

According to an eleventh aspect of the present disclosure, in the heat pump system control device according to the tenth aspect, the control means controls, in the second period, the temperature of the heat storage material heated by the heat pump to reach a second room heating set value that is not less than a first room heating set value of the room heating device during normal operation prior to the preliminary period.

According to this aspect, the room temperature is recovered to the original degree by the room heating device more quickly in the second period. After start of the preliminary period, the hot water supply device is initially selected as the supply destination of the heat storage material from the heat pump device. In this case, the room temperature is decreased while the heat storage material is supplied to the hot water supply device. As the heat storage material is supplied to the hot water supply device, the period for supplying the heat storage material from the heat pump device to the room heating device is shortened in the preliminary period. If a heat storage material having the temperature during the normal operation is used, the room temperature decreased once may not be recovered sufficiently to deteriorate comfort in the period for suppressing electric power consumption of the heat pump device. However, according to this aspect, the room temperature is increased more quickly in the preliminary period in comparison to the case of the normal operation. The room temperature can be thus kept at a sufficient degree at start of the period for suppressing electric power consumption of the heat pump device.

According to a twelfth aspect of the present disclosure, in the heat pump system control device according to the eleventh aspect, the control means stops the operation of the heat pump device when the temperature of the heat storage material heated by the heat pump reaches the second room heating set value.

According to this aspect, the heat pump is not continuously operated when the temperature exceeds the second room heating set value. It is thus possible to suppress electric power consumption of the heat pump system.

According to a thirteenth aspect of the present disclosure, in the heat pump system control device according to the twelfth aspect, the control means controls, after the operation is stopped at the heat pump device, the temperature of the heat storage material heated by the heat pump to reach the first room heating set value.

The first room heating set value indicates a temperature of the heat storage material (e.g. temperature of discharged hot water) discharged from the heat pump device during room heating. Efficiency of the heat pump device is typically lower as the temperature of discharged hot water is higher.

According to this aspect, once the temperature of the heat storage material heated by the heat pump reaches the second room heating set value, the room heating device is switched to the normal operation for room heating. Deterioration in efficiency of the heat pump device is thus suppressed after recovery of the room temperature.

According to a fourteenth aspect of the present disclosure, in the heat pump system control device according to any one of the eleventh to thirteenth aspects, the second room heating set value comprises an upper limit value of the room heating set value of the room heating device.

According to this aspect, the heat pump is not continuously operated when the temperature exceeds the upper limit value of the room heating set value. It is thus possible to suppress electric power consumption of the heat pump system.

According to a fifteenth aspect of the present disclosure, in the heat pump system control device according to any one of the tenth to fourteenth aspects, the control means alternately switches between the hot water supply device and the room heating device as the supply destination of the heat storage material from the heat pump device after elapse of the second period in the preliminary period.

In this case, it is possible to shorten a period during which no heat is continuously supplied to the room heating device, so that decrease in room temperature is reduced in the preliminary period.

According to a sixteenth aspect of the present disclosure, in the heat pump system control device according to any one of the tenth to fifteenth aspects, the control means, in the normal period prior to the preliminary period, supplies the heat storage material from the heat pump device to the hot water supply device when the temperature of hot water in the hot water supply device is lower than the threshold.

According to this aspect, in the normal period, when the temperature of hot water in the hot water supply device is lower than the threshold, in other words, when the temperature of hot water in the hot water supply device is low, the heat storage material is supplied from the heat pump device to the hot water supply device. In this configuration, the temperature of hot water in the hot water supply device is not further increased when the temperature of hot water in the hot water supply device is at a sufficiently high degree. The heat storage material supplied from the heat pump device can be thus efficiently distributed to the hot water supply device and the room heating device so as to suppress electric power consumption of the heat pump system.

According to a seventeenth aspect of the present disclosure, in the heat pump system control device according to any one of the first to ninth aspects, the control means, after start time of the preliminary period prior to start time of the period for suppressing electric power consumption, supplies the heat storage material from the heat pump device to the hot water supply device before supply of the heat storage material from the heat pump device to the room heating device regardless of whether or not the temperature of hot water in the hot water supply device is lower than the threshold. The threshold is used for switching from the room heating device to the hot water supply device as the supply destination of the heat storage material from the heat pump device during the normal operation prior to the preliminary period. The control means also i) calculates, in the preliminary period, a first period until the temperature of hot water in the hot water supply device reaches a predetermined heat storage temperature higher than the threshold by supply of the heat storage material from the heat pump device to the hot water supply device, ii) calculates a second period after the first period until the room temperature decreased in the first period reaches an upper limit value of the room heating set value of the room heating device, iii) calculates a third period for supplying the heat storage material from the heat pump device to the hot water supply device, in the case where a sum of the first period and the second period is more than the preliminary period, in accordance with a reference table. The reference table indicates a recovery period required for recovery of room temperature that is decreased in a unit period in association with outdoor air temperature by supplying the heat storage material from the heat pump device to the hot water supply device, to a degree prior to the unit period. The control means supplies the heat storage material from the heat pump device to the hot water supply device in the third period, and switches from the hot water supply device to the room heating device as the supply destination of the heat storage material from the heat pump device after elapse of the third period.

If the preliminary period is short, most of the preliminary period may be used as the period for supplying the heat storage material from the heat pump device to the hot water supply device and there may be a shorter period left for supplying the heat storage material from the heat pump device to the room heating device. In this case, even though sufficient heat can be kept in the hot water supply device, the room temperature may remain low. According to this aspect, it is possible to keep both the temperature of hot water in the hot water supply device and the room temperature in good balance in accordance with the length of the preliminary period before start of the period for suppressing electric power consumption of the heat pump device.

According to an eighteenth aspect of the present disclosure, in the heat pump system control device according to any one of the first to ninth aspects, the control means, at start time of the preliminary period, supplies of the heat storage material from the heat pump device to the hot water supply device before supply of the heat storage material from the heat pump device to the room heating device regardless of whether or not the temperature of hot water in the hot water supply device is lower than the threshold. The threshold is used for switching from the room heating device to the hot water supply device as the supply destination of the heat storage material from the heat pump device during the normal operation prior to the preliminary period. The control means also i) calculates, in the preliminary period, a first period until the temperature of hot water in the hot water supply device reaches a predetermined heat storage temperature higher than the threshold by supply of the heat storage material from the heat pump device to the hot water supply device, ii) calculates a second period until the room temperature decreased in the first period reaches an upper limit value of the room heating set value of the room heating device, iii) calculates a third period for supplying the heat storage material from the heat pump device to the hot water supply device, in the case where a sum of the first period and the second period is more than the preliminary period, in accordance with a reference table. The reference table indicates a recovery period required for recovery of a room temperature that is decreased in a unit period at a predetermined room heating set value in association with outdoor air temperature by supplying the heat storage material from the heat pump device to the hot water supply device, to a degree prior to the unit period. The control means supplies the heat storage material from the heat pump device to the hot water supply device in the third period, and switches from the hot water supply device to the room heating device as the supply destination of the heat storage material from the heat pump device after elapse of the third period.

If the preliminary period is short, most of the preliminary period may be used as the period for supplying the heat storage material from the heat pump device to the hot water supply device and there may be a shorter period left for supplying the heat storage material from the heat pump device to the room heating device. In this case, even though sufficient heat can be kept in the hot water supply device, the room temperature may remain low.

According to this aspect, it is possible to keep both the temperature of hot water in the hot water supply device and the room temperature in good balance in accordance with the length of the preliminary period before start of the period for suppressing electric power consumption of the heat pump device.

A heat pump system according to a nineteenth aspect of the present disclosure includes the heat pump device, the hot water supply device, and the heat pump system control device according to any one of the first to eighteenth aspects.

According to a twentieth aspect of the present disclosure, the heat pump system according to the nineteenth aspect includes the room heating device.

A method of controlling a heat pump system according to a twenty first aspect of the present disclosure is used for controlling a heat pump system that includes a heat pump device for heating a heat storage material, a hot water supply device for receiving the heat storage material from the heat pump device, and a room heating device for receiving the heat storage material from the heat pump device.

The method includes: causing the heat pump system to set a period for suppressing electric power consumption of the heat pump device; causing, at start time of a preliminary period prior to start time of the period, supplying the heat storage material from the heat pump device to the hot water supply device before supply of the heat storage material from the heat pump device to the room heating device regardless of whether or not temperature of hot water in the hot water supply device is less than a threshold. The threshold is used for switching from the room heating device to the hot water supply device as a supply destination of the heat storage material from the heat pump device during normal operation prior to the preliminary period. The method also includes: switching, in the preliminary period, from the hot water supply device to the room heating device as the supply destination of the heat storage material from the heat pump device in the case where the temperature of hot water in the hot water supply device reaches a predetermined heat storage temperature higher than the threshold.

A heat pump system control device according to a twenty second aspect of the present disclosure is used for a heat pump system including a heat pump device for heating a heat storage material, a hot water supply device for receiving the heat storage material from the heat pump device, and a room heating device for receiving the heat storage material from the heat pump device. The heat pump system control device includes: setting means for causing the heat pump system to set a period for suppressing electric power consumption of the heat pump device; and control means 1) for, after start time of a preliminary period prior to start time of the period for suppressing electric power consumption, supplying the heat storage material from the heat pump device to the hot water supply device before supply of the heat storage material from the heat pump device to the room heating device, and ii) for controlling, in the case where the temperature of hot water in the hot water supply device reaches a predetermined temperature in the preliminary period, a temperature of the heat storage material heated by the heat pump to reach a second room heating set value that is not less than a first room heating set value that is set at the room heating device during normal operation prior to the preliminary period, and iii) for switching from the hot water supply device to the room heating device as supply destination of the heat storage material from the heat pump device.

According to this aspect, the hot water supply device is thermally insulated by a heat insulating material in many cases. This configuration leads to relatively small decrease in temperature of hot water in the hot water supply device. In contrast, a relatively large quantity of heat is released from air in the room heated by the room heating device due to radiation of heat through a window, ventilation, and the like. According to this aspect, initially heated is hot water in the hot water supply device from which less heat is radiated, and subsequently heated by the room heating device is the room from which more heat is radiated. Decrease in temperature of hot water in the hot water supply device is thus small while the room heating device is heated in the preliminary period. In contrast, if the room from which more heat is radiated is initially heated by the room heating device, decrease in room temperature is large while hot water in the hot water supply device is heated in the preliminary period. According to this aspect, in comparison to the case where a room is initially heated by the room heating device, it is possible to increase, as a whole, both the temperature of hot water in the hot water supply device and the room temperature at the end of the preliminary period.

If the room temperature is excessively increased by the room heating device, comfort in the residential area may be deteriorated. However, even if the temperature of hot water in the hot water supply device is set to be more than the temperature for the normal operation, such setting does not affect comfort in the residential area. In short, the room heating device and the hot water supply device are different from each other in the relationship with comfort in the residential area. According to this aspect, the heat storage material is initially supplied from the heat pump device to the hot water supply device. When the temperature of hot water in the hot water supply device reaches the predetermined heat storage temperature higher than the threshold, the supply destination of the heat storage material from the heat pump device is switched from the hot water supply device to the room heating device. In this configuration, the room temperature is recovered while the temperature of hot water in the hot water supply device can be kept at a sufficient degree. According to this aspect, it is thus possible to effectively increase as a whole, both the temperature of hot water in the hot water supply device and the room temperature at the end of the preliminary period.

Furthermore, according to this aspect, the room temperature is recovered by the room heating device more quickly in the preliminary period. After start of the preliminary period, the hot water supply device is initially selected as the supply destination of the heat storage material from the heat pump device. In this case, the room temperature is decreased once while the heat storage material is supplied to the hot water supply device. After the heat storage material is supplied to the hot water supply device, the period for supplying the heat storage material from the heat pump device to the room heating device is shortened in the preliminary period. If a heat storage material having the temperature during the normal operation is used, the room temperature decreased once may not be recovered sufficiently to deteriorate comfort in the period for suppressing electric power consumption of the heat pump device. However, according to this aspect, the room temperature is increased more quickly in the preliminary period in comparison to the case of the normal operation. The room temperature can be thus kept at a sufficient degree at start of the period for suppressing electric power consumption of the heat pump device.

According to a twenty third aspect of the present disclosure, in the heat pump system control device according to the twenty second aspect, the control means, after start time of the preliminary period prior to start time of the period for suppressing electric power consumption, supplies the heat storage material from the heat pump device to the hot water supply device before supply of the heat storage material from the heat pump device to the room heating device regardless of whether or not the temperature of hot water in the hot water supply device is less than a threshold. The threshold is used for switching from the room heating device to the hot water supply device as the supply destination of the heat storage material from the heat pump device during the normal operation prior to the preliminary period.

According to this aspect, after start of the preliminary period, the heat storage material is initially supplied from the heat pump device to the hot water supply device regardless of whether or not the temperature of hot water in the hot water supply device is lower than the threshold for switching from the room heating device to the hot water supply device as the supply destination of the heat storage material from the heat pump device. For example, even when the temperature of hot water in the hot water supply device is not lower than the threshold before start of the period for suppressing electric power consumption of the heat pump device, if a hot water supply load is generated thereafter, the temperature of hot water in the hot water supply device can be decreased to be not more than the threshold. According to this aspect, even in such a case, the temperature of hot water in the hot water supply device can be kept at a sufficient degree at start of the period for suppressing electric power consumption of the heat pump device. It is thus possible to suppress shortage of hot water in the period for suppressing electric power consumption of the heat pump device. After the preliminary period, it is possible to reduce supply of the heat storage material from the heat pump device to the hot water supply device, so that the room temperature can be kept at a sufficient degree.

A heat pump system control device according to a twenty fourth aspect of the present disclosure is used for a heat pump system including a heat pump device for heating a heat storage material, a hot water supply device for receiving the heat storage material from the heat pump device, and a room heating device for receiving the heat storage material from the heat pump device. The heat pump system control device includes: setting means for causing the heat pump system to set a period for suppressing electric power consumption of the heat pump device; and control means i) for, after start time of a preliminary period prior to start time of the period for suppressing electric power consumption, supplying the heat storage material from the heat pump device to the hot water supply device in a first period, before supply of the heat storage material from the heat pump device to the room heating device, ii) for controlling, after the first period in the preliminary period, a temperature of the heat storage material heated by the heat pump to reach a second room heating set value that is not less than a first room heating set value that is set at the room heating device during normal operation prior to the preliminary period, iii) for switching from the hot water supply device to the room heating device as a supply destination of the heat storage material from the heat pump device, and iv) for supplying the heat storage material from the heat pump device is supplied to the room heating device in a second period subsequent to the first period in the preliminary period.

The hot water supply device is thermally insulated by a heat insulating material in many cases. This configuration leads to relatively small decrease in temperature of hot water in the hot water supply device. In contrast, a relatively large quantity of heat is released from air in the room heated by the room heating device due to radiation of heat through a window, ventilation, and the like. According to this aspect, initially heated is hot water in the hot water supply device from which less heat is radiated, and subsequently heated is the room heating device from which more heat is radiated. Decrease in temperature of hot water in the hot water supply device is thus small while the room heating device is heated in the preliminary period. In contrast, if the room from which more heat is radiated is initially heated by the room heating device, decrease in room temperature is large while hot water in the hot water supply device is heated in the preliminary period. According to this aspect, in comparison to the case where a room is initially heated by the room heating device, it is possible to increase, as a whole, both the temperature of hot water in the hot water supply device and the room temperature at the end of the preliminary period. In other words, it is possible to properly keep both the room temperature and the hot water supply temperature at start time of the period for suppressing electric power consumption of the heat pump device.

Furthermore, according to this aspect, the room temperature is recovered more quickly in the preliminary period. After start of the preliminary period, the hot water supply device is initially selected as the supply destination of the heat storage material from the heat pump device. In this case, the room temperature is decreased once while the heat storage material is supplied to the hot water supply device. After the heat storage material is supplied to the hot water supply device, the period for supplying the heat storage material from the heat pump device to the room heating device is shortened in the preliminary period. If a heat storage material having the temperature during the normal operation is used, the room temperature decreased once may not be recovered sufficiently to deteriorate comfort in the period for suppressing electric power consumption of the heat pump device. However, according to this aspect, the room temperature is increased more quickly in the preliminary period in comparison to the case of the normal operation. The room temperature can be thus kept at a sufficient degree at start of the period for suppressing electric power consumption of the heat pump device.

According to a twenty fifth aspect of the present disclosure, a heat pump system control device controls a heat pump system that selectively supplies heat from a heat pump device to a hot water supply device or a room heating device. The control device includes: a determiner for determining start time of a suppressing period for suppressing electric power consumption of the heat pump device; and a controller i) for starting, in a preparatory period prior to the suppressing period, supply of heat from the heat pump device to the hot water supply device at a temperature of hot water at which supply of heat from the heat pump device to the hot water supply device is not started in a normal operation mode for a normal period prior to the preparatory period, and ii) for operating the heat pump system in such a manner that, when heat is supplied from the heat pump device to the room heating device, a quantity of the heat per unit time is larger than a quantity of heat per unit time in the normal operation mode.

According to a twenty sixth aspect of the present disclosure, in the heat pump system control device according to the twenty fifth aspect, in the preparatory period, the controller adjusts a ratio of a period for supplying heat from the heat pump device to the hot water supply device to a period for supplying heat from the heat pump device to the room heating device in such a manner that the ratio is larger than a ratio of a period for supplying heat from the heat pump device to the hot water supply device to a period for supplying heat from the heat pump device to the room heating device in the normal operation mode.

According to a twenty seventh aspect of the present disclosure, in the heat pump system control device according to the twenty fifth or twenty sixth aspect, in the preparatory period, the controller causes the heat pump system to supply heat from the heat pump device to the hot water supply device and then to supply heat from the heat pump device to the room heating device.

According to a twenty eighth aspect of the present disclosure, in the heat pump system control device according to the twenty sixth aspect, in the preparatory period, the controller causes the heat pump system to supply heat from the heat pump device to the hot water supply device until a temperature of hot water in the hot water supply device reaches a predetermined hot water supply temperature and then to supply heat from the heat pump device to the room heating device.

According to a twenty ninth aspect of the present disclosure, in the heat pump system control device according to the twenty sixth aspect, the controller determines, at or before start of the preparatory period, a first period for supplying heat from the heat pump device to the hot water supply device in the preparatory period and a second period for supplying heat from the heat pump device to the room heating device in the preparatory period, and causes the heat pump system to supply heat from the heat pump device to the hot water supply device in the determined first period, and then causes the heat pump system to supply heat from the heat pump device to the room heating device in the determined second period.

According to a thirtieth aspect of the present disclosure, in the heat pump system control device according to the twenty fifth or twenty sixth aspect, in the preparatory period, the controller causes the heat pump system to alternately supply heat from the heat pump device to the hot water supply device and the room heating device.

According to a thirty first aspect of the present disclosure, in the heat pump system control device according to the thirtieth aspect, after a temperature of hot water in the hot water supply device reaches a predetermined temperature in the preparatory period, the controller causes the heat pump system to stop supply of heat to one of the hot water supply device and the room heating device and to start supply of heat to the other one so that heat is alternately supplied from the heat pump device to the hot water supply device and the room heating device.

According to a thirty second aspect of the present disclosure, in the heat pump system control device according to the thirtieth aspect, at predetermined time intervals in the preparatory period, the controller causes the heat pump system to stop supply of heat to one of the hot water supply device and the room heating device and to start supply of heat to the other one so that heat is alternately supplied from the heat pump device to the hot water supply device and the room heating device.

According to a thirty third aspect of the present disclosure, in the heat pump system control device according to any one of the twenty fifth to thirty second aspect, the heat pump system control device further includes
a storage for storing relationship information indicating relationship between a first estimation period for supplying no heat from the heat pump device to the room heating device and a second estimation period for recovering a temperature of a heated area decreased in the first estimation period to a temperature prior to the first estimation period with heat supplied from the heat pump device to the room heating device; wherein
the controller determines a first period for supplying heat from the heat pump device to the hot water supply device and a second period for supplying heat from the heat pump device to the room heating device in accordance with the relationship information stored in the storage so that the temperature of the heated area decreased while no heat is supplied from the heat pump device to the room heating device is recovered to a temperature before supply of heat from the heat pump device to the room heating device is stopped, with heat supplied from the heat pump device to the room heating device in the preparatory period, and
the controller causes the heat pump system to supply heat from the heat pump device to the hot water supply device in the determined first period and causes the heat pump system to supply heat from the heat pump device to the room heating device in the determined second period.

According to a thirty fourth aspect of the present disclosure, in the heat pump system control device according to the thirty third aspect, the controller extends the first period as a temperature of hot water in the hot water supply device is lower.

According to a thirty fifth aspect of the present disclosure, in the heat pump system control device according to any one of the twenty fifth to thirty fourth aspects, when a condition for stopping operation of the heat pump device is satisfied while heat is supplied from the heat pump device to the room heating device in the preparatory period, the controller causes the heat pump system to stop supply of heat from the heat pump device to the room heating device and to start supply of heat from the heat pump device to the hot water supply device.

According to a thirty sixth aspect of the present disclosure, in the heat pump system control device according to any one of the twenty fifth to thirty fifth aspects, when heat is supplied from the heat pump device to the room heating device in the preparatory period, the controller adjusts a temperature of fluid supplied from the heat pump device to the room heating device in such a manner that the temperature is higher than temperature in the normal operation mode so that a quantity of the heat per unit time is larger than a quantity of heat per unit time in the normal operation mode.

According to a thirty seventh aspect of the present disclosure, in the heat pump system control device according to the thirty sixth aspect, the heat pump system control device further includes
a storage for storing relationship information indicating relationship between a first estimation period for supplying no heat from the heat pump device to the room heating device and a second estimation period for recovering temperature of a heated area decreased in the first estimation period to temperature prior to the first estimation period with heat supplied from the heat pump device to the room heating device; wherein
the controller determines a first period for supplying heat from the heat pump device to the hot water supply device, a second period for supplying heat from the heat pump device to the room heating device, and a temperature of the fluid for supplying heat from the heat pump device to the room heating device in accordance with the relationship information stored in the storage so that the temperature of the heated area decreased while no heat is supplied from the heat pump device to the room heating device is recovered to a temperature before supply of heat from the heat pump device to the room heating device is stopped, with heat supplied from the heat pump device to the room heating device in the preparatory period, and
the controller causes the heat pump system to supply heat from the heat pump device to the hot water supply device in the determined first period and causes the heat pump system to supply heat from the heat pump device to the room heating device in the determined second period by supplying the fluid having the determined temperature from the heat pump device to the room heating device.

A heat pump system according to a thirty eighth aspect of the present disclosure is controlled by the heat pump system control device according to any one of the twenty fifth to thirty seventh aspects. The heat pump system includes:
the heat pump system control device;
the heat pump device;
the hot water supply device; and
a three way valve used for selectively supplying heat from the heat pump device to the hot water supply device or the room heating device.

According to a thirty ninth aspect of the present disclosure, a heat pump system control method is used for controlling a heat pump system that selectively supplies heat from a heat pump device to a hot water supply device or a room heating device. The method includes:
the determination step of determining start time of a suppressing period for suppressing electric power consumption of the heat pump device;
the first control step of starting supply of heat from the heat pump device to the hot water supply device in a preparatory period prior to the suppressing period, at a temperature of hot water at which supply of heat from the heat pump device to the hot water supply device is not started in a normal operation mode for a normal period prior to the preparatory period; and
the second control step of causing the heat pump system in the preparatory period prior to the suppressing period in such a manner that, when heat is supplied from the heat pump device to the room heating device, a quantity of the heat per unit time is larger than a quantity of heat per unit time in the normal operation mode.

### Supplementary description of the entire disclosure

The heat pump system control device, the heat pump system, and the heat pump system control method are not limited by the embodiments described above. The heat pump system control device, the heat pump system, and the heat pump system control method can be embodied in accordance with the following aspects.
(1) Each of the devices mentioned above can be embodied specifically by a computer system including a microprocessor, a ROM, a RAM, a hard disk unit, a display unit, a keyboard, a mouse, and the like. The RAM or the hard disk unit stores a computer program. When the microprocessor is operated in accordance with the computer program, the devices achieve their functions. The computer program includes a plurality of combined command codes indicating commands to a computer.
(2) The plurality of constituent elements included in each of the devices can be partially or entirely configured by a single system LSI (Large Scale Integration). The system LSI is a super multifunctional LSI manufactured by integrating a plurality of constituent elements on a single chip, and is specifically embodied as a computer system including a microprocessor, a ROM, a RAM, and the like. The ROM stores a computer program.
   The system LSI achieves its functions when the microprocessor loads the computer program from the ROM to the RAM and performs calculation and the like in accordance with the loaded computer program.
(3) The plurality of constituent elements included in each of the devices can be partially or entirely configured by an IC card attachable to and detachable from the corresponding device or the devices can be partially or entirely configured by a single module. For example, the IC card or the module is a computer system including a microprocessor, a ROM, a RAM, and the like. The IC card or the module can include the super multifunctional LSI.
   When the microprocessor is operated in accordance with the computer program, the IC card or the module achieves its functions. The IC card or the module can have a tamper resistant property.
(4) This concept can be embodied by any one of the methods according to the plurality of embodiments described above. This concept can be embodied by a computer program performing any one of the methods using a computer, or can be embodied by a digital signal for the computer program.
   This concept can be embodied by a computer readable recording medium in which a computer program or a digital signal is recorded. Examples of the recording medium include a flexible disk, a hard disk, a CD-ROM, an MO, a DVD, a DVD-ROM, a DVD-RAM, a BD (Blu-ray (registered trademark) Disc), and a semiconductor memory. This concept can be embodied by a digital signal recorded in such a recording medium.
   The computer program or the digital signal can be transmitted by way of a telecommunication line, a wireless or wired communication line, a network such as the Internet, data broadcasting, or the like.
   Each of the devices can be a computer system including a microprocessor and a memory. The microprocessor can be operated in accordance with a computer program stored in the memory.
   When a program or a digital signal is recorded in a recording medium and transferred, or when the program or the digital signal is transferred by way of a network or the like, another independent computer system can execute any one of the methods according to the plurality of embodiments.
(5) Each of the devices can be an electronic circuit such as an integrated circuit. The plurality of constituent elements mentioned above can form a single circuit as a whole or can each form a separate circuit. Each of these constituent elements can form a generic circuit or a dedicated circuit.
(6) The heat pump system control device or the like can include a memory and a processor corresponding to each of the constituent elements according to the plurality of embodiments. The processor can execute the respective steps according to each of the embodiments using the memory.
(7) In each of the embodiments, each of the constituent elements can be configured by dedicated hardware or can be embodied by executing a software program suitable for the corresponding constituent element. Each of the constituent elements can be embodied such that a program execution unit such as a CPU or a processor reads out to execute the software program recorded in the recording medium such as a hard disk and a semiconductor memory. The software for embodying the heat pump system control device or the like according to each of the embodiments is a program to be exemplified below.
   This program causes a computer to execute a heat pump system control method of controlling a heat pump system that selectively supplies heat from a heat pump device to a hot water supply device or a room heating device depending on a situation. The method includes: the determination step of determining a preparatory period for suppressing electric power consumption of the heat pump device; and the control step of controlling the heat pump system in the preparatory period in a preparatory operation mode as (i) an operation mode different from a normal operation mode for a normal period prior to the preparatory period, (ii) an operation mode for causing timing of supplying heat from the heat pump device to the hot water supply device in a state where no heat is supplied from the heat pump device to the hot water supply device in the normal operation mode, and (iii) an operation mode in which, when heat is supplied from the heat pump device to the room heating device, a quantity of the heat per unit time is larger than a quantity of heat per unit time in the normal operation mode.
(8) The embodiments and the modification examples described above can be appropriately combined together. The steps executed by a specific one of the constituent elements can be executed by a different constituent element. The orders of the steps can be changed, or a plurality of steps can be executed simultaneously.

The heat pump system control device according to one or a plurality of aspects is described in the above embodiments. The present invention is not limited to these embodiments. These embodiments that are variously modified in manners devised by those skilled in the art as well as modes that are established by combining the constituent elements according to different embodiments can be included in the scope of one or a plurality of aspects as long as not departing from the object of the present invention.

The heat pump system control device according to the present invention is useful as a control device for controlling a heat pump system that supplies heat from a heat pump device to a hot water supply device, a floor heater, an air conditioner, or the like.

## Claims

1. A heat pump system control device (20) configured to control a heat pump system (10) that selectively supplies heat from a heat pump device (11) to a hot water supply device (12) or a room heating device (13), the heat pump system control device (20) comprising:
a determiner (21) configured to determine start time of a suppressing period for suppressing electric power consumption of the heat pump device (11); and
a controller (22)
**characterized in that** the controller is
in a preparatory period prior to the suppressing period, cause the heat pump system (10) to start supply of heat from the heat pump device (11) to the hot water supply device (12) when hot water in the hot water supply device (12) is at a first temperature, and
in the preparatory period, control the heat pump system (10) in such a manner that, when heat is supplied from the heat pump device (11) to the room heating device (13), the quantity of the heat per unit time is larger than the quantity of heat per unit time in a normal operation mode,
wherein supply of heat from the heat pump device (11) to the hot water supply device (12) is not started when hot water in the hot water supply device (12) is at the first temperature in the normal operation mode for a normal period prior to the preparatory period.

2. The heat pump system control device (20) according to claim 1, wherein
in the preparatory period, the controller (22) adjusts a ratio of a period for supplying heat from the heat pump device (11) to the hot water supply device (12) to a period for supplying heat from the heat pump device (11) to the room heating device (13) in such a manner that the ratio is larger than a ratio of a period for supplying heat from the heat pump device (11) to the hot water supply device (12) to a period for supplying heat from the heat pump device (11) to the room heating device (13) in the normal operation mode.

3. The heat pump system control device (20) according to claim 1 or 2, wherein
in the preparatory period, the controller (22) causes the heat pump system (10) to supply heat from the heat pump device (11) to the hot water supply device (12) and then to supply heat from the heat pump device (11) to the room heating device(13).

4. The heat pump system control device (20) according to claim 3, wherein
in the preparatory period, the controller (22) causes the heat pump system (10) to supply heat from the heat pump device (11) to the hot water supply device (12) until a temperature of hot water in the hot water supply device (12) reaches a predetermined hot water supply temperature and then to supply heat from the heat pump device (11) to the room heating device (13).

5. The heat pump system control device (20) according to claim 3, wherein
the controller (20) determines, at or before start of the preparatory period, a first period for supplying heat from the heat pump device (11) to the hot water supply device (12) in the preparatory period and a second period for supplying heat from the heat pump device (11) to the room heating device (13) in the preparatory period, and
the controller (20) causes the heat pump system (10) to supply heat from the heat pump device (11) to the hot water supply device (12) in the determined first period, and then causes the heat pump system (10) to supply heat from the heat pump device (11) to the room heating device (13) in the determined second period.

6. The heat pump system control device (20) according to claim 1 or 2, wherein
in the preparatory period, the controller (22) causes the heat pump system (10) to alternately supply heat from the heat pump device (11) to the hot water supply device (12) and the room heating device (13).

7. The heat pump system control device (20) according to claim 6, wherein
after a temperature of hot water in the hot water supply device (12) reaches a predetermined temperature in the preparatory period, the controller (22) causes the heat pump system (10) to stop supply of heat to one of the hot water supply device (12) and the room heating device (13) and to start supply of heat to the other one so that heat is alternately supplied from the heat pump device (11) to the hot water supply device (12) and the room heating device (13).

8. The heat pump system control device (20) according to claim 6, wherein
at predetermined time intervals in the preparatory period, the controller (22) causes the heat pump system (10) to stop supply of heat to one of the hot water supply device (12) and the room heating device (13) and to start supply of heat to the other one so that heat is alternately supplied from the heat pump device (11) to the hot water supply device (12) and the room heating device (13).

9. The heat pump system control device (20) according to any one of claims 1 to 8, further comprising:
a storage (23) for storing relationship information indicating relationship between a first estimation period for supplying no heat from the heat pump device (11) to the room heating device (13) and a second estimation period for recovering a temperature of a heated area decreased in the first estimation period to a temperature prior to the first estimation period with heat supplied from the heat pump device (11) to the room heating device (13); wherein
the controller (20) determines a first period for supplying heat from the heat pump device (11) to the hot water supply device (12) and a second period for supplying heat from the heat pump device (11) to the room heating device (13) in accordance with the relationship information stored in the storage (23) so that the temperature of the heated area decreased while no heat is supplied from the heat pump device (11) to the room heating device (13) is recovered to a temperature before supply of heat from the heat pump device (11) to the room heating device (13) is stopped, with heat supplied from the heat pump device (11) to the room heating device (13) in the preparatory period, and
the controller (22) causes the heat pump system (10) to supply heat from the heat pump device (11) to the hot water supply device (12) in the determined first period and causes the heat pump system (10) to supply heat from the heat pump device (11) to the room heating device (13) in the determined second period.

10. The heat pump system control device (20) according to claim 9, wherein
the controller (22) extends the first period as a temperature of hot water in the hot water supply device (12) is lower.

11. The heat pump system control device (20) according to any one of claims 1 to 10, wherein
when a condition for stopping operation of the heat pump device (11) is satisfied while heat is supplied from the heat pump device (11) to the room heating device (13) in the preparatory period, the controller (22) causes the heat pump system (10) to stop supply of heat from the heat pump device (11) to the room heating device (13) and to start supply of heat from the heat pump device (11) to the hot water supply device (12).

12. The heat pump system control device (20) according to any one of claims 1 to 11, wherein
when heat is supplied from the heat pump device (11) to the room heating device (13) in the preparatory period, the controller (22) adjusts a temperature of fluid supplied from the heat pump device (11) to the room heating device (13) in such a manner that the temperature is higher than a temperature in the normal operation mode so that the quantity of the heat per unit time is larger than the quantity of heat per unit time in the normal operation mode.

13. The heat pump system control device (20) according to claim 12, further comprising:
a storage (23) for storing relationship information indicating relationship between a first estimation period for supplying no heat from the heat pump device (11) to the room heating device (13) and a second estimation period for recovering a temperature of a heated area decreased in the first estimation period to a temperature prior to the first estimation period with heat supplied from the heat pump device (11) to the room heating device (13); wherein
the controller (22) determines a first period for supplying heat from the heat pump device (11) to the hot water supply device (12), a second period for supplying heat from the heat pump device (11) to the room heating device (13), and a temperature of the fluid for supplying heat from the heat pump device (11) to the room heating device (13) in accordance with the relationship information stored in the storage (23) so that the temperature of the heated area decreased while no heat is supplied from the heat pump device (11) to the room heating device (13) is recovered to a temperature before supply of heat from the heat pump device (11) to the room heating device (13) is stopped, with heat supplied from the heat pump device (11) to the room heating device (13) in the preparatory period, and
the controller (22) causes the heat pump system (10) to supply heat from the heat pump device (11) to the hot water supply device (12) in the determined first period and causes the heat pump system (10) to supply heat from the heat pump device (11) to the room heating device (13) in the determined second period by supplying the fluid having the determined temperature from the heat pump device (11) to the room heating device (13).

14. The heat pump system (10) controlled by the heat pump system control device (20) according to any one of claims 1 to 13, the heat pump system comprising:
the heat pump system control device (20);
the heat pump device (11);
the hot water supply device (12); and
a three way valve (14) configured to be used for selectively supplying heat from the heat pump device to the hot water supply device (12) or the room heating device (13).

15. A heat pump system control method of controlling a heat pump system (10) that selectively supplies heat from a heat pump device (11) to a hot water supply device (12) or a room heating device (13); the heat pump system control method comprising:
the determination step (S11) of determining start time of a suppressing period for suppressing electric power consumption of the heat pump device (11);
**characterized by**
the first control step (S806) of starting supply of heat from the heat pump device (11) to the hot water supply device (12) when hot water in the hot water supply device (12) is at a first temperature in a preparatory period prior to the suppressing period; and
the second control step (S812) of controlling the heat pump system (10) in the preparatory period in such a manner that, when heat is supplied from the heat pump device (11) to the room heating device (13), the quantity of the heat per unit time is larger than the quantity of heat per unit time in a normal operation mode,
wherein supply of heat from the heat pump device (11) to the hot water supply device (12) is not started when hot water in the hot water supply device (12) is at the first temperature in the normal operation mode for a normal period prior to the preparatory period.

## Patentansprüche

1. Wärmepumpensystemkontrollvorrichtung (20), konfiguriert zur Steuerung eines Wärmepumpensystems (10), welches Wärme von einer Wärmepumpenvorrichtung (11) wahlweise für eine Heißwasserversorgungsvorrichtung (12) oder für eine Raumheizungsvorrichtung (13) bereitstellt, die Wärmepumpensystemkontrollvorrichtung (20), umfassend:
eine Bestimmungsvorrichtung (21), aufgebaut die Startzeit eines Absenkungszeitraumes zur Absenkung des Stromverbrauchs der Wärmepumpenvorrichtung (11) zu bestimmen; und
eine Steuervorrichtung (22),
die Steuervorrichtung ist **gekennzeichnet dadurch, dass**
in einem Vorbereitungszeitraum vor dem Absenkungszeitraum das Wärmepumpensystem (10) veranlasst wird, zu beginnen, Wärme von der Wärmepumpenvorrichtung (11) an die Heißwasserversorgungsvorrichtung (12) bereitzustellen, wenn das heiße Wasser in der Heißwasserversorgungsvorrichtung (12) eine erste Temperatur hat, und
in dem Vorbereitungszeitraum das Wärmepumpensystem (10) so zu steuern, dass wenn Wärme von der Wärmepumpenvorrichtung (11) an die Raumheizungsvorrichtung (13) bereitgestellt wird, die Wärmemenge pro Zeiteinheit größer ist als die Wärmemenge pro Zeiteinheit während eines normalen Betriebs,
wobei die Bereitstellung von Wärme von der Wärmepumpenvorrichtung (11) für die Heißwasserversorgungsvorrichtung (12) nicht gestartet wird, wenn das heiße Wasser in der Heißwasserversorgungsvorrichtung (12) im normalen Betrieb für einen normalen Zeitraum vor dem Vorbereitungszeitraum die erste Temperatur hat.

2. Wärmepumpensystemkontrollvorrichtung (20) nach Anspruch 1, wobei
in dem Vorbereitungszeitraum die Steuervorrichtung (22) ein Verhältnis zwischen dem Zeitraum der Wärmebereitstellung von der Wärmepumpenvorrichtung (11) für die Heißwasserversorgungsvorrichtung (12) zum Zeitraum der Wärmebereitstellung von der Wärmepumpenvorrichtung (11) für die Raumheizungsvorrichtung (13) so einstellt, dass dieses Verhältnis größer ist als im normalen Betrieb.

3. Wärmepumpensystemkontrollvorrichtung (20) nach Anspruch 1 oder 2, wobei
in dem Vorbereitungszeitraum die Steuervorrichtung (22) das Wärmepumpensystem (10) veranlasst, Wärme von der Wärmepumpenvorrichtung (11) für die Heißwasserversorgungsvorrichtung (12) bereitzustellen und dann Wärme von der Wärmepumpenvorrichtung (11) für die Raumheizungsvorrichtung (13) bereitzustellen.

4. Wärmepumpensystemkontrollvorrichtung (20) nach Anspruch 3, wobei
in dem Vorbereitungszeitraum die Steuervorrichtung (22) das Wärmepumpensystem (10) veranlasst, Wärme von der Wärmepumpenvorrichtung (11) für die Heißwasserversorgungsvorrichtung (12) bereitzustellen, bis die Temperatur des heißen Wassers in der Heißwasserversorgungsvorrichtung (12) eine festgelegte Heißwasserversorgungstemperatur erreicht hat und dann Wärme von der Wärmepumpenvorrichtung (11) für die Raumheizungsvorrichtung (13) bereitzustellen.

5. Wärmepumpensystemkontrollvorrichtung (20) nach Anspruch 3, wobei
die Kontrollvorrichtung (20) am Beginn des Vorbereitungszeitraumes oder davor, einen ersten Zeitraum während des Vorbereitungszeitraumes zur Bereitstellung von Wärme von der Wärmepumpenvorrichtung (11) für die Heißwasserversorgungsvorrichtung (12) und einen zweiten Zeitraum während des Vorbereitungszeitraumes zur Bereitstellung von Wärme von der Wärmepumpenvorrichtung (11) für die Raumheizungsvorrichtung (13) bestimmt, und
die Kontrollvorrichtung (20) das Wärmepumpensystem (10) veranlasst, während des festgelegten ersten Zeitraumes Wärme von der Wärmepumpenvorrichtung (11) für die Heißwasserversorgungsvorrichtung (12) bereitzustellen und dann während des festgelegten zweiten Zeitraumes Wärme von der Wärmepumpenvorrichtung (11) für die Raumheizungsvorrichtung (13) bereitzustellen.

6. Wärmepumpensystemkontrollvorrichtung (20) nach Anspruch 1 oder 2, wobei
in dem Vorbereitungszeitraum die Steuervorrichtung (22) das Wärmepumpensystem (10) veranlasst, Wärme von der Wärmepumpenvorrichtung (11), abwechselnd für die Heißwasserversorgungsvorrichtung (12) und für die Raumheizungsvorrichtung (13), bereitzustellen.

7. Wärmepumpensystemkontrollvorrichtung (20) nach Anspruch 6, wobei,
nachdem die Temperatur des heißen Wassers in der Heißwasserversorgungsvorrichtung (12) eine festgelegte Temperatur in dem Vorbereitungszeitraum erreicht hat, veranlasst die Steuervorrichtung (22) das Wärmepumpensystem (10), die Bereitstellung von heißem Wasser entweder für die Heißwasserversorgungsvorrichtung (12) oder für die Raumheizungsvorrichtung (13) zu beenden und Wärme für die andere der beiden Vorrichtungen bereitzustellen, damit abwechselnd Wärme von der Wärmepumpenvorrichtung (11), für die Heißwasserversorgüngsvorrichtung (12) und für die Raumheizungsvorrichtung (13) bereitgestellt wird.

8. Wärmepumpensystemkontrollvorrichtung (20) nach Anspruch 6, wobei
während festgelegter Zeitintervalle in dem Vorbereitungszeitraum die Steuervorrichtung (22) das Wärmepumpensystem (10) veranlasst, die Bereitstellung von heißem Wasser entweder für die Heißwasserversorgungsvorrichtung (12) oder für die Raumheizungsvorrichtung (13) zu beenden und Wärme für die andere der beiden Vorrichtungen bereitzustellen, damit abwechselnd Wärme von der Wärmepumpenvorrichtung (11), für die Heißwasserversorgungsvorrichtung (12) und für die Raumheizungsvorrichtung (13) bereitgestellt wird.

9. Wärmepumpensystemkontrollvorrichtung (20) nach einem der Ansprüche 1 bis 8, des Weiteren enthaltend:
einen Speicher (23) zum Speichern von Verbindungsinformationen, welche die Verbindung zwischen einem ersten geschätzten Zeitraum, in dem keine Wärme von der Wärmepumpenvorrichtung (11) für die Raumheizungsvorrichtung (13) bereitgestellt wird, und einem zweiten geschätzten Zeitraum zur Wiederherstellung einer Temperatur eines beheizten Bereiches, welcher während des ersten geschätzten Zeitraums abgekühlt ist, auf eine Temperatur, wie sie vor dem ersten geschätzten Zeitraum war, durch Bereitstellung von Wärme von der Wärmepumpenvorrichtung (11) für die Raumheizungsvorrichtung (13), wobei
die Kontrollvorrichtung (20) einen ersten Zeitraum zur Bereitstellung von Wärme von der Wärmepumpenvorrichtung (11) für die Heißwasserversorgungsvorrichtung (12) bestimmt und einen zweiten Zeitraum zur Bereitstellung von Wärme von der Wärmepumpenvorrichtung (11) für die Raumheizungsvorrichtung (13), entsprechend der im Speicher (23) gespeicherten Verbindungsinformationen, damit die absinkende Temperatur des beheizten Bereiches, während keine Wärme von der Wärmepumpenvorrichtung (11) für die Raumheizungsvorrichtung (13) bereitgestellt wird, ausgeglichen wird, zu einer Temperatur, bevor die Bereitstellung von Wärme von der Wärmepumpenvorrichtung (11) für die Raumheizungsvorrichtung (13) beendet wurde, durch Bereitstellung von Wärme von der Wärmepumpenvorrichtung (11) für die Raumheizungsvorrichtung (13) in dem Vorbereitungszeitraum, und
die Steuervorrichtung (22) veranlasst das Wärmepumpensystem (10), in dem ersten festgelegten Zeitraum Wärme von der Wärmepumpenvorrichtung (11) für die Heißwasserversorgungsvorrichtung (12) bereitzustellen und in dem zweiten festgelegten Zeitraum Wärme von der Wärmepumpenvorrichtung (11) für die Raumheizungsvorrichtung (13) bereitzustellen.

10. Wärmepumpensystemkontrollvorrichtung (20) nach Anspruch 9, wobei
die Steuervorrichtung (22) den ersten Zeitraum verlängert, falls die Temperatur des heißen Wassers in der Heißwasserversorgungsvorrichtung (12) sinkt.

11. Wärmepumpensystemkontrollvorrichtung (20) nach einem der Ansprüche 1 bis 10, wobei,
wenn eine Bedingung zur Beendigung des Betriebs der Wärmepumpenvorrichtung (11) erfüllt ist, während im Vorbereitungszeitraum Wärme von der Wärmepumpenvorrichtung (11) für die Raumheizungsvorrichtung (13) bereitgestellt wird, die Steuervorrichtung (22) die Beendigung der Bereitstellung von Wärme von der Wärmepumpenvorrichtung (11) für die Raumheizungsvorrichtung (13) und den Beginn der Bereitstellung von Wärme von der Wärmepumpenvorrichtung (11) für die Heißwasserversorgungsvorrichtung (12) veranlasst.

12. Wärmepumpensystemkontrollvorrichtung (20) nach einem der Ansprüche 1 bis 11, wobei,
wenn während des Vorbereitungszeitraums Wärme von der Wärmepumpenvorrichtung (11) für die Raumheizungsvorrichtung (13) bereitgestellt wird, die Steuervorrichtung (22) eine Temperatur einer Flüssigkeit, welche von der Wärmepumpenvorrichtung (11) für die Raumheizungsvorrichtung (13) bereitgestellt wird, so einstellt, dass die Temperatur höher ist als im normalen Betrieb, da eine größere Wärmemenge pro Zeiteinheit bereitgestellt wird als im normalen Betrieb.

13. Wärmepumpensystemkontrollvorrichtung (20) nach Anspruch 12, des Weiteren enthaltend:
einen Speicher (23) zum Speichern von Verbindungsinformationen, welche die Verbindung zwischen einem ersten geschätzten Zeitraum, in dem keine Wärme von der Wärmepumpenvorrichtung (11) an die Raumheizungsvorrichtung (13) bereitgestellt wird, und einem zweiten geschätzten Zeitraum zur Wiederherstellung einer Temperatur eines beheizten Bereiches, welcher während des ersten geschätzten Zeitraums abgekühlt ist, auf eine Temperatur, wie sie vor dem ersten geschätzten Zeitraum war, durch Bereitstellung von Wärme von der Wärmepumpenvorrichtung (11) an die Raumheizungsvorrichtung (13) anzeigt, wobei
die Steuervorrichtung (22) einen ersten Zeitraum zur Bereitstellung von Wärme von der Wärmepumpenvorrichtung (11) für die Heißwasserversorgungsvorrichtung (12) festlegt, einen zweiten Zeitraum zur Bereitstellung von Wärme von der Wärmepumpenvorrichtung (11) für die Raumheizungsvorrichtung (13) und eine Temperatur einer Flüssigkeit, welche von der Wärmepumpenvorrichtung (11) für die Raumheizungsvorrichtung (13) bereitgestellt wird, in Übereinstimmung mit den im Speicher (23) gespeicherten Verbindungsinformationen, damit die absinkende Temperatur des beheizten Bereiches, während keine Wärme von der Wärmepumpenvorrichtung (11) für die Raumheizungsvorrichtung (13) bereitgestellt wird, ausgeglichen wird zu einer Temperatur, bevor die Bereitstellung von Wärme von der Wärmepumpenvorrichtung (11) für die Raumheizungsvorrichtung (13) beendet wurde, durch Bereitstellung von Wärme von der Wärmepumpenvorrichtung (11) für die Raumheizungsvorrichtung (13) in dem Vorbereitungszeitraum, und
die Steuervorrichtung (22) das Wärmepumpensystem (10) veranlasst, in dem festgelegten ersten Zeitraum Wärme von der Wärmepumpenvorrichtung (11) für die Heißwasserversorgungsvorrichtung (12) bereitzustellen und in dem festgelegten zweiten Zeitraum Wärme von der Wärmepumpenvorrichtung (11) für die Raumheizungsvorrichtung (13) bereitzustellen, durch Bereitstellung der Flüssigkeit mit festgelegter Temperatur von der Wärmepumpenvorrichtung (11) für die Raumheizungsvorrichtung (13).

14. Wärmepumpensystem (10), gesteuert durch die Wärmepumpensystemkontrollvorrichtung (20) nach einem der Ansprüche 1 bis 13, das Wärmepumpensystem enthaltend:
die Wärmepumpensystemkontrollvorrichtung (20);
die Wärmepumpenvorrichtung (11);
die Heißwasserversorgungsvorrichtung (12); und
ein Drei-Wege-Ventil (14), aufgebaut, um Wärme von der Wärmepumpenvorrichtung, wahlweise für die Heißwasserversorgungsvorrichtung (12) oder die Raumheizungsvorrichtung (13), bereitzustellen.

15. Wärmepumpensystemkontrollverfahren zur Steuerung eines Wärmepumpensystems (10), welches Wärme von der Wärmepumpenvorrichtung (11), wahlweise für die Heißwasserversorgungsvorrichtung (12) oder die Raumheizungsvorrichtung (13), bereitstellt; das Wärmepumpensystemkontrollverfahren, umfassend:
den Bestimmungsschritt (S11) zur Bestimmung der Startzeit eines Absenkungszeitraumes zur Absenkung des Stromverbrauchs der Wärmepumpenvorrichtung (11);
**gekennzeichnet durch**
den ersten Steuerschritt (S806) des Beginns der Bereitstellung von Wärme von der Wärmepumpenvorrichtung (11) für die Heißwasserversorgungsvorrichtung (12), wenn das heiße Wasser in der Heißwasserversorgungsvorrichtung (12) während des Vorbereitungszeitraums vor dem Absenkungszeitraum eine erste Temperatur hat; und
den zweiten Steuerschritt (S812) zur Steuerung des Wärmepumpensystems (10) während des Vorbereitungszeitraums, dass, während der Bereitstellung von Wärme von der Wärmepumpenvorrichtung (11) für die Raumheizungsvorrichtung (13), die Wärmemenge pro Zeiteinheit größer ist als während des normalen Betriebes,
wobei die Bereitstellung von Wärme von der Wärmepumpenvorrichtung (11) für die Heißwasserversorgungsvorrichtung (12) nicht beginnt, wenn heißes Wasser in der Heißwasserversorgungsvorrichtung (12) eine erste Temperatur im normalen Betrieb während eines Zeitraums vor dem Vorbereitungszeitraum hat.

## Revendications

1. Dispositif de commande de système de pompe à chaleur (20) conçu pour commander un système de pompe à chaleur (10) qui fourni de manière sélective de la chaleur d' un dispositif de pompe à chaleur (11) à un dispositif d'alimentation en eau chaude (12) ou à un dispositif de chauffage (13), le dispositif de commande de système de pompe à chaleur (20) comprenant :
un dispositif de détermination (21) conçu pour déterminer un temps de démarrage d'une période d'inhibition pour inhiber une consommation d'électricité du dispositif de pompe à chaleur (11) ; et
une commande (22)
**caractérisé en ce que** la commande est conçue,
au cours d'une période préparatoire précédant la période de suppression, pour amener le système de pompe à chaleur (10) à commencer à alimenter le dispositif d'alimentation en eau chaude (12) en chaleur provenant du dispositif de pompe à chaleur (11), lorsque l'eau chaude dans le dispositif d'alimentation en eau chaude (12) a une première température, et
au cours de la période préparatoire, pour commander le système de pompe à chaleur (10) de telle manière que lorsque le dispositif de chauffage (13) est alimenté en chaleur provenant du dispositif de pompe à chaleur (11), la quantité de chaleur par unité de temps est plus grande que la quantité de chaleur par unité de temps acheminée dans un mode de fonctionnement normal,
où l'alimentation du dispositif d'alimentation en eau chaude (12) en chaleur provenant du dispositif de pompe à chaleur (11) n'est pas démarrée lorsque l'eau chaude dans le dispositif d'alimentation en eau chaude (12) a la première température dans le mode de fonctionnement normal au cours d'une période normale précédant la période préparatoire.

2. Dispositif de commande de système de pompe à chaleur (20) selon la revendication 1, où
au cours de la période préparatoire, la commande (22) ajuste un rapport entre une période d'alimentation du dispositif d'alimentation en eau chaude (12) en chaleur provenant du dispositif de pompe à chaleur (11) et une période d'alimentation du dispositif de chauffage (13) en chaleur provenant du dispositif de pompe à chaleur (11) de manière à ce que le rapport soit plus grand qu'un rapport entre une période d'alimentation du dispositif d'alimentation en eau chaude (12) en chaleur provenant du dispositif de pompe à chaleur (11) et une période d'alimentation du dispositif de chauffage (13) en chaleur provenant du dispositif de pompe à chaleur (11) dans un mode de fonctionnement normal.

3. Dispositif de commande de système de pompe à chaleur (20) selon la revendication 1 ou 2, où
au cours de la période préparatoire, la commande (22) amène le système de pompe à chaleur (10) à alimenter le dispositif d'alimentation en eau chaude (12) en chaleur provenant du dispositif de pompe à chaleur (11) puis à alimenter le dispositif de chauffage (13) en chaleur provenant du dispositif de pompe à chaleur (11).

4. Dispositif de commande de système de pompe à chaleur (20) selon la revendication 3, où
au cours de la période préparatoire, la commande (22) amène le système de pompe à chaleur (10) à alimenter le dispositif d'alimentation en eau chaude (12) en chaleur provenant du dispositif de pompe à chaleur (11) jusqu'à ce qu'une température de l'eau chaude dans le dispositif d'alimentation en eau chaude (12) atteigne une température d'eau chaude prédéterminée et à ensuite alimenter le dispositif de chauffage (13) en chaleur provenant du dispositif de pompe à chaleur (11).

5. Dispositif de commande de système de pompe à chaleur (20) selon la revendication 3, où
au moment du ou en amont du début de la période préparatoire, la commande (20) détermine une première période de la période préparatoire pour alimenter le dispositif d'alimentation en eau chaude (12) en chaleur provenant du dispositif de pompe à chaleur (11) et une seconde période pour alimenter le dispositif de chauffage (13) en chaleur provenant du dispositif de pompe à chaleur (11), et
la commande (20) amène le système de pompe à chaleur (10) à alimenter le dispositif d'alimentation en eau chaude (12) en chaleur provenant du dispositif de pompe à chaleur (11) au cours de la première période déterminée, puis amène le système de pompe à chaleur (10) à alimenter le dispositif de chauffage (13) en chaleur provenant du dispositif de pompe à chaleur (11) au cours de la seconde période déterminée.

6. Dispositif de commande de système de pompe à chaleur (20) selon la revendication 1 ou 2, où
au cours de la période préparatoire, la commande (22) amène le système de pompe à chaleur (10) à alimenter alternativement le dispositif d'alimentation en eau chaude (12) et le dispositif de chauffage (13) en chaleur provenant du dispositif de pompe à chaleur (11).

7. Dispositif de commande de système de pompe à chaleur (20) selon la revendication 6, où
après qu'une température de l'eau chaude dans le dispositif d'alimentation en eau chaude (12) a atteint une température prédéterminée au cours de la période préparatoire, la commande (22) amène le système de pompe à chaleur (10) à arrêter l'alimentation en chaleur de l'un parmi le dispositif d'alimentation en eau chaude (12) et le dispositif de chauffage (13) et à démarrer l'alimentation en chaleur de l'autre, de manière à ce que le dispositif d'alimentation en eau chaude (12) et le dispositif de chauffage (13) soient alternativement alimentés en chaleur provenant du dispositif de pompe à chaleur (11).

8. Dispositif de commande de système de pompe à chaleur (20) selon la revendication 6, où
à intervalles prédéterminés au cours de la période préparatoire, la commande (22) amène le système de pompe à chaleur (10) à arrêter l'alimentation en chaleur de l'un parmi le dispositif d'alimentation en eau chaude (12) et le dispositif de chauffage (13) et à démarrer l'alimentation en chaleur de l'autre, de manière à ce que le dispositif d'alimentation en eau chaude (12) et le dispositif de chauffage (13) soient alternativement alimentés en chaleur provenant du dispositif de pompe à chaleur (11).

9. Dispositif de commande de système de pompe à chaleur (20) selon l'une quelconque des revendications 1 à 8, comprenant en outre :
un moyen de stockage (23) pour stocker des informations relationnelles concernant la relation entre une première période d'estimation de non alimentation du dispositif de chauffage (13) en chaleur provenant du dispositif de pompe à chaleur (11) et une seconde période d'estimation de retour d' une température d'une zone chauffée ayant diminué au cours de la première période d'estimation à une température précédant la première période d'estimation en alimentant le dispositif de chauffage (13) en chaleur provenant du dispositif de pompe à chaleur (11) ; où
la commande (20) détermine une première période d'alimentation du dispositif d'alimentation en eau chaude (12) en chaleur provenant du dispositif de pompe à chaleur (11) et une seconde période d'alimentation du dispositif de chauffage (13) en chaleur provenant du dispositif de pompe à chaleur (11), en fonction de l'information relationnelle stockée dans le moyen de stockage (23), de manière à ce que la température de la zone chauffée ayant diminué pendant que le dispositif de chauffage (13) n'était pas alimenté en chaleur provenant du dispositif de pompe à chaleur (11) retourne à la température précédant l'arrêt de l'alimentation du dispositif de chauffage (13) en chaleur provenant du dispositif de pompe à chaleur (11), en alimentant le dispositif de chauffage (13) en chaleur provenant du dispositif de pompe à chaleur (11) au cours de la période préparatoire, et
la commande (22) amène le système de pompe à chaleur (10) à alimenter le dispositif d'alimentation en eau chaude (12) en chaleur provenant du dispositif de pompe à chaleur (11) au cours de la première période déterminée et amène le système de pompe à chaleur (10) à alimenter le dispositif de chauffage (13) en chaleur provenant du dispositif de pompe à chaleur (11) au cours de la seconde période déterminée.

10. Dispositif de commande de système de pompe à chaleur (20) selon la revendication 9, où
plus la température de l'eau chaude dans le dispositif d'alimentation en eau chaude (12) est basse, plus la commande (22) allonge la première période.

11. Dispositif de commande de système de pompe à chaleur (20) selon l'une quelconque des revendications 1 à 10, où
lorsqu'une condition pour arrêter le fonctionnement du dispositif de pompe à chaleur (11) est remplie pendant l'alimentation du dispositif de chauffage (13) en chaleur provenant du dispositif de pompe à chaleur (11) au cours de la période préparatoire, la commande (22) amène le système de pompe à chaleur (10) à arrêter l'alimentation du dispositif de chauffage (13) en chaleur provenant du dispositif de pompe à chaleur (11) et à démarrer l'alimentation du dispositif d'alimentation en eau chaude (12) en chaleur provenant du dispositif de pompe à chaleur (11).

12. Dispositif de commande de système de pompe à chaleur (20) selon l'une quelconque des revendications 1 à 11, où :
lorsque le dispositif de chauffage (13) est alimenté en chaleur provenant du dispositif de pompe à chaleur (11) au cours de la période préparatoire, la commande (22) ajuste une température du fluide alimentant le dispositif de chauffage (13) en provenance du dispositif de pompe à chaleur (11) de manière à ce que la température soit plus élevée qu'une température dans le mode de fonctionnement normal, de sorte que la quantité de chaleur par unité de temps est plus grande que la quantité de chaleur par unité dans le mode de fonctionnement normal.

13. Dispositif de commande de système de pompe à chaleur (20) la revendication 12, comprenant en outre:
un moyen de stockage (23) pour stocker des informations relationnelles concernant la relation entre une première période d'estimation de non alimentation du dispositif de chauffage (13) en chaleur provenant du dispositif de pompe à chaleur (11) et une seconde période d'estimation de retour d'une température d'une zone chauffée ayant diminué au cours de la première période d'estimation à une température précédant la première période d'estimation en alimentant le dispositif de chauffage (13) en chaleur provenant du dispositif de pompe à chaleur (11) ; où
la commande (22) détermine une première période d'alimentation du dispositif d'alimentation en eau chaude (12) en chaleur provenant du dispositif de pompe à chaleur (11), une seconde période d'alimentation du dispositif de chauffage (13) en chaleur provenant du dispositif de pompe à chaleur (11), et une température du fluide alimentant le dispositif de chauffage (13) en chaleur provenant du dispositif de pompe à chaleur (11), en fonction de l'information relationnelle stockée dans le moyen de stockage (23), de manière à ce que la température de la zone chauffée ayant diminué pendant que le dispositif de chauffage (13) n'était pas alimenté en chaleur provenant du dispositif de pompe à chaleur (11) retourne à la température précédant l'arrêt de l'alimentation du dispositif de chauffage (13) en chaleur provenant du dispositif de pompe à chaleur (11), en alimentant le dispositif de chauffage (13) en chaleur provenant du dispositif de pompe à chaleur (11) au cours de la période préparatoire, et
la commande (22) amène le système de pompe à chaleur (10) à alimenter le dispositif d'alimentation en eau chaude (12) en chaleur provenant du dispositif de pompe à chaleur (11) au cours de la première période déterminée et amène le système de pompe à chaleur (10) à alimenter le dispositif de chauffage (13) en chaleur provenant du dispositif de pompe à chaleur (11) au cours de la seconde période déterminée en alimentant le dispositif de chauffage (13) avec le fluide provenant du dispositif de pompe à chaleur (11) et ayant la température déterminée.

14. Système de pompe à chaleur (10) commandé par le dispositif de commande de système de pompe à chaleur (20) selon l'une quelconque des revendications 1 à 13, le système de pompe à chaleur comprenant :
le dispositif de commande de système de pompe à chaleur (20) ;
le dispositif de pompe à chaleur (11) ;
le dispositif d'alimentation en eau chaude (12) ; et
une vanne trois voies (14) conçue pour être utilisée pour alimenter sélectivement le dispositif d'alimentation en eau chaude (12) ou le dispositif de chauffage (13) en chaleur provenant du dispositif de pompe à chaleur.

15. Procédé de commande de système de pompe à chaleur pour commander un système de pompe à chaleur (10) qui alimente sélectivement un dispositif d'alimentation en eau chaude (12) ou un dispositif de chauffage (13) en chaleur provenant d'un dispositif de pompe à chaleur (11) ; le procédé de commande de système de pompe à chaleur comprenant :
l'étape de détermination (S11) consistant à déterminer un temps de démarrage d'une période d'inhibition pour inhiber une consommation d'électricité du dispositif de pompe à chaleur (11) ;
**caractérisé par**
la première étape de commande (S806) consistant à démarrer l'alimentation du dispositif d'alimentation en eau chaude (12) en chaleur provenant du dispositif de pompe à chaleur (11) lorsque l'eau chaude dans le dispositif d'alimentation en eau chaude (12) a une première température dans une période préparatoire précédant la période de suppression ; et
une seconde étape de commande (S812) consistant à commander le système de pompe à chaleur (10) au cours de la période préparatoire de telle manière que lorsque le dispositif de chauffage (13) est alimenté en chaleur provenant du dispositif de pompe à chaleur (11), la quantité de chaleur par unité de temps est plus grande que la quantité de chaleur par unité de temps dans un mode de fonctionnement normal,
où l'alimentation du dispositif d'alimentation en eau chaude (12) en chaleur provenant du dispositif de pompe à chaleur (11) n'est pas démarrée lorsque l'eau chaude dans le dispositif d'alimentation en eau chaude (12) a la première température dans le mode de fonctionnement normal au cours d'une période normale précédant la période préparatoire.
